# EUROPEAN PATENT APPLICATION

(11) **EP 4 422 342 A1**
(43) Date of publication of application: **28.08.2024**
(21) Application number: 22894740.4
(22) Date of filing: 14.11.2022
(51) Int. Cl.: H04W 84/06, H04B 7/185, H04L 65/611

(54) **TRANSMISSION METHOD AND SYSTEM, AND RELATED APPARATUS**

(30) Priority: 19.11.2021 CN 202111373402; 15.02.2022 CN 202210139147
(71) Applicant: Huawei Technologies Co., Ltd., Shenzhen, Guangdong 518129 (CN)
(72) Inventor: YAO, Chuting, Shenzhen, Guangdong 518129 (CN); XU, Haibo, Shenzhen, Guangdong 518129 (CN); GAN, Wenyu, Shenzhen, Guangdong 518129 (CN); QIAN, Feng, Shenzhen, Guangdong 518129 (CN)
(74) Representative: Isarpatent
(86) International application number: PCT/CN2022/131683
(87) International publication number: WO 2023/088206

(57) **Abstract**

This application discloses a transmission method, a system, and a related apparatus. This application relates to the field of satellite communication. A first satellite network device generates a first data packet, and sends the first data packet to at least one first terminal device within a specified time period by using a second satellite network device. The specified time period is obtained through negotiation between the first satellite network device and the at least one first terminal device.

## Description

This application claims priorities to Chinese Patent Application No. 202111373402.2, filed with the China National Intellectual Property Administration on November 19, 2021, and entitled "METHOD FOR BROADCASTING SHORT MESSAGES BY SATELLITE", and to Chinese Patent Application No. 202210139147.3, filed with the China National Intellectual Property Administration on February 15, 2022, and entitled "TRANSMISSION METHOD, SYSTEM, AND RELATED APPARATUS", both of which are incorporated herein by reference in their entireties.

### TECHNICAL FIELD

This application relates to the field of satellite communication, and in particular, to a transmission method, a system, and a related apparatus.

### BACKGROUND

Satellite communication services are applicable for positioning and communication in regions not covered by mobile communication, or regions that cannot be covered by mobile communication, or regions where communication systems are damaged, such as oceans, deserts, grasslands, and uninhabited areas. Currently, only a terminal in a cellular network can receive a broadcast or multicast message. However, the terminal in a satellite network cannot receive a broadcast or multicast message. Therefore, how the terminal in the satellite network receives the broadcast or multicast message is an urgent problem to be resolved in a satellite communication system.

### SUMMARY

This application provides a transmission method, a system, and a related apparatus. This application relates to the field of satellite communication. A first satellite network device generates a first data packet, and sends the first data packet to at least one first terminal device within a specified time period by using a second satellite network device. The specified time period is obtained through negotiation between the first satellite network device and the at least one first terminal device. Alternatively, the first satellite network device determines the specified time period based on broadcast/multicast time information sent by a first network device. In this case, the terminal can receive broadcast/multicast data in a satellite network, and can receive the first data packet at sending time of the first data packet because the terminal stores the sending time of the first data packet. This can not only reduce power consumption of the terminal for receiving satellite data, but also increase a success rate of the terminal in receiving the first data packet.

According to a first aspect, this application provides a transmission method, including: A first satellite network device generates a first data packet. The first satellite network device sends the first data packet to a second satellite network device within a specified time period. The first data packet is for the second satellite network device to generate a second data packet and send the second data packet to at least one first terminal device. The specified time period is obtained through negotiation between the first satellite network device and the at least one first terminal device, or the first satellite network device determines the specified time period based on broadcast/multicast time information sent by a first network device.

It is to be noted that the first satellite network device may be a converged communication platform 24 or a broadcast/multicast service center 17. The at least one first terminal device may include a terminal 100. The at least one first terminal device may further include a terminal 300.

In a possible implementation, the method further includes: The first satellite network device sends, to the second satellite network device, information that indicates the second satellite network device to send the first data packet to the at least one first terminal device in a broadcast manner. Alternatively, the first satellite network device sends, to the second satellite network device, information that indicates the second satellite network device to send the first data packet to the at least one first terminal device in a multicast manner. In some embodiments, the information that indicates the second satellite network device to send the first data packet to the at least one first terminal device in the broadcast manner and the information that indicates the second satellite network device to send the first data packet to the at least one first terminal device in the multicast manner are broadcast/multicast indication information. In some embodiments, the second satellite network device may be a ground center station 19.

In a possible implementation, the method further includes: The first satellite network device sends, to the second satellite network device, one or more pieces of information including an identifier of the first data packet, broadcast/multicast time information of the first data packet, and broadcast/multicast region information of the first data packet. The identifier indicates a service type of the first data packet. The identifier of the first data packet may be a broadcast/multicast source identifier of broadcast/multicast data in the first data packet.

In a possible implementation, the first data packet includes information that indicates sending time of next M first data packets sent by the first satellite network device, where M is a positive integer.

In a possible implementation, before the first satellite network device sends the first data packet to the second satellite network device, the method further includes: The first satellite network device sends a first message to the first terminal device by using the second satellite network device, where the first message includes time information that indicates sending time of the first data packet. Alternatively, the first satellite network device sends the time information or the first message to a third satellite network device. When the first satellite network device is a broadcast/multicast service center 17, the third satellite network device is a converged communication platform 18. In some embodiments, the first satellite network device generates the first message based on the time information. In some other embodiments, the first satellite network device sends the time information to the second satellite network device, and the second satellite network device generates the first message based on the time information. The first message may be a broadcast/multicast time response.

In a possible implementation, before the first satellite network device sends the first message to the first terminal device by using the second satellite network device, the method further includes: The first satellite network device receives, by using the second satellite network device, a second message sent by the first terminal device. The second message indicates the first satellite network device to send the first message to the first terminal device. In some embodiments, the second message is a broadcast/multicast time request.

In a possible implementation, before the first satellite network device sends the time information or the first message to the third satellite network device, the method further includes: The first satellite network device receives a time request or a second message sent by the third satellite network device, where the time request indicates the first satellite network device to send the time information to the third satellite network device, and the second message indicates the first satellite network device to send the first message to the first terminal device. The first satellite network device is a broadcast/multicast service center 17, and the third satellite network device is a converged communication platform 18. That the first satellite network device receives the time request sent by the third satellite network device may be understood as that the third satellite network device obtains the time information from the first satellite network device. In some embodiments, the second message is a broadcast/multicast time request.

In a possible implementation, after the first satellite network device sends the first data packet to the second satellite network device, the method further includes: The first satellite network device receives information that is sent by the second satellite network device and that indicates a reception status of the first data packet by the first terminal device. In this case, the first satellite network device can determine a result of parsing the first data packet by the first terminal device. Further, the first satellite network device may perform a further operation, for example, retransmit the first data packet, based on the result of parsing the first data packet.

In a possible implementation, before the first satellite network device sends the first data packet to the second satellite network device, the method further includes: The first satellite network device receives content of the first data packet sent by the first network device. The first satellite network device receives one or more pieces of information that are sent by the first network device and that include the identifier, the broadcast/multicast time information, and the broadcast/multicast region information of the first data packet. The content of the first data packet includes the broadcast/multicast data, and the broadcast/multicast data may include at least one of multicast data and broadcast data. In some embodiments, the first network device is a server 15 or an emergency rescue platform 26.

According to a second aspect, this application provides a transmission method, including: A second satellite network device receives a first data packet sent by a first satellite network device. The second satellite network device generates a second data packet based on the first data packet. The second satellite network device sends the second data packet to at least one first terminal device. In this case, the second satellite network device can send the second data packet to the at least one first terminal device in a broadcast (multicast) manner. The first terminal device may receive a broadcast message (a multicast message) in a satellite network. In some embodiments, the second satellite network device is a ground center station 19. In some other embodiments, the second satellite network device may include a ground transceiver station and a center station.

In a possible implementation, before the second satellite network device generates the second data packet based on the first data packet, the method further includes: The second satellite network device receives information that indicates the second satellite network device to generate the second data packet of a broadcast type based on the first data packet. Alternatively, the second satellite network device receives information that indicates the second satellite network device to generate the second data packet of a multicast type based on the first data packet. In some embodiments, the information that indicates the second satellite network device to send the first data packet to the at least one first terminal device in the broadcast manner and the information that indicates the second satellite network device to send the first data packet to the at least one first terminal device in the multicast manner are broadcast/multicast indication information.

In a possible implementation, that the second satellite network device generates the second data packet based on the first data packet specifically includes: The second satellite network device generates the second data packet based on the information that indicates the second satellite network device to generate the second data packet of the broadcast type based on the first data packet or the information that indicates the second satellite network device to generate the second data packet of the multicast type based on the first data packet.

In a possible implementation, that the second satellite network device sends the second data packet to the at least one first terminal device specifically includes: The second satellite network device sends the second data packet to the at least one first terminal device through a first beam. Alternatively, the second satellite network device sends the second data packet to the at least one first terminal device, where the second data packet includes a first version number, and the first version number indicates that the second data packet is a broadcast data packet or a multicast data packet. Alternatively, the second satellite network device sends the second data packet to the at least one first terminal device, where the second data packet includes first information and a second version number, the first information indicates that the second data packet is a broadcast data packet and/or a multicast data packet, and the second version number indicates the second satellite network device to generate a protocol version of the second data packet. The first beam is a beam for sending broadcast/multicast data, and a secondary code of the first beam is different from that of a beam for sending unicast data. In this case, the terminal can determine, through the first beam, that received data includes the broadcast/multicast data. It is to be further noted that the first version number is different from the second version number. In some embodiments, the first information is a user ID field. A value of the user ID field may be for identifying a broadcast/multicast source or a terminal. In some embodiments, the first information is a frame type indication field, and a value of the frame type indication field may indicate that the second data packet is a broadcast/multicast data packet. In some embodiments, the first information is a frame type indication field, and a value of the frame type indication field may indicate that the second data packet is one of a broadcast data packet or a multicast data packet. In some embodiments, the first information is a broadcast/multicast type indication field, and the broadcast/multicast type indication field may indicate that the second data packet is one of a broadcast data packet or a multicast data packet. In this case, when receiving the second data packet, the terminal can determine, through the first beam, the first version number, or the first information, that the second data packet is a broadcast/multicast data packet.

In a possible implementation, when the first information indicates that the second data packet is a broadcast data packet, the second data packet further includes information that indicates a broadcast source of the second data packet. Alternatively, when the first information indicates that the second data packet is a multicast data packet, the second data packet further includes information that indicates a multicast source of the second data packet. In some embodiments, the first information may be the frame type indication field or the broadcast/multicast type indication field that indicates that the second data packet is one of the broadcast data packet or the multicast data packet. The information that indicates the broadcast source of the second data packet is a broadcast source identifier. For example, the broadcast source identifier may be a broadcast/multicast ID of the broadcast source, or a name or code name of the broadcast source. The information that indicates the multicast source of the second data packet is a multicast source identifier. For example, the multicast source identifier may be a broadcast/multicast ID of the multicast source, or a name or code name of the multicast source. In this case, the terminal can determine, based on a broadcast/multicast source identifier, whether to receive the second data packet.

In a possible implementation, the method further includes: The second satellite network device receives one or more pieces of information including an identifier of the first data packet, broadcast/multicast time information of the first data packet, and broadcast/multicast region information of the first data packet, where the identifier indicates a service type of the first data packet. The second satellite network device determines the first beam, or the first version number, or the first information based on the information. Alternatively, the second satellite network device receives the information that indicates the second satellite network device to generate the second data packet of the broadcast type based on the first data packet or the information that indicates the second satellite network device to generate the second data packet of the multicast type based on the first data packet. The second satellite network device determines the first beam, or the first version number, or the first information based on the information that indicates the second satellite network device to generate the second data packet of the broadcast type based on the first data packet or the information that indicates the second satellite network device to generate the second data packet of the multicast type based on the first data packet.

When the second satellite network device receives one or more pieces of information including the identifier of the first data packet, the broadcast/multicast time information of the first data packet, and the broadcast/multicast region information of the first data packet, because the identifier of the first data packet may indicate a broadcast/multicast source, the second satellite network device may determine, based on the identifier, that the first data packet is a data packet including broadcast/multicast data. The second satellite network device may determine a value of a user ID field or a value of a broadcast/multicast ID field based on the identifier of the first data packet. The broadcast/multicast region information of the first data packet may indicate a region in which the second satellite network device broadcasts or multicasts the first data packet. In this case, as a unicast data packet requires no division of broadcast/multicast regions, the second satellite network device can also determine, based on the broadcast/multicast region information, that the first data packet is a broadcast/multicast data packet. The broadcast/multicast time information of the first data packet may indicate a time period in which the second satellite network device broadcasts or multicasts the first data packet. In this case, the second satellite network device sends a unicast data packet to the first terminal device only when receiving a download message request sent by the first terminal device. Therefore, as sending time does not need to be specified for the unicast data packet, the second satellite network device may also determine, based on the broadcast/multicast time information, that the first data packet is a broadcast/multicast data packet.

The first information determined based on the information that indicates the second satellite network device to generate the second data packet of the broadcast type based on the first data packet or the information that indicates the second satellite network device to generate the second data packet of the multicast type based on the first data packet may be a frame type indication field or a broadcast/multicast type indication field.

In a possible implementation, before the second satellite network device receives the first data packet sent by the first satellite network device, the method further includes: The second satellite network device receives a first message sent by the first satellite network device, or the second satellite network device receives the first message sent by a third satellite network device. The first message includes time information that indicates sending time of the first data packet. The second satellite network device sends the first message to the first terminal device.

In a possible implementation, before the second satellite network device receives the first message sent by the first satellite network device, or the second satellite network device receives the first message sent by the third satellite network device, the method further includes: The second satellite network device receives a second message sent by the first terminal device.

The second satellite network device sends the second message to the first satellite network device, or the second satellite network device sends the second message to the third satellite network device, where the second message is for obtaining the first message.

In a possible implementation, after the second satellite network device sends the second data packet to the at least one first terminal device, the method further includes: The second satellite network device receives information that is sent by the first terminal device and that indicates a reception status of the first data packet by the first terminal device. The second satellite network device sends, to the first satellite network device, the information that indicates the reception status of the first data packet by the first terminal device.

According to a third aspect, this application provides a transmission method, including: A first terminal device receives, within a specified time period, a second data packet sent by a second satellite network device. The first terminal device determines that the second data packet is a broadcast data packet or a multicast data packet. The first terminal device obtains a first data packet based on the second data packet, where the first data packet is a data packet sent by a first satellite network device to the second satellite network device, and the specified time period is obtained through negotiation between the first satellite network device and at least one first terminal device, or the first terminal device determines the specified time period based on a received second message.

In a possible implementation, that the first terminal device determines that the second data packet is a broadcast data packet or a multicast data packet specifically includes: When the second data packet includes a first version number, the first terminal device determines, based on the first version number, that the second data packet is a broadcast data packet or a multicast data packet.

Alternatively, when the second data packet includes first information, the first terminal device determines, based on the first information, that the second data packet is a broadcast data packet or a multicast data packet.

Alternatively, the first terminal device determines, based on a first beam through which the second data packet is received, that the second data packet is a broadcast data packet or a multicast data packet. In this case, when determining a type of the received second data packet, the terminal can determine a structure of the second data packet. For example, the terminal can determine a broadcast/multicast ID field in the second data packet based on the type of the second data packet, and then determine, based on the broadcast/multicast ID field, whether to receive the second data packet. When any one of broadcast/multicast source identifiers stored in the terminal is the same as a broadcast/multicast source identifier indicated by the broadcast/multicast ID field, the terminal receives the second data packet. In this case, the terminal 100 can be further prevented from receiving a spam message (for example, an advertisement message).

In a possible implementation, when the first information indicates that the second data packet is a broadcast data packet, the second data packet further includes information that indicates a broadcast source of the second data packet. Alternatively, when the first information indicates that the second data packet is a multicast data packet, the second data packet further includes information that indicates a multicast source of the second data packet.

In a possible implementation, the first data packet includes information that indicates reception time of next M first data packets sent by the first satellite network device, where M is a positive integer. In this case, it can be avoided that the terminal cannot determine sending time of a subsequent data packet when a second data packet is missed.

In a possible implementation, before the first terminal device receives the second data packet sent by the second satellite network device, the method further includes: The first terminal device sends the second message to the second satellite network device, where the second message indicates the first satellite network device to send sending time information of the first data packet to the first terminal device.

In a possible implementation, after the first terminal device sends the second message to the second satellite network device, the method further includes: The first terminal device receives a first message, where the first message includes the sending time information that indicates time at which the first satellite network device sends the first data packet.

In a possible implementation, that the first terminal device sends the second message to the second satellite network device specifically includes: The first terminal device receives input by a user for querying sending time of a next first data packet. The first terminal device sends the second message to the second satellite network device in response to the input. In this case, the user can actively query the sending time of the first data packet.

In a possible implementation, after the first terminal device receives the first message, the method further includes: The first terminal device displays the sending time of the first data packet. In this case, the user can determine the sending time of the next first data packet based on the time displayed by the first terminal device. The user can perform a satellite alignment operation of the first terminal device at the sending time to increase a success rate of receiving the first data packet.

In a possible implementation, before the first terminal device receives the first data packet sent by the second satellite network device, the method further includes: The first terminal device receives input by a user for querying sending time of a next first data packet. The first terminal device displays, in response to the input, the sending time that indicates when the first satellite network device sends the first data packet, where the sending time is obtained through negotiation between the first satellite network device and the at least one first terminal device.

According to a fourth aspect, this application provides a transmission method, including: A third satellite network device receives a first message sent by a first satellite network device. Alternatively, the third satellite network device receives first time information sent by the first satellite network device, and generating the first message based on the first time information.

The third satellite network device sends the first message to a first terminal device, where the first message includes the first time information, and the first time information indicates sending time of a first data packet.

In some embodiments, the third satellite network device may be a converged communication platform 18, and the converged communication platform 18 is configured to process unicast data.

In a possible implementation, before the third satellite network device receives the first message sent by the first satellite network device, the method further includes: The third satellite network device receives a second message sent by a second satellite network device.

The third satellite network device sends the second message to the first satellite network device, where the second message indicates the first satellite network device to send the first message to the third satellite network device.

In a possible implementation, before the third satellite network device sends the first message to the first terminal device, the method further includes: The third satellite network device receives a second message sent by a second satellite network device, where the second message indicates the third satellite network device to generate the first message and send the first message to the second satellite network device.

In a possible implementation, before the third satellite network device receives the first time information sent by the first satellite network device, the method further includes: The third satellite network device sends a first time information request to the first satellite network device, where the first time information request indicates the first satellite network device to send the first time information to the third satellite network device.

According to a fifth aspect, this application provides a transmission method, including: A first device generates a second data packet. The first device sends the second data packet to at least one first terminal device within a specified time period, where the specified time period is obtained through negotiation between a first satellite network device and the at least one first terminal device, or the first satellite network device determines the specified time period based on broadcast/multicast time information sent by a first network device. Optionally, the first device may determine the specified time period based on a data volume of broadcast/multicast data sent by the first network device. In some embodiments, the first device may include a ground center station 19 and a converged communication platform 24. In some other embodiments, the first device may include a ground center station 19, a converged communication platform 18, and a broadcast/multicast service center 17.

In a possible implementation, the method further includes: The first device receives content of the second data packet sent by the first network device. The first device receives one or more pieces of information that are sent by the first network device and that include an identifier, broadcast/multicast time information, and broadcast/multicast region information of the second data packet.

In a possible implementation, that the first device sends the second data packet to the at least one first terminal device within the specified time period specifically includes the following step.

The first device sends the second data packet to the at least one first terminal device through a first beam.

Alternatively, the first device sends the second data packet to the at least one first terminal device, where the second data packet includes a first version number, and the first version number indicates that the second data packet is a broadcast data packet or a multicast data packet.

Alternatively, the first device sends the second data packet to the at least one first terminal device, where the second data packet includes first information and a second version number, the first information indicates that the second data packet is a broadcast data packet and/or a multicast data packet, and the second version number indicates a second satellite network device to generate a protocol version of the second data packet.

In a possible implementation, when the first information indicates that the second data packet is a broadcast data packet, the second data packet further includes information that indicates a broadcast source of the second data packet. Alternatively, when the first information indicates that the second data packet is a multicast data packet, the second data packet further includes information that indicates a multicast source of the second data packet.

In a possible implementation, the method further includes: The first device determines the first beam, or the first version number, or the first information based on the identifier of the second data packet.

In a possible implementation, before the first device sends the second data packet to the at least one first terminal device within the specified time period, the method further includes the following step.

The first device sends a first message to the first terminal device, where the first message includes time information that indicates sending time of the second data packet.

In a possible implementation, before the first device sends the first message to the first terminal device, the method further includes: The first device receives a second message sent by the first terminal device, where the second message indicates the first device to send the first message to the first terminal device.

In a possible implementation, after the first device sends the second data packet to the at least one first terminal device, the method further includes: The first device receives information that is sent by the first terminal device and that indicates a reception status of the second data packet by the first terminal device.

In a possible implementation, that the first device generates the second data packet specifically includes: The first device generates a first data packet at an application AP layer. The first device delivers the first data packet from the AP layer to a message data convergence protocol MDCP layer and/or a satellite link control SLC layer. The first device processes the first data packet at the MDCP layer and/or the SLC layer into the second data packet.

In a possible implementation, the second data packet includes time that indicates when the first device sends a next second data packet.

According to a sixth aspect, this application provides a transmission method, including: A first terminal device receives a second data packet from a first device within a specified time period. The first terminal device determines that the second data packet is a broadcast data packet or a multicast data packet. The first terminal device obtains a first data packet based on the second data packet, where the specified time period is obtained through negotiation between a first satellite network device and at least one first terminal device, or the first terminal device determines the specified time period based on a received second message.

In a possible implementation, that the first terminal device determines that the second data packet is a broadcast data packet or a multicast data packet specifically includes: When the second data packet includes a first version number, the first terminal device determines, based on the first version number, that the second data packet is a broadcast data packet or a multicast data packet. Alternatively, when the second data packet includes first information, the first terminal device determines, based on the first information, that the second data packet is a broadcast data packet or a multicast data packet. Alternatively, the first terminal device determines, based on a first beam through which the second data packet is received, that the second data packet is a broadcast data packet or a multicast data packet.

In a possible implementation, when the first information indicates that the second data packet is a broadcast data packet, the second data packet further includes information that indicates a broadcast source of the second data packet. Alternatively, when the first information indicates that the second data packet is a multicast data packet, the second data packet further includes information that indicates a multicast source of the second data packet.

In a possible implementation, the first data packet includes information that indicates reception time for the first terminal device to receive a next first data packet sent by the first satellite network device.

In a possible implementation, before the first terminal device receives the second data packet from the first device within the specified time period, the method further includes the following step.

The first terminal device sends the second message to the first device, where the second message indicates the first device to send sending time information of the first data packet to the first terminal device.

In a possible implementation, after the first terminal device sends the second message to the first device, the method further includes: The first terminal device receives a first message sent by the first device, where the first message includes time information that indicates sending time of the first data packet.

In a possible implementation, that the first terminal device sends the second message to the first device specifically includes: The first terminal device receives input by a user for querying sending time of a next second data packet. The first terminal device sends the second message to the first device in response to the input.

In a possible implementation, after the first terminal device receives the first message, the method further includes: The first terminal device displays the sending time of the first data packet.

In a possible implementation, before the first terminal device receives the second data packet sent by the first device, the method further includes: The first terminal device receives input by a user for querying sending time of a next second data packet. The first terminal device displays, in response to the input, time that indicates when the first terminal device receives the second data packet, where the sending time is obtained through negotiation between the first device and the at least one first terminal device.

According to a seventh aspect, this application provides a communication apparatus, including one or more processors, one or more memories, and a transceiver. The transceiver, the one or more memories, and the one or more processors are coupled. The one or more memories are configured to store computer program code. The computer program code includes computer instructions. When the one or more processors execute the computer instructions, the communication apparatus performs the method in any possible implementation in the first aspect, the second aspect, the fourth aspect, or the fifth aspect.

The communication apparatus may be a satellite network device, or any network element or a combination of a plurality of network elements in a satellite network device. For example, the satellite network device may be a BeiDou satellite network device.

According to an eighth aspect, this application provides a communication apparatus, including one or more processors, one or more memories, and a transceiver. The transceiver, the one or more memories, and the one or more processors are coupled. The one or more memories are configured to store computer program code. The computer program code includes computer instructions. When the one or more processors execute the computer instructions, the communication apparatus performs the method in any possible implementation in the third aspect or the sixth aspect.

The communication apparatus may be a terminal or a device in another product form.

According to a ninth aspect, this application provides a computer storage medium, including computer instructions. When the computer instructions are run on a computer, the computer performs the method in any possible implementation in the first aspect, the second aspect, the fourth aspect, or the fifth aspect.

According to a tenth aspect, this application provides a computer storage medium, including computer instructions. When the computer instructions are run on a computer, the computer performs the method in any possible implementation in the third aspect or the sixth aspect.

According to an eleventh aspect, this application provides a computer program product. When the computer program product is run on a computer, the computer performs the method in any possible implementation in the first aspect, the second aspect, the fourth aspect, or the fifth aspect.

According to a twelfth aspect, this application provides a computer program product. When the computer program product is run on a computer, the computer performs the method in any possible implementation in the third aspect or the sixth aspect.

According to a thirteenth aspect, this application provides a chip or a chip system, applied to a terminal and including a processing circuit and an interface circuit. The interface circuit is configured to receive code instructions and transmit the code instructions to the processing circuit. The processing circuit is configured to run the code instructions to perform the method in any possible implementation in the third aspect or the sixth aspect.

### BRIEF DESCRIPTION OF DRAWINGS

FIG. 1 is a diagram of a satellite communication system according to an embodiment of this application;
FIG. 2A is a diagram of another satellite communication system according to an embodiment of this application;
FIG. 2B is a diagram of another satellite communication system according to an embodiment of this application;
FIG. 3 is a diagram of another satellite communication system according to an embodiment of this application;
FIG. 4A is a diagram of an outbound protocol architecture according to an embodiment of this application;
FIG. 4B-1 and FIG. 4B-2 are a diagram of a protocol encapsulation architecture of outbound data of a satellite communication system according to an embodiment of this application;
FIG. 4C-1 and FIG. 4C-2 are a diagram of a protocol parsing architecture of outbound data of a satellite communication system according to an embodiment of this application;

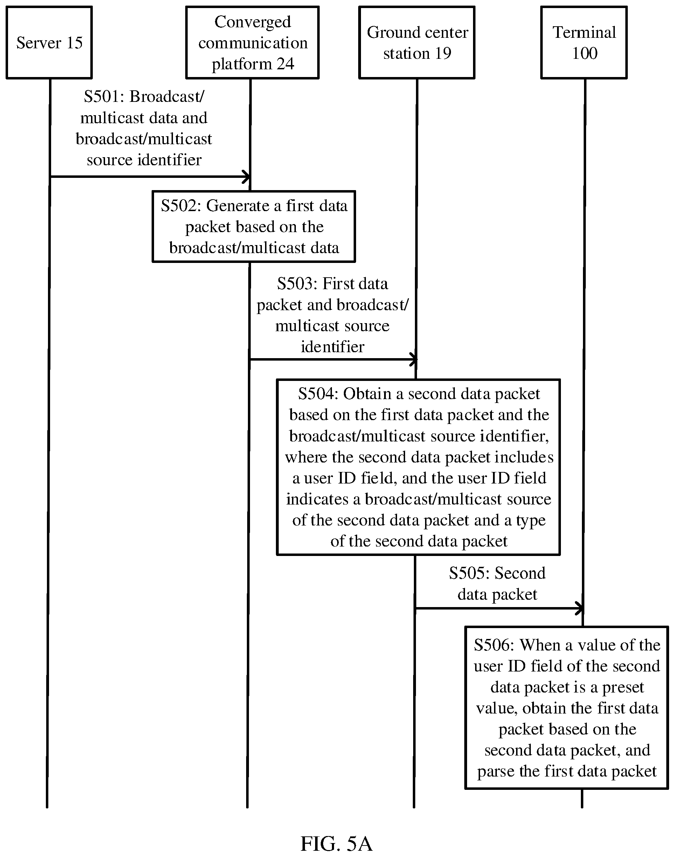

FIG. 5A is a schematic flowchart of a transmission method according to an embodiment of this application;

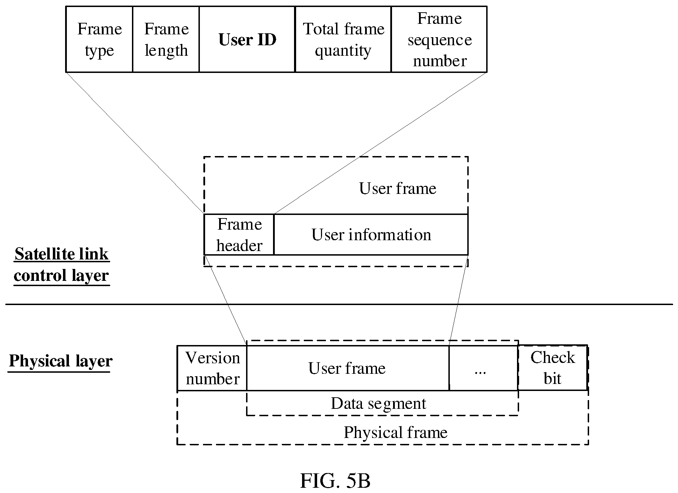

FIG. 5B is a diagram of a format of a broadcast/multicast data packet according to an embodiment of this application;

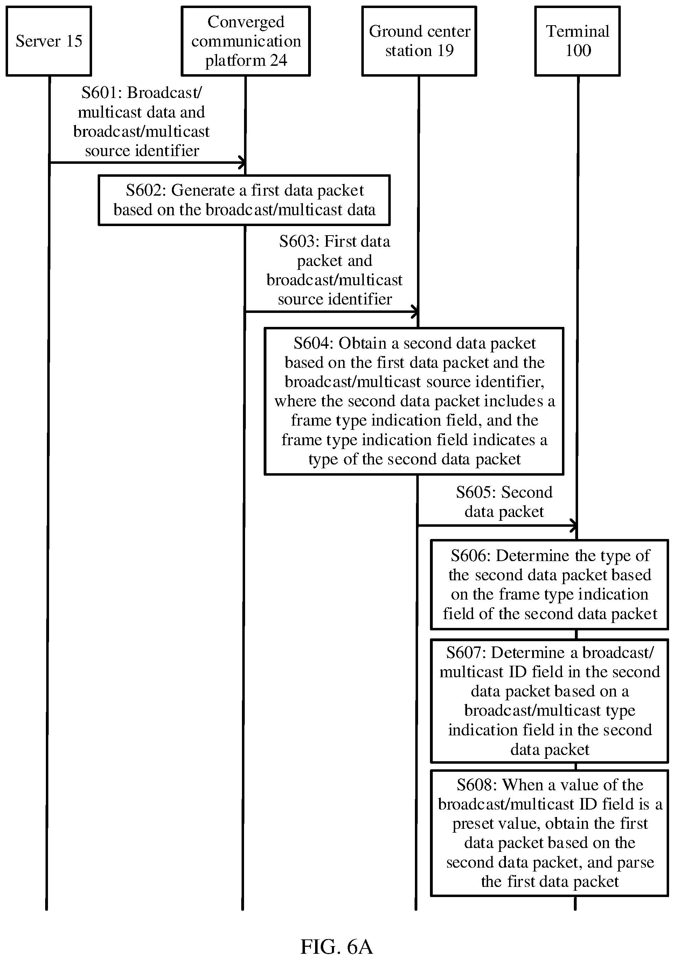

FIG. 6A is a schematic flowchart of another transmission method according to an embodiment of this application;

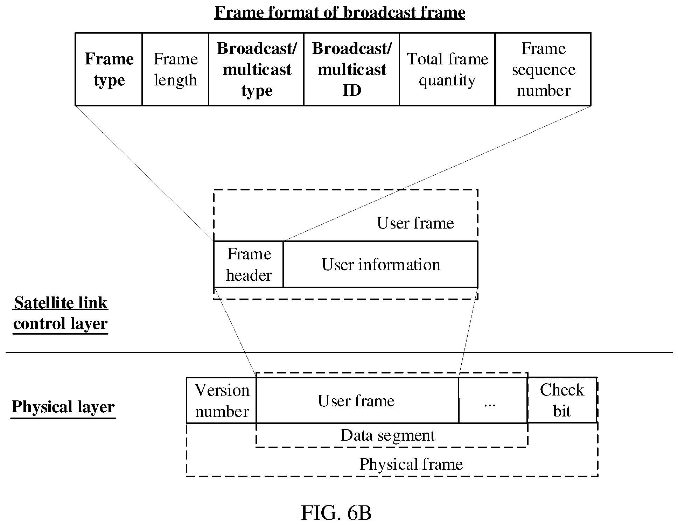

FIG. 6B is a diagram of a format of another broadcast/multicast data packet according to an embodiment of this application;

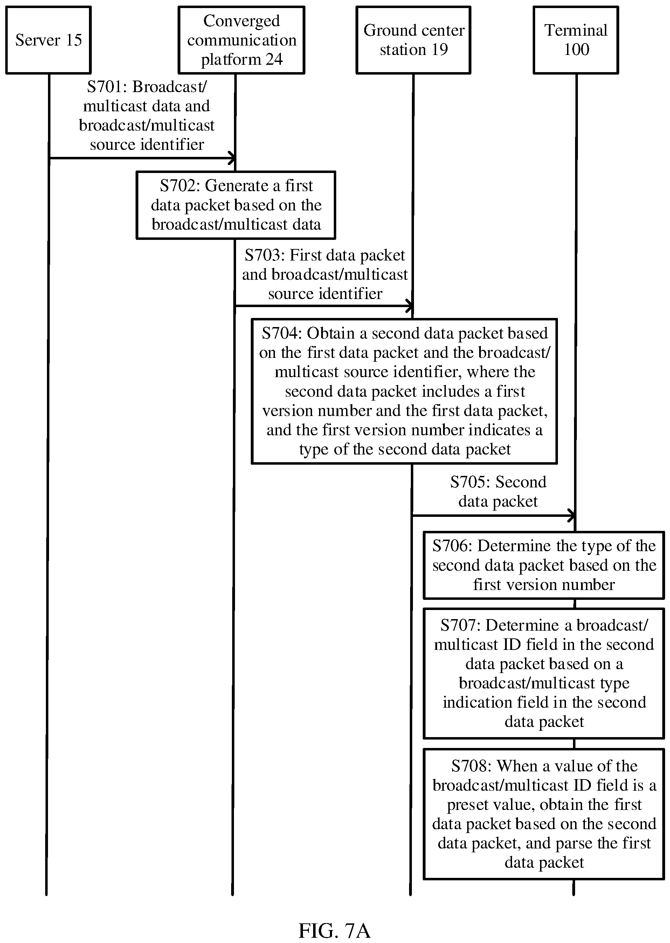

FIG. 7A is a schematic flowchart of another transmission method according to an embodiment of this application;

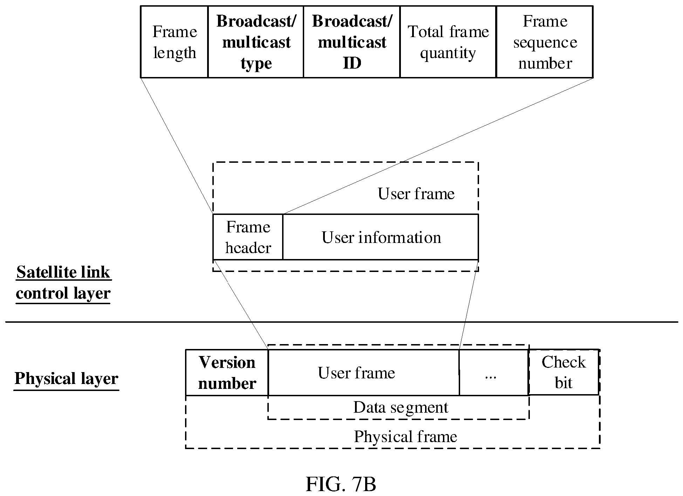

FIG. 7B is a diagram of a format of another broadcast/multicast data packet according to an embodiment of this application;

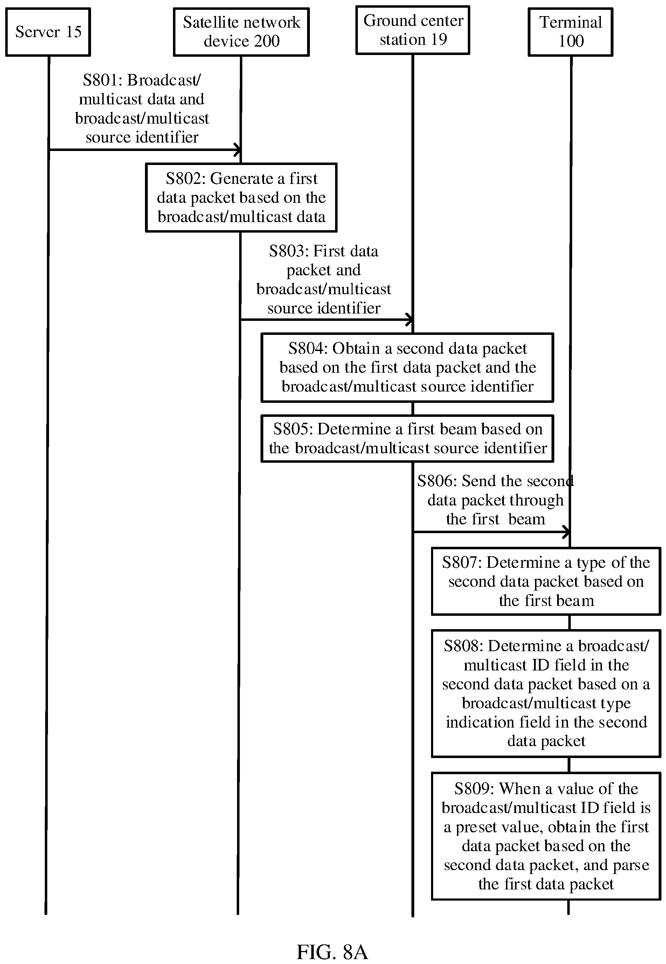

FIG. 8A is a schematic flowchart of another transmission method according to an embodiment of this application;

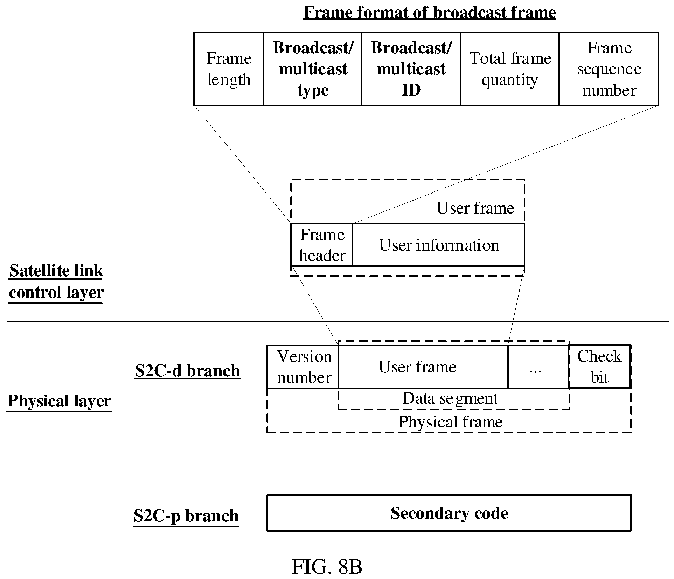

FIG. 8B is a diagram of a format of another broadcast/multicast data packet according to an embodiment of this application;

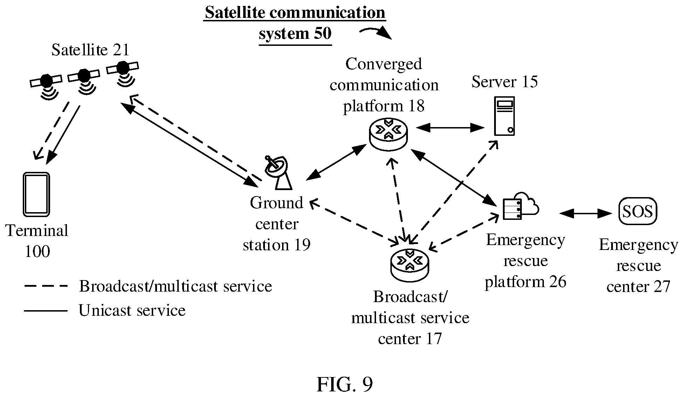

FIG. 9 is a diagram of another satellite communication system according to an embodiment of this application;

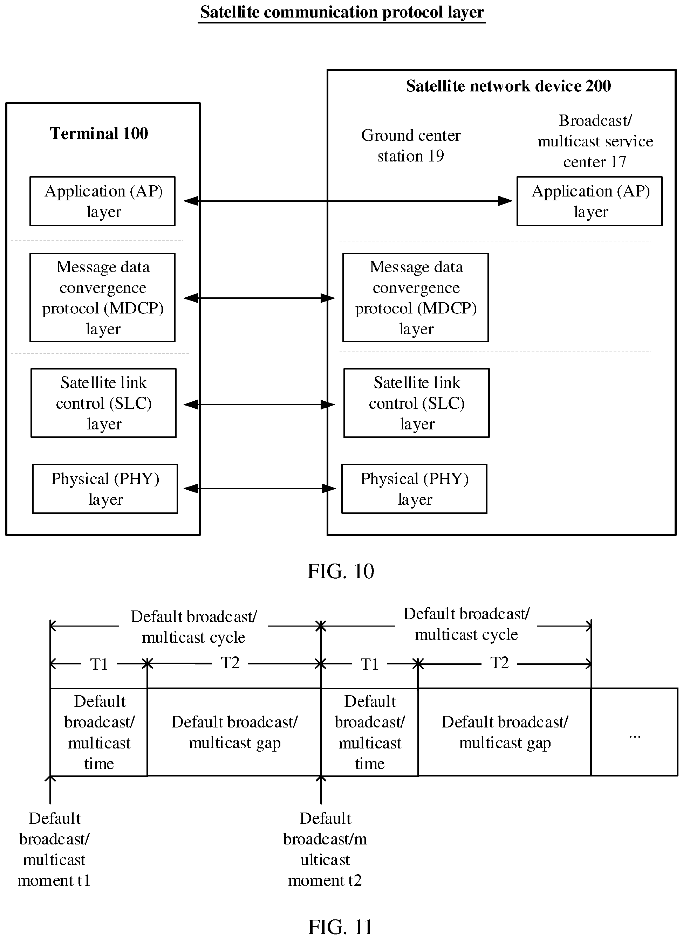

FIG. 10 is a diagram of another outbound protocol architecture according to an embodiment of this application;
FIG. 11 is a diagram of a default broadcast/multicast cycle according to an embodiment of this application;

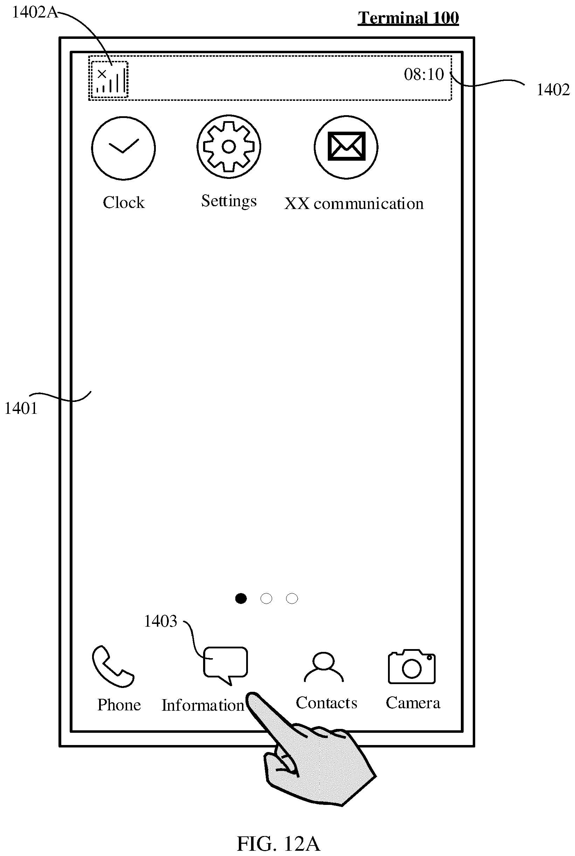

FIG. 12A to FIG. 12E are diagrams of a group of interfaces according to an embodiment of this application;

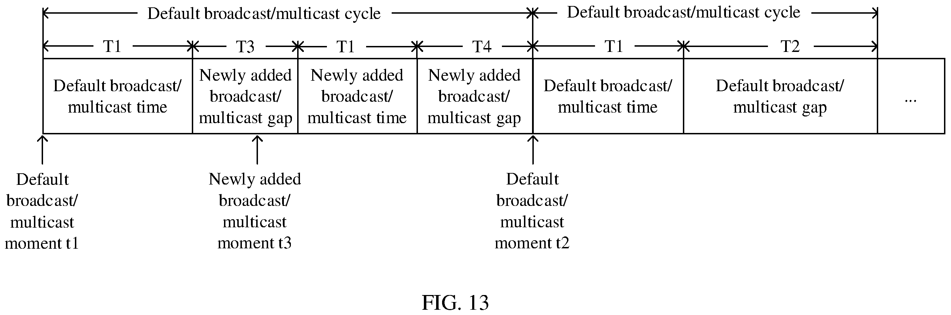

FIG. 13 is a diagram of newly added broadcast/multicast time according to an embodiment of this application;

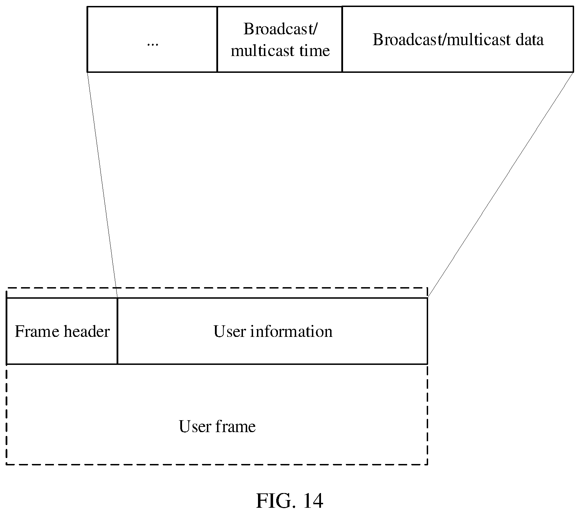

FIG. 14 is a diagram of a format of another broadcast/multicast data packet according to an embodiment of this application;

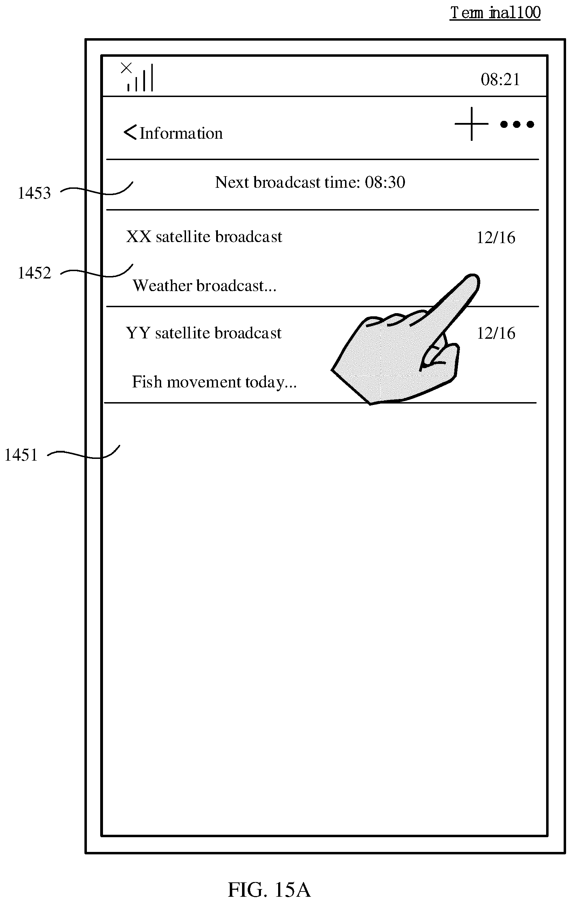

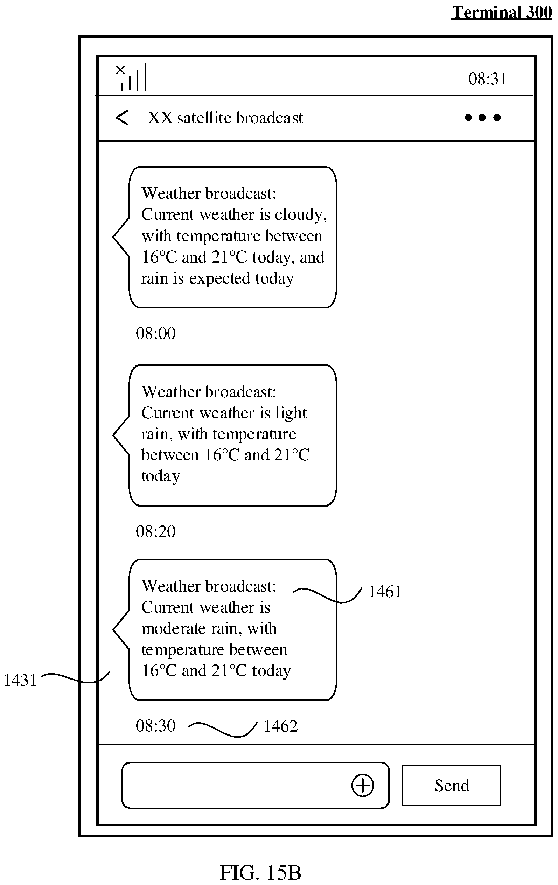

FIG. 15A and FIG. 15B are diagrams of another group of interfaces according to an embodiment of this application;

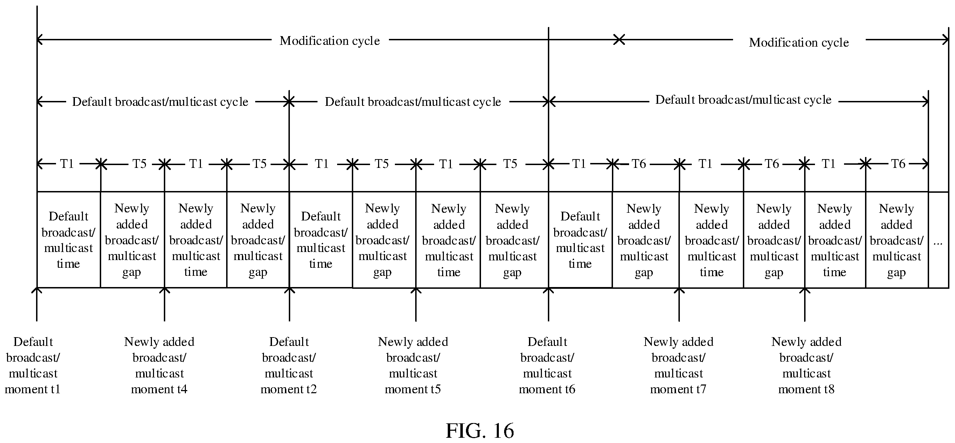

FIG. 16 is a diagram of a modification cycle according to an embodiment of this application;

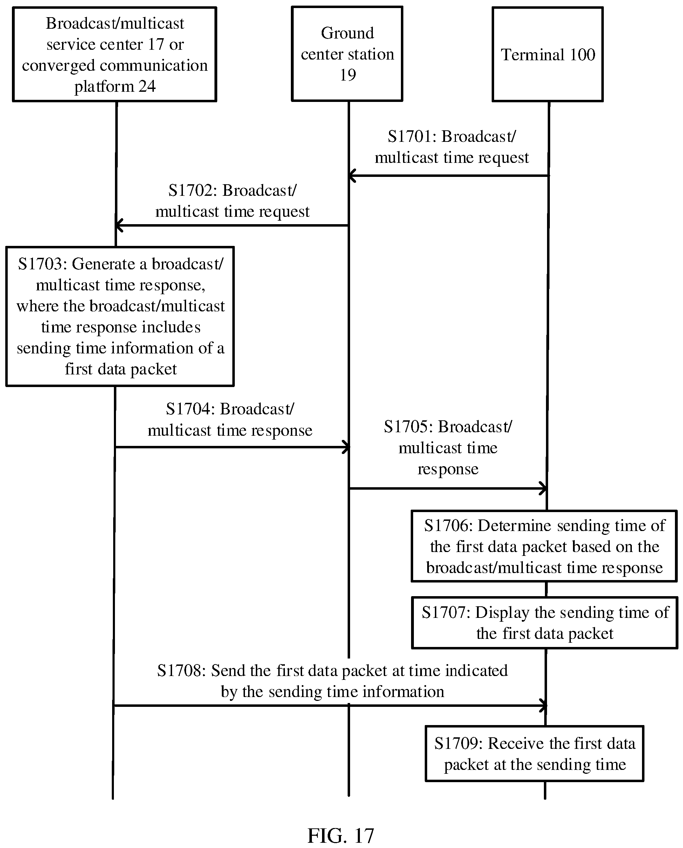

FIG. 17 is a schematic flowchart of querying sending time of a first data packet according to an embodiment of this application;

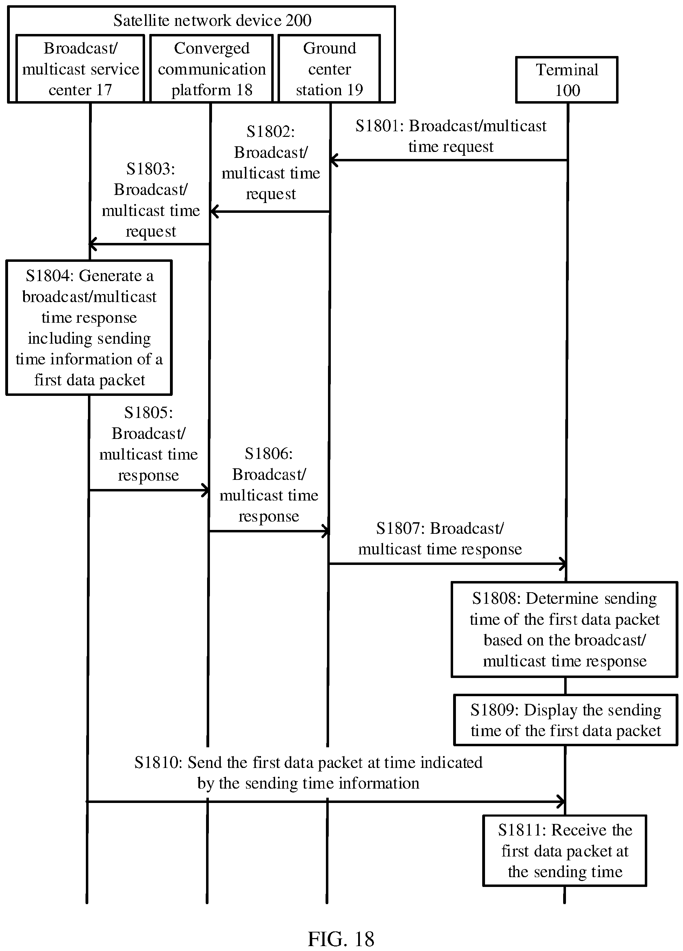

FIG. 18 is another schematic flowchart of querying sending time of a first data packet according to an embodiment of this application;

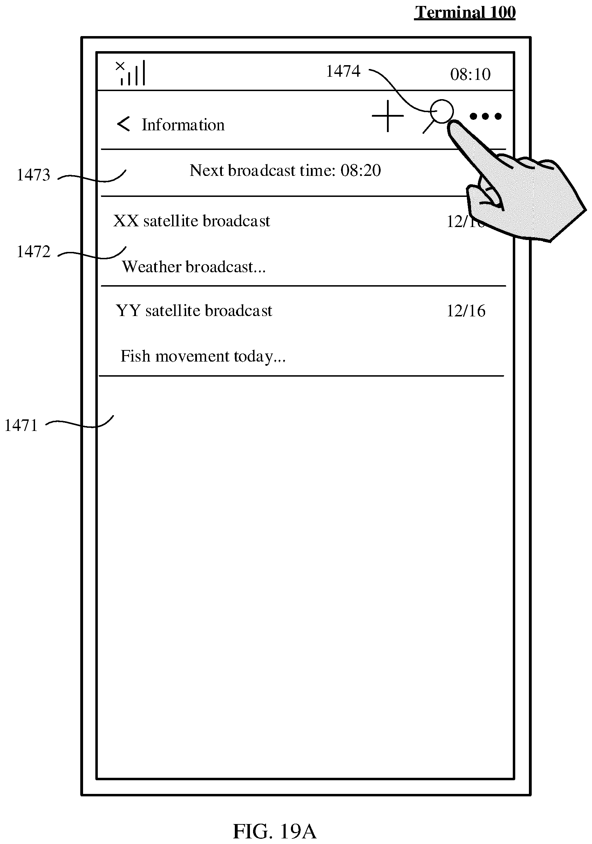

FIG. 19A to FIG. 19C are diagrams of another group of interfaces according to an embodiment of this application;

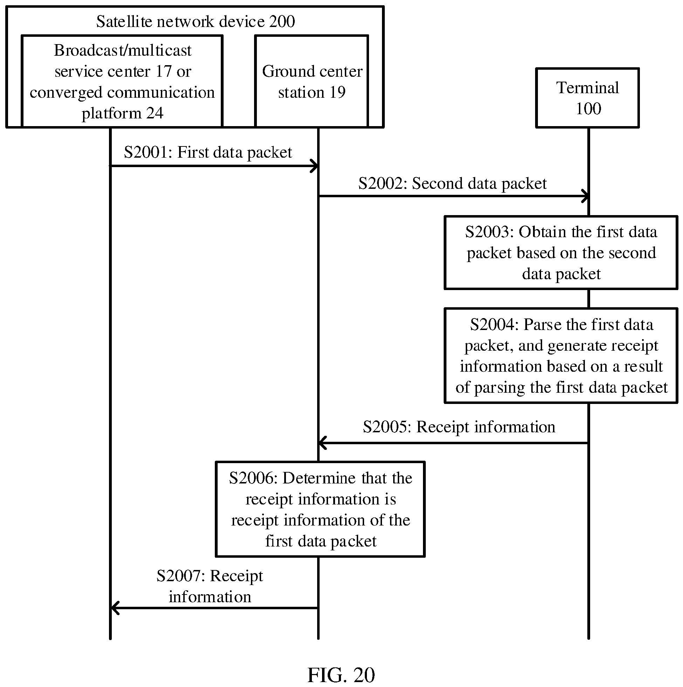

FIG. 20 is a schematic flowchart of sending receipt information by a terminal according to an embodiment of this application;

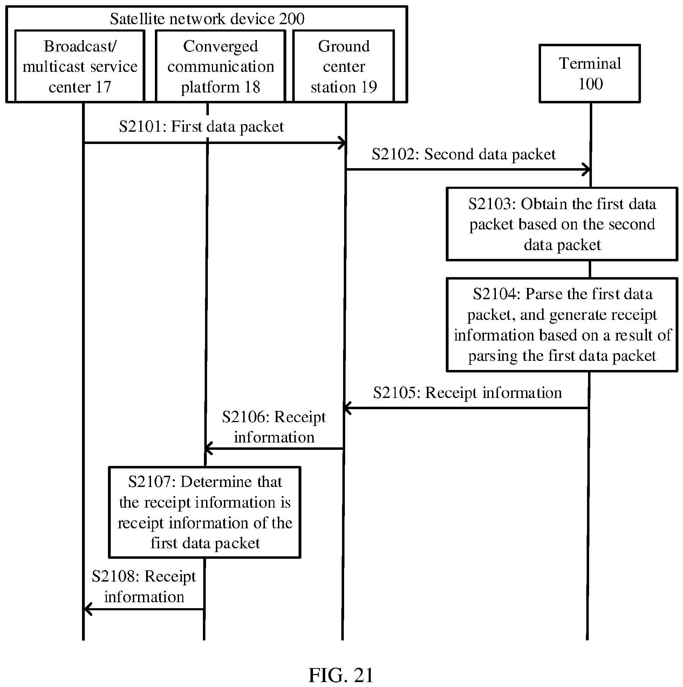

FIG. 21 is another schematic flowchart of sending receipt information by a terminal according to an embodiment of this application; and

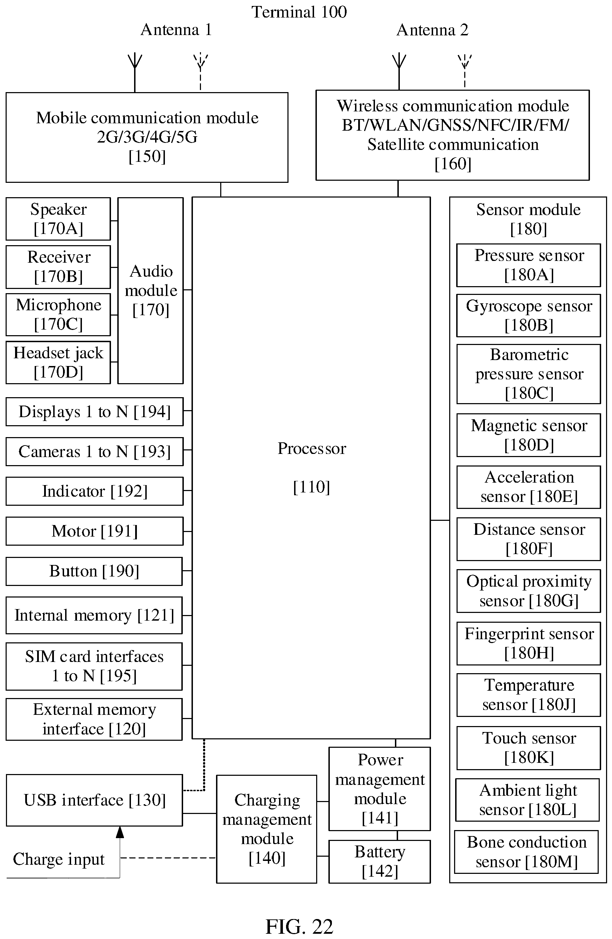

FIG. 22 is a diagram of a hardware structure according to an embodiment of this application.

### DESCRIPTION OF EMBODIMENTS

The following clearly describes in detail technical solutions in embodiments of this application with reference to the accompanying drawings. In the descriptions of embodiments of this application, unless otherwise specified, "/" indicates "or". For example, A/B may indicate A or B. The term "and/or" in this specification merely describes an association relationship between associated objects and indicates that three relationships may exist. For example, A and/or B may indicate the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "plurality of" means two or more than two.

The following describes a satellite communication system 10 according to an embodiment of this application.

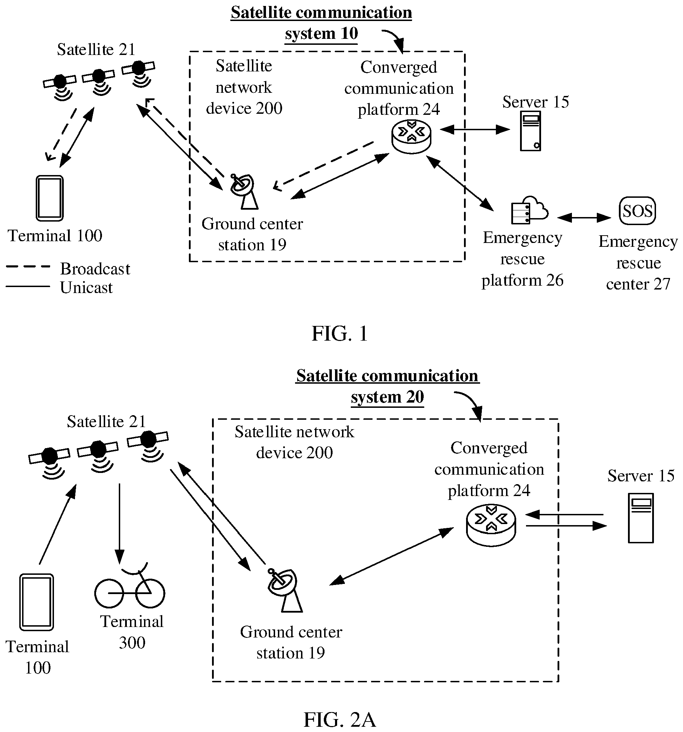

As shown in FIG. 1, the satellite communication system 10 may include, but is not limited to, a terminal 100, a satellite 21, a satellite network device 200, a server 15, and the like.

The terminal 100 in a satellite network may send a data packet to the server 15 by using the satellite network device 200. Specifically, the terminal 100 may first send the data packet to the satellite 21, and the satellite 21 performs only relaying and may directly forward the data packet sent by the terminal 100 to the satellite network device 200 on the ground. The satellite network device 200 may parse, based on a satellite communication protocol, the data packet forwarded by the satellite 21, and forward, to the server 15, data obtained by parsing the data packet. Optionally, the satellite network device 200 may forward, to the server 15 through a conventional cellular communication network (cellular network for short) or through the Internet, content obtained by parsing the data packet.

The server 15 may also send a data packet to the terminal 100 in the satellite network. The server 15 may send data to the satellite network device 200, and the satellite network device 200 may encapsulate, based on the satellite communication protocol, the data sent by the server 15 to obtain the data packet. The satellite network device 200 may send the data packet to the satellite 21. The satellite 21 may send the data packet to the terminal 100 in the satellite network.

In a unicast process, the satellite network device 200 stores data sent by the server 15 to the terminal 100. After receiving a download request from the terminal 100, the satellite network device 200 encapsulates, based on the download request, the data sent by the server 15 to the terminal 100 into a data packet, and sends the data packet to the terminal 100 by using the satellite 21. The download request may indicate the satellite network device 200 to send, to the terminal 100, the data sent by the server 15 to the terminal 100.

In a broadcast or multicast process, after receiving data from the server 15, the satellite network device 200 may encapsulate the data into a data packet, and send the data packet to a plurality of terminals in the satellite network in a broadcast manner by using the satellite 21. The plurality of terminals include the terminal 100.

Optionally, the satellite communication system 10 may further include an emergency rescue platform 26 and an emergency rescue center 27. The satellite network device 200 may send, to the emergency rescue center 27 by using the emergency rescue platform 26, an emergency rescue frame sent by the terminal 100. The emergency rescue center 27 may further send data (for example, rescue information) to a plurality of devices in the satellite network in the broadcast manner by using the emergency rescue platform 26, the satellite network device 200, and the satellite 21.

The satellite network device 200 may include, but is not limited to, a ground center station 19 and a converged communication platform 24. The ground center station 19 may include one or more devices having a sending function and one or more devices having a receiving function, or may include one or more devices having a sending function and a receiving function. This is not limited herein. The ground center station 19 may be configured for the satellite network device 200 to implement a data processing function at a physical layer (physical layer protocol, PHY), a satellite link control layer (satellite link control protocol, SLC), and a message data convergence protocol layer (message data convergence protocol, MDCP). The converged communication platform 24 may be configured to implement a data processing function at an application layer (application layer protocol, AP). A process in which the terminal 100 in the satellite network sends data to the satellite network device 200 may be referred to as an inbound process, and a process in which the satellite network device 200 sends data to the terminal 100 in the satellite network may be referred to as an outbound process.

Optionally, the satellite network device 200 may include, but is not limited to, a ground transceiver station 22 (not shown in the figure), a center station 23 (not shown in the figure), and a converged communication platform 24. The ground transceiver station 22 may include one or more devices having a sending function and one or more devices having a receiving function, or may include one or more devices having a sending function and a receiving function. This is not limited herein. The ground transceiver station 22 may be configured for the satellite network device 200 to implement a data processing function at the physical layer. The center station 23 may be configured for the satellite network device 200 to implement a data processing function at the satellite link control layer and the message data convergence protocol layer.

In some possible application scenarios, the server 15 may be an Internet of things (Internet of things, IOT) server. The server 15 may notify one or more terminals to perform a specific operation, for example, may notify locking or unlocking. The one or more terminals may be electronic devices in an unlocked state that can provide corresponding services for users, such as shared bikes and lockers. The server 15 may be configured by an operator that provides the one or more terminals, and the one or more electronic devices include a terminal 300. When receiving an unlocking operation of unlocking the terminal 300 by a user, the terminal 100 may send an unlocking request (including identifier information of the terminal 300) to the server 15 through a cellular network. After receiving the unlocking request, the server 15 may send an unlocking instruction to the terminal 300 through the cellular network. After receiving the unlocking instruction, the terminal 300 performs the unlocking operation.

Alternatively, when receiving an unlocking operation of unlocking the terminal 300 by a user, the terminal 100 may establish a communication connection (for example, a Bluetooth connection) with the terminal 300. The terminal 100 may receive identifier information of the terminal 300 through the communication connection. The terminal 100 may send an unlocking request (including the identifier information of the terminal 300) to the server 15 through a cellular network. After receiving the unlocking request, the server 15 may send an unlocking instruction to the terminal 100 through the cellular network. After receiving the unlocking instruction, the terminal 100 may send the unlocking instruction to the terminal 300 through the communication connection, and the terminal 300 may perform the unlocking operation based on the unlocking instruction.

However, when the terminal 100 is in a region in which a mobile communication signal is poor or a communication system is damaged (for example, a land network is paralyzed due to a natural disaster), still using unlocking as an example, the terminal 100 cannot send an unlocking request to the server 15 through a cellular network, so a user cannot unlock the terminal 300.

Therefore, in a possible implementation, after receiving a request operation (for example, an unlocking operation) on the terminal 300 (for example, unlocking the terminal 300) by a user, the terminal 100 may send a request (for example, an unlocking request) to the server 15 by using the satellite 21 and the satellite network device 200. After receiving the request, the server 15 may send an information instruction (for example, an unlocking instruction) to the satellite network device 200. The instruction includes an identifier of the terminal 300. The terminal 100 may further notify the terminal 300 to send a download request to the satellite network device 200. The download request indicates the satellite network device 200 to deliver, to the terminal 300 by using the satellite 21, the instruction (for example, the unlocking instruction) sent by the server 15 to the terminal 300. After receiving the instruction, the terminal 300 may perform a corresponding operation (for example, the unlocking operation), as shown in FIG. 2A. In this case, when the cellular network cannot be used, the terminal 100 can perform a corresponding operation (for example, unlocking the terminal 300) on the terminal 300 by using a satellite communication system 20 shown in FIG. 2A.

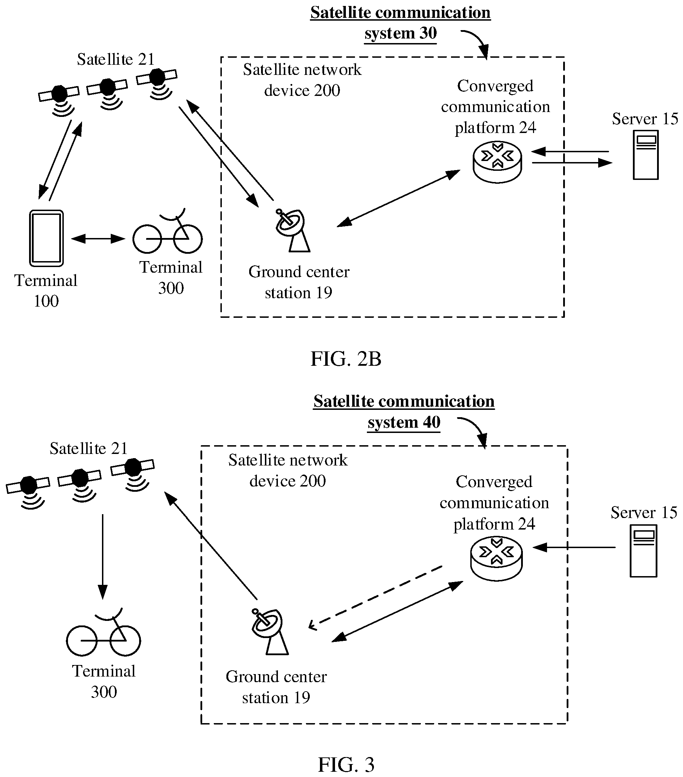

In another possible implementation, after receiving a request operation (for example, an unlocking operation) on the terminal 300 (for example, unlocking the terminal 300) by a user, the terminal 100 may establish a communication connection (for example, a Bluetooth connection) with the terminal 300, and obtain identifier information of the terminal 300. The terminal 100 may send a request (for example, an unlocking request) (including the identifier information of the terminal 300) to the server 15 by using the satellite 21 and the satellite network device 200. After receiving the request, the server 15 may send an information instruction (for example, an unlocking instruction) to the satellite network device 200. After sending the request (for example, the unlocking request) to the server 15, the terminal 100 may further send a download request to the satellite network device 200. The download request indicates the satellite network device 200 to deliver, to the terminal 100 by using the satellite 21, the information instruction (for example, the unlocking instruction) sent by the server 15 to the terminal 100. After receiving the instruction, the terminal 100 may send the instruction to the terminal 300. After receiving the information instruction (for example, the unlocking instruction), the terminal 300 may perform a corresponding operation (for example, the unlocking operation), as shown in FIG. 2B. In this case, when the cellular network cannot be used, the terminal 100 can perform a corresponding operation (for example, unlocking the terminal 300) on the terminal 300 by using a satellite communication system 30 shown in FIG. 2B.

In another possible implementation, the server 15 may send an operation instruction (for example, an unlocking instruction) to the satellite network device 200. The sent operation instruction may be an operation instruction (for example, an unlocking operation) sent by an operator and received by the server 15, or an operation instruction (for example, an unlocking operation) generated by the server 15. The satellite network device 200 may send the instruction to a plurality of terminals (including the terminal 300) in a satellite network in a broadcast manner by using the satellite 21. After receiving the instruction, the plurality of terminals may perform corresponding operations (for example, unlocking operations), as shown in FIG. 3. In this case, when a cellular network cannot be used, an operator that provides the terminal 300 can perform a group operation on the plurality of terminals 300 in a specific region by using a satellite communication system 40 shown in FIG. 3, to avoid a waste of transmission resources caused by sending a same instruction to the plurality of terminals 300 one by one, for example, unlock the terminal 300 for a user in the region to use.

It is to be noted that, because the satellite 21 includes one or more satellites, and coverage regions of different beams of each of the one or more satellites are different, the satellite network device 200 may send, through different beams of different satellites, data to devices in regions corresponding to the beams.

Optionally, when sending data to the satellite network device 200, the server 15 may send broadcast/multicast region information of the data to the satellite network device 200. The satellite network device 200 may determine, based on the broadcast/multicast region information, a beam for broadcasting/multicasting the data. In this case, the satellite network device 200 can broadcast/multicast, through the determined beam, the data in a region indicated by the broadcast/multicast region information.

Optionally, when sending data to the satellite network device 200, the server 15 may send broadcast/multicast time information of the data to the satellite network device 200. The satellite network device 200 may determine, based on the broadcast/multicast time information, a time period for sending the data to one or more terminals.

An embodiment of this application provides a transmission method. The satellite network device 200 may generate a second data packet based on broadcast/multicast data sent by the server 15. The satellite network device 200 may send the second data packet to at least one terminal. In this case, the terminal in a satellite network can directly receive the broadcast/multicast data from the server 15 without sending a download request to the satellite network device 200.

Specifically, the converged communication platform 24 may receive the broadcast/multicast data sent by the server 15. The converged communication platform 24 may generate a first data packet based on the broadcast/multicast data, and send the first data packet to the ground center station 19. The ground center station 19 may obtain the second data packet based on the first data packet, and send the second data packet to the one or more terminals. For example, the ground center station 19 may send the second data packet to the terminal 100 and the terminal 300.

In a possible implementation, the broadcast/multicast data is broadcast data. The server 15 may send the broadcast data to all terminals within a broadcast range. For example, when the ground center station 19 sends the second data packet to another terminal through a specified beam, all terminals within a coverage range of the specified beam may receive the second data packet. After receiving the second data packet, all the terminals may parse the second data packet to obtain the broadcast data.

In a possible implementation, the broadcast/multicast data is multicast data. The server 15 may send the multicast data of a broadcast/multicast group to one or more specified terminals. For example, when the ground center station 19 sends the second data packet including the multicast data to another terminal through a specified beam, all terminals within a coverage range of the specified beam may receive the second data packet. However, only some of the terminals that receive the second data packet may parse the second data packet to obtain the multicast data. These terminals store a broadcast/multicast source identifier of the broadcast/multicast group of the server 15.

It is to be noted that the satellite network device 200 may provide one or more broadcast/multicast groups, the broadcast/multicast groups have different identifiers (also referred to as broadcast/multicast source identifiers), and one broadcast/multicast group may include one or more terminals. The satellite network device 200 may provide the broadcast/multicast group to another server, such as a weather server or a sea condition server. A server may send a broadcast/multicast source identifier of a broadcast/multicast group to a terminal that subscribes to a service provided by the server (for example, the weather server may send a broadcast/multicast source identifier of a broadcast/multicast group of the weather server to a terminal that subscribes to a weather forecast service). The server may further send, based on the broadcast/multicast source identifier, service data to the terminal that subscribes to the service of the server. For example, the weather server may send, by using the satellite network device 200, real-time weather data to the terminal that subscribes to the weather forecast service. When receiving data sent by the weather server to a broadcast/multicast group, the satellite network device 200 may encapsulate the data and a broadcast/multicast source identifier of the broadcast/multicast group into a data packet, and send the data packet to a terminal of the broadcast/multicast group. The terminal may store the broadcast/multicast source identifier of the broadcast/multicast group of the server, and determine, based on the broadcast/multicast source identifier in the first data packet or the second data packet, that the multicast data is from the server indicated by the stored broadcast/multicast source identifier. In this case, the server can send the multicast data to some terminals, and some terminals can also obtain the multicast data through parsing.

Optionally, the server may set different keys, encryption algorithms, and the like for different broadcast/multicast groups, and send the keys, decryption algorithms, and the like to the terminal when sending the broadcast/multicast source identifiers to the terminal. In this case, only the terminal of the broadcast/multicast group can obtain, through parsing, the multicast data sent by the server to the broadcast/multicast group.

In a possible implementation, the broadcast/multicast data may be broadcast data or multicast data. The server 15 may send the broadcast/multicast data and the broadcast/multicast source identifier together to the satellite network device 200. The satellite network device 200 may obtain the second data packet based on the broadcast/multicast data and the broadcast/multicast source identifier. The terminal may determine, based on the broadcast/multicast source identifier, that the broadcast/multicast data in the data packet is the broadcast data or the multicast data, and determine a source (for example, the server 15 or a broadcast/multicast group of the server 15) of the broadcast/multicast data.

The following describes a protocol architecture of outbound data in a satellite communication system 10 according to an embodiment of this application.

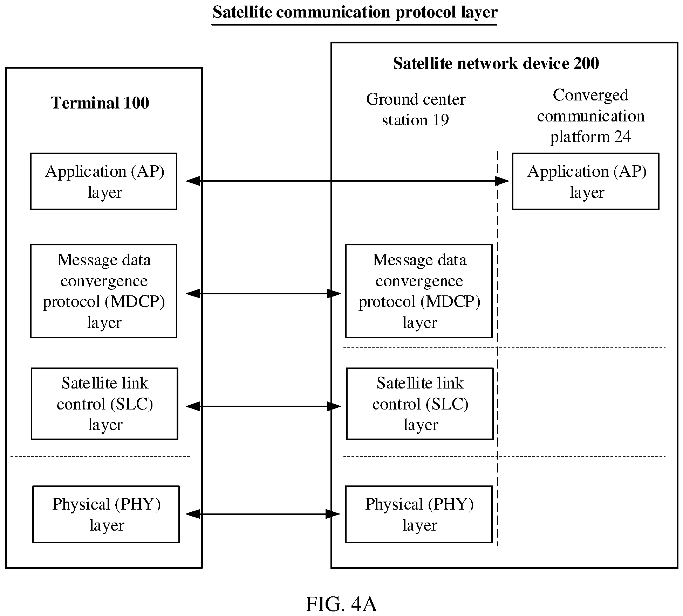

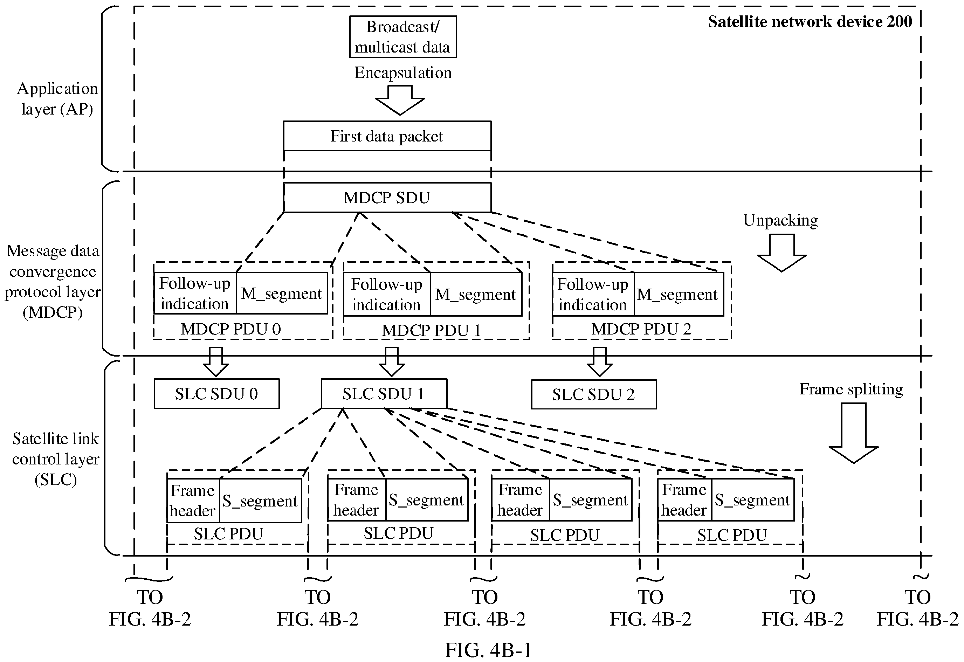

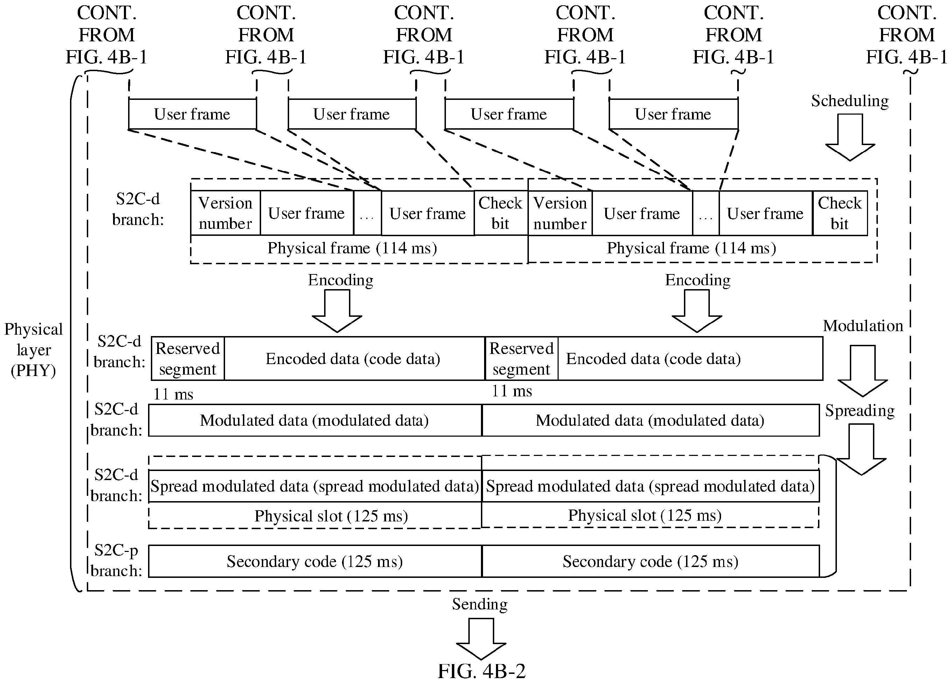

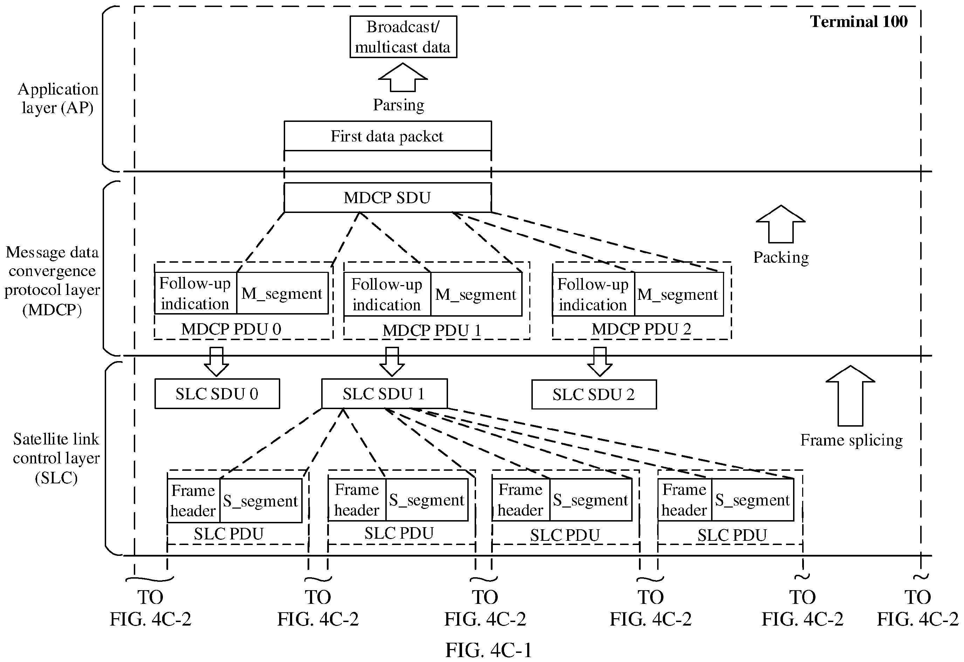

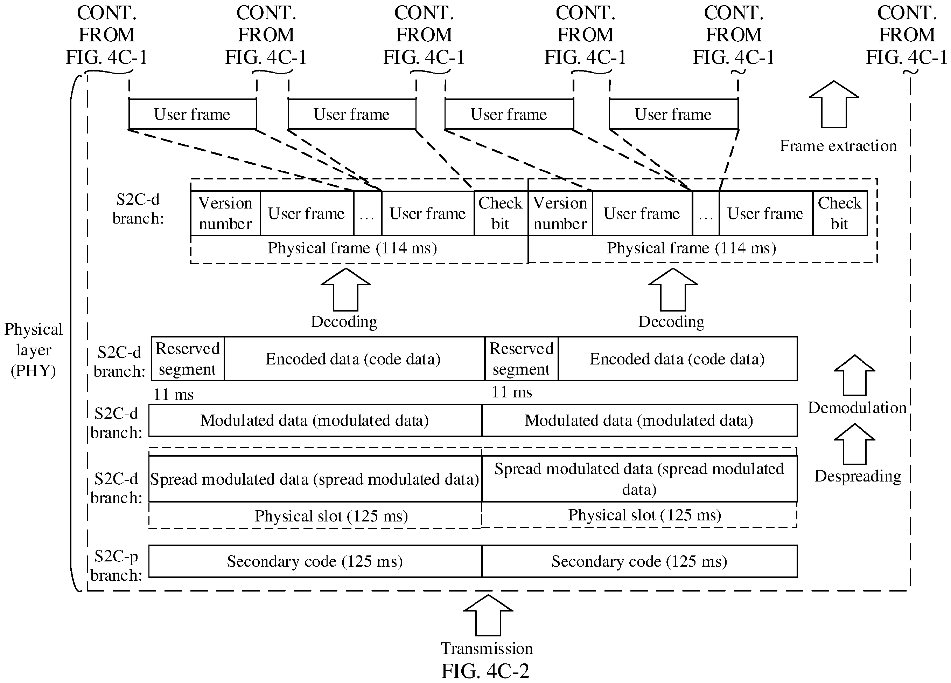

FIG. 4A is a diagram of an outbound protocol architecture according to an embodiment of this application. As shown in FIG. 4A, a terminal 100 may be configured to process, at a physical layer, a satellite link control layer, a message data convergence protocol layer, and an application layer, data sent by a satellite network device 200. A converged communication platform 24 may be configured to process, at an application layer, data to be sent to a terminal (for example, the terminal 100). The ground center station 19 may include one or more devices having a sending function and one or more devices having a receiving function or may include one or more devices having a sending function and a receiving function. This is not limited herein. The ground center station 19 may be configured to process, at a physical layer, a satellite link control layer, and a message data convergence protocol layer, data to be sent to a terminal (for example, the terminal 100). The converged communication platform 24 and the ground center station 19 may be collectively referred to as the satellite network device 200.

FIG. 4B-1 and FIG. 4B-2 are a diagram of a protocol encapsulation architecture of outbound data according to an embodiment of this application. As shown in FIG. 4B-1 and FIG. 4B-2, data transmission protocol layers in a satellite network device 200 may be classified into an application layer, a message data convergence protocol layer, a satellite link control layer, and a physical layer. When the satellite network device 200 sends data to a terminal 100, a working process of a data transmission protocol in the satellite network device 200 may be as follows:

At the AP layer, the satellite network device 200 may add packet header information to broadcast/multicast data to obtain a first data packet. The broadcast/multicast data may include, but is not limited to, data, text, flag semaphore, voice, an image, an animation, and the like that are sent by a third-party server (such as a server 15 or an emergency rescue platform 26).

Optionally, the packet header information may include, but is not limited to, a compression indication field, an encryption indication field, and the like. The compression indication field may indicate whether the satellite network device 200 performs compression. The encryption indication field indicates whether the satellite network device 200 performs encryption.

Optionally, after encoding and compressing the broadcast/multicast data to obtain compressed data, the satellite network device 200 may add a compression indication field before the compressed data. The compression indication field indicates a type of an encoding and compression algorithm used by the satellite network device 200.

Optionally, the satellite network device 200 may encrypt the broadcast/multicast data by using a key to obtain encrypted data, and may add an encryption indication field before the encrypted data. The encryption indication field indicates a type of an encryption algorithm used by the satellite network device 200.

Optionally, the satellite network device 200 may perform an encoding and compression operation on the broadcast/multicast data to obtain compressed data, and the satellite network device 200 may encrypt the compressed data to obtain encrypted data and add packet header information before the encrypted data to obtain the first data packet. The packet header information may include, but is not limited to, a compression indication field, an encryption indication field, and the like. The compression indication field may indicate a type of an encoding and compression algorithm used by the satellite network device 200 to compress data. The encryption indication field indicates a type of an encryption algorithm used by the satellite network device 200 to encrypt data.

Optionally, the satellite network device 200 may further receive broadcast/multicast source identifier information sent by a third-party server. The broadcast/multicast source identifier information may indicate a source of the broadcast/multicast data, for example, the server 15 or a broadcast/multicast group of the server 15. In other words, the terminal that receives the first data packet may determine, based on the broadcast/multicast source identifier information, whether to receive the broadcast/multicast data in the first data packet. For example, the terminal 100 may store one or more pieces of broadcast/multicast source identifier information, and the terminal 100 may determine whether the broadcast/multicast source identifier information in the first data packet is the same as one of the one or more pieces of broadcast/multicast source identifier information stored in the terminal 100. When determining that the broadcast/multicast source identifier information in the first data packet is the same as one of the one or more pieces of broadcast/multicast source identifier information stored in the terminal 100, the terminal 100 obtains the broadcast/multicast data in the first data packet.

Further, the satellite network device 200 may determine a type of an encryption algorithm of the broadcast/multicast data based on the broadcast/multicast source identifier information. In this case, the terminal that receives the first data packet can decrypt the first data packet based on the broadcast/multicast source identifier information, for example, perform decryption by using a key agreed with the broadcast/multicast source or obtained through negotiation with the broadcast/multicast source in advance, to obtain the broadcast/multicast data.

At the MDCP layer, the satellite network device 200 may obtain, through an inter-layer interface, an application-layer message delivered by the AP layer, and use the application-layer message as an MDCP SDU. The satellite network device 200 may split the MDCP SDU into one or more pieces of MDCP segment data (M_segment) of fixed lengths, and add a follow-up indication field to a header of each piece of MDCP segment data to obtain an MDCP PDU, that is, the MDCP PDU includes M_segment and the follow-up indication field. The follow-up indication field may indicate a rank of a current MDCP PDU in a same MDCP SDU.

At the SLC layer, the satellite network device 200 may obtain, through an inter-layer interface, the MDCP PDU delivered by the MDCP layer, and use the MDCP PDU as an SLC SDU. The satellite network device 200 may split the SLC SDU into one or more (for example, four) pieces of SLC segment data (S_segment) of fixed lengths, and add frame header information to a header of each S_segment to obtain an SLC PDU. The frame header information may include, but is not limited to, a total frame quantity field and a frame sequence number field. The total frame quantity field may indicate a total quantity of SLC PDUs included in the SLC SDU to which the SLC PDU belongs. The frame sequence number field may indicate a sequence number of the SLC PDU in the SLC SDU to which the SLC PDU belongs.

At the PHY layer, the satellite network device 200 may obtain, through an inter-layer interface, the SLC PDU delivered by the SLC layer, and use the SLC PDU as a user frame. The satellite network device 200 may splice user frames (also referred to as data frames) of one or more users together, and then add a frame header (for example, a version number) and a check bit to obtain a physical frame. The satellite network device 200 may perform physical-layer processing (such as encoding, pilot insertion, modulation, and spreading) on the physical frame to obtain encoded data of a data branch (S2C-d branch). The satellite network device 200 may form pilot encoded data, that is, outbound data, by using the encoded data of the S2C-d branch and pilot data (also referred to as a secondary code) of a pilot branch (S2C-p branch), and send the outbound data to a satellite 21. The satellite 21 relays the outbound data to one or more terminals. It may be understood that the pilot data of the S2C-p branch is related to a satellite beam. When the satellite beam is known information, the pilot data of the S2C-p branch is also known, and does not need to be decoded. The encoded data of the S2C-d branch needs to be decoded.

FIG. 4C-1 and FIG. 4C-2 are a diagram of a protocol parsing architecture of outbound data according to an embodiment of this application. As shown in FIG. 4C-1 and FIG. 4C-2, transmission protocol layers in the terminal (for example, the terminal 100) that receives the first data packet may be classified into an application layer, a message data convergence protocol layer, a satellite link control layer, and a physical layer. When the terminal 100 receives data sent by the satellite network device 200, a working process of a data transmission protocol in the terminal 100 may be as follows:

At the PHY layer, the terminal 100 may capture encoded data of an S2C-d branch based on a secondary code of an S2C-p branch sent by the satellite network device 200. After capturing the encoded data of the S2C-d branch, the terminal 100 may perform physical-layer processing (such as despreading, demodulation, pilot removal, and decoding) on the encoded data of the S2C-d branch to obtain a physical frame. The terminal 100 may extract, from the physical frame, a user frame that belongs to the terminal 100. The terminal 100 may present the user frame to the SLC layer through an inter-layer interface, and use the user frame as an SLC PDU of the SLC layer.

At the SLC layer, when the user frame received by the terminal 100 is a common data frame, the terminal 100 may splice SLC PDUs that belong to a same SLC SDU into one SLC SDU. The terminal 100 may present the SLC SDU to the MDCP layer through an inter-layer interface, and use the SLC SDU as an MDCP PDU of the MDCP layer.

At the MDCP layer, the terminal 100 may process one MDCP PDU into one MDCP SDU, or splice a plurality of MDCP PDUs into one MDCP SDU. The terminal 100 may present the MDCP SDU to the AP layer through an inter-layer interface, and use the MDCP SDU as the first data packet received by the AP layer.

At the AP layer, the terminal 100 may obtain the broadcast/multicast data from the first data packet.

Optionally, when the first data packet includes the encryption indication field and the compression indication field, the terminal 100 may decrypt the first data packet based on the indication to obtain compressed data. Then, the terminal 100 decompresses and decodes the compressed data based on the indication to obtain the broadcast/multicast data.

Optionally, the first data packet may include the broadcast/multicast source identifier information, and the terminal 100 may determine, based on the broadcast/multicast source identifier information, whether to receive the broadcast/multicast data in the first data packet. For example, the terminal 100 may store one or more pieces of broadcast/multicast source identifier information, and the terminal 100 may determine whether the broadcast/multicast source identifier information in the first data packet is the same as one of the one or more pieces of broadcast/multicast source identifier information stored in the terminal 100. When determining that the broadcast/multicast source identifier information in the first data packet is the same as one of the one or more pieces of broadcast/multicast source identifier information stored in the terminal 100, the terminal 100 obtains the broadcast/multicast data in the first data packet. Further, the terminal 100 may determine, based on the broadcast/multicast source identifier information, a type of an encryption algorithm of the broadcast/multicast data or whether the broadcast/multicast data is encrypted. For example, if the broadcast/multicast data is broadcast information, as the satellite network device 200 may not encrypt the data, the terminal 100 may determine that decryption does not need to be performed. In this case, the terminal 100 can decrypt the first data packet based on the broadcast/multicast source identifier information to obtain the broadcast/multicast data.

In this embodiment of this application, the foregoing protocol processing process is merely an example for description, and a specific operation of protocol processing is not limited in this application.

In a possible implementation, the converged communication platform 24 may receive broadcast/multicast data and a broadcast/multicast source identifier that are sent by the server 15. The broadcast/multicast data is broadcast data or multicast data. The converged communication platform 24 may encapsulate the received broadcast/multicast data to obtain a first data packet. The converged communication platform 24 may send the first data packet and the broadcast/multicast source identifier to the ground center station 19. The ground center station 19 may obtain a second data packet based on the first data packet and the broadcast/multicast source identifier. The second data packet includes the first data packet and a user identity (identity, ID) field. The ground center station 19 may determine a value of the user ID field based on the broadcast/multicast source identifier. In other words, the user ID field may indicate a broadcast/multicast source of the broadcast/multicast data. It may be understood that the user ID field may further indicate that the second data packet is a broadcast data packet or a multicast data packet. The ground center station 19 may send the second data packet to at least one terminal (for example, the terminal 100). After receiving the second data packet, the terminal 100 may determine a type of the second data packet and a broadcast/multicast source of the broadcast/multicast data of the second data packet based on the user ID field in the second data packet. The terminal 100 may determine, based on the broadcast/multicast source of the second data packet, whether to receive the second data packet. After determining that the second data packet is received, the terminal 100 may parse the second data packet based on the type of the second data packet, to obtain the broadcast/multicast data. Herein, the second data packet is an SLC PDU or a physical frame. In this case, the terminal (for example, the terminal 100) in the satellite network can receive the broadcast data or the multicast data.

FIG. 5A is a schematic flowchart of a transmission method according to an embodiment of this application.

As shown in FIG. 5A, the transmission method includes the following steps.

S501: The server 15 sends broadcast/multicast data and a broadcast/multicast source identifier to the converged communication platform 24.

The server 15 may send the broadcast/multicast data and the broadcast/multicast source identifier to the converged communication platform 24. The broadcast/multicast source identifier may be a broadcast/multicast ID set by the converged communication platform 24 for the server 15 or a broadcast/multicast group of the server 15. Alternatively, the broadcast/multicast source identifier may be identifier information (for example, a name) of the server 15 or a broadcast/multicast group of the server 15.

S502: The converged communication platform 24 generates a first data packet based on the broadcast/multicast data.

The converged communication platform 24 may encapsulate the broadcast/multicast data to obtain the first data packet. Specifically, for a description of generating, by the converged communication platform, the first data packet based on the broadcast/multicast data, refer to the embodiment shown in FIG. 4B-1 and FIG. 4B-2. Details are not described herein again.

S503: The converged communication platform 24 sends the first data packet and the broadcast/multicast source identifier to the ground center station 19.

The converged communication platform 24 may send the first data packet including the broadcast/multicast data and the broadcast/multicast source identifier to the ground center station 19.

Optionally, when the broadcast/multicast source identifier is identifier information of the server 15 or a broadcast/multicast group of the server 15, the converged communication platform 24 may determine a broadcast/multicast ID of a broadcast/multicast source (that is, the server 15 or the broadcast/multicast group of the server 15) based on the broadcast/multicast source identifier, and send the first data packet and the broadcast/multicast ID to the ground center station 19. The broadcast/multicast ID may indicate the broadcast/multicast source.

Specifically, the converged communication platform 24 stores a correspondence between the identifier information of the server 15 or the broadcast/multicast group of the server 15 and the broadcast/multicast ID. The converged communication platform 24 may determine the broadcast/multicast ID of the broadcast/multicast source identifier based on the broadcast/multicast source identifier sent by the server 15.

S504: The ground center station 19 obtains a second data packet based on the first data packet and the broadcast/multicast source identifier, where the second data packet includes a user ID field, and the user ID field indicates a broadcast/multicast source of the second data packet and a type of the second data packet.

As shown in FIG. 5B, first, after receiving the first data packet and the broadcast/multicast source identifier, the ground center station 19 may process the first data packet at the MDCP layer and the SLC layer to obtain one or more pieces of SLC segment data of fixed lengths. Specifically, for a specific description of obtaining, by the ground center station 19, the SLC segment data based on the first data packet, refer to the embodiment shown in FIG. 4B-1 and FIG. 4B-2. Details are not described herein again. The ground center station 19 may add frame header information to a header of each S_segment to obtain an SLC PDU (also referred to as a user frame). The frame header information may include, but is not limited to, a frame length field, a frame type field, and a user identity (identity, ID) field.

The frame length field may identify a type or length of the user frame.

The frame type field may identify a type of the user frame. For example, a length of the frame type field may be 2 bits. When a value of the frame type field is 00, it may be identified that the current user frame is a common data frame. The common data frame may be for transmitting unicast data or broadcast/multicast data. When a value of the frame type field is 01, it may be identified that the current user frame is an ACK frame. The ACK frame may be for determining a transmission status of the SLC PDU at the SLC layer. When a value of the frame type field is 10, it may be identified that the current user frame is a receipt frame. The receipt frame may be for determining a parsing status of the first data packet at the application layer. Herein, the following embodiments are described by using an example in which the common data frame may be for transmitting unicast data or broadcast/multicast data. In other words, when the broadcast/multicast data is delivered by using the common data frame, the value of the frame type field is 00. By using the method, it can be ensured that a terminal that does not support a broadcast/multicast function in a network can normally receive a data packet from a satellite network device. A terminal (for example, the terminal 100) that supports a broadcast/multicast function supports receiving data of a plurality of user IDs (for example, one unicast ID and one or more broadcast source IDs or multicast source IDs). After receiving a data packet sent by the satellite network device 200, the terminal recognizes whether IDs included in the data packet include the plurality of user IDs supported by the terminal 100.

Alternatively, when a value of the frame type field is 00, it may be identified that the current user frame is a common data frame. The common data frame may be for transmitting unicast data. When a value of the frame type field is 11, it may be identified that the current user frame is a broadcast/multicast frame (also referred to as a broadcast/multicast data packet). The broadcast/multicast frame may be for transmitting broadcast/multicast data.

In another example, a length of the frame type field may be 3 bits. When a value of the frame type field is 000, it may be identified that the current user frame is a common data frame. When a value of the frame type field is 001, it may be identified that the current user frame is an ACK frame. When a value of the frame type field is 010, it may be identified that the current user frame is a receipt frame. When a value of the frame type field is 011, it may be identified that the current user frame is a broadcast frame (also referred to as a broadcast data packet). The broadcast frame may be for transmitting broadcast data. When a value of the frame type field is 100, it may be identified that the current user frame is a multicast frame (also referred to as a multicast data packet). The multicast frame may be for transmitting multicast data.

The user ID field may identify a broadcast/multicast source to help the terminal determine whether the data needs to be received. The terminal 100 may extract a user frame from a preset broadcast/multicast source from outbound data based on the value of the user ID field. Herein, the value of the user ID field is a broadcast/multicast ID of a broadcast/multicast source. The terminal 100 stores a broadcast/multicast ID of the preset broadcast/multicast source. It is to be noted that, because a quantity of broadcast sources is different from a quantity of multicast sources, a length of a broadcast/multicast ID of the broadcast source and a length of a broadcast/multicast ID of the multicast source may be different.

It is to be further noted that, when the user frame is a common data frame for transmitting unicast data, the user ID field may identify a receiving device, for example, the terminal 100. In this case, the value of the user ID field is an identifier of the terminal 100 (for example, a phone number of the terminal 100). For the user frame to be used for transmitting both unicast data and broadcast/multicast data, a length of the user ID field is a maximum value of the identifier of the terminal 100 and the length of the broadcast/multicast ID. In other words, the terminal 100 may determine, based on the value of the user ID field, that data of the user frame is unicast data, broadcast data, or multicast data. For example, a length of a broadcast/multicast ID of a broadcast source (also referred to as a broadcast ID) may be 3 bits, a length of a broadcast/multicast ID of a multicast source (also referred to as a multicast ID) may be 10 bits, and the user ID of the terminal 100 may be 34 bits. Then, the length of the user ID field is 34 bits. Alternatively, the user ID of the terminal 100 may be 37 bits. Then, the length of the user ID field is 37 bits. Further, for the terminal 100 to recognize a broadcast/multicast source more quickly, values of the user ID field may be sequentially allocated to a broadcast source, a multicast source, and a device identifier in ascending order. For example, when the value of the user ID field ranges from 0 to 7, the broadcast/multicast source is the broadcast source; and when the value of the user ID field ranges from 8 to 1023, the broadcast/multicast source is the multicast source.

Then, the ground center station 19 may splice the broadcast/multicast frame and another user frame together, and add a version number field to a header of a plurality of user frames. The version number field may indicate a version of a satellite communication system protocol. The ground center station 19 may further add a check code (for example, a cyclic redundancy check (cyclic redundancy check, CRC) code) to a tail of the plurality of user frames, to obtain a physical frame. The ground center station 19 may further perform physical-layer processing (such as encoding, pilot insertion, modulation, and spreading) on the physical frame and add a reserved segment to the physical frame to form encoded data of an S2C-d branch with a physical slot of a fixed length. Then, the ground center station 19 may synchronously send the encoded data of the S2C-d branch and a secondary code of an S2C-p branch to the satellite 21, and the satellite 21 relays the encoded data and the secondary code to one or more terminals (including the terminal 100).

In this embodiment of this application, the foregoing broadcast/multicast frame processing mechanism is merely an example for description, and a specific operation of the broadcast/multicast frame processing mechanism is not limited in this application.

S505: The ground center station 19 sends the second data packet to the terminal 100.

The ground center station 19 may send the second data packet to the terminal 100 based on the operation shown in step S504. The second data packet may be a user frame.

S506: When a value of the user ID field of the second data packet is a preset value, obtain the first data packet based on the second data packet, and parse the first data packet. The preset value may be understood as a value obtained before the terminal 100 communicates with the converged communication platform 24 or the ground center station 19 through a satellite communication link. For example, the preset value is a value configured by the converged communication platform for the terminal 100 or obtained through negotiation between the terminal 100 and the converged communication platform through cellular communication or in another communication manner before the communication with the terminal 100 through the satellite communication link.

The terminal 100 may capture the encoded data of the S2C-d branch based on the secondary code of the S2C-p branch sent by the ground center station 19. After capturing the encoded data of the S2C-d branch, the terminal 100 may perform physical-layer processing (such as despreading, demodulation, pilot removal, and decoding) on the encoded data of the S2C-d branch to obtain a physical frame, and extract, from the physical frame, a user frame whose value of the user ID field is the preset value. Herein, the preset value may include, but is not limited to, a broadcast/multicast ID stored in the terminal 100, a user ID of the terminal 100, and the like.

Then, the terminal 100 may obtain the first data packet based on the extracted user frame. For details, refer to the embodiment shown in FIG. 4C-1 and FIG. 4C-2. Details are not described herein again. The terminal 100 may parse the first data packet to obtain the broadcast/multicast data. The terminal 100 may further display the broadcast/multicast data obtained by parsing.

Optionally, when sending the broadcast/multicast data to the converged communication platform 24, the server 15 may send broadcast/multicast region information of the broadcast/multicast data to the converged communication platform 24. The converged communication platform 24 may determine, based on the broadcast/multicast region information, a beam for transmitting the broadcast/multicast data. Alternatively, the converged communication platform 24 may send the broadcast/multicast region information to the ground center station 19, and the ground center station 19 may determine, based on the broadcast/multicast region information, a beam for transmitting the broadcast/multicast data. In this case, the satellite network device 200 can broadcast/multicast, through the determined beam, the data in a region indicated by the broadcast/multicast region information. It is to be noted that a coverage region of the beam for transmitting the broadcast/multicast data includes the region indicated by the broadcast/multicast region information.

Optionally, when sending the broadcast/multicast data to the converged communication platform 24, the server 15 may send broadcast/multicast time information of the broadcast/multicast data to the converged communication platform 24. The converged communication platform 24 may determine, based on the broadcast/multicast time information, a time period for sending the broadcast/multicast data to one or more terminals.

It is to be noted that, in addition to the server 15, the converged communication platform 24 may further receive broadcast/multicast data sent by another broadcast/multicast source (for example, an emergency rescue platform 26 or a broadcast/multicast group of the emergency rescue platform 26). It is to be further noted that the converged communication platform 24 and the ground center station 19 may be collectively referred to as the satellite network device 200.

In a possible implementation, the converged communication platform 24 may receive broadcast/multicast data and a broadcast/multicast source identifier that are sent by the server 15. The converged communication platform 24 may encapsulate the received broadcast/multicast data to obtain a first data packet. The converged communication platform 24 may send the first data packet and the broadcast/multicast source identifier to the ground center station 19. The ground center station 19 may obtain a second data packet based on the first data packet and the broadcast/multicast source identifier. The second data packet includes the first data packet, a frame type indication field, and a broadcast/multicast ID field. The ground center station 19 may determine a value of the frame type indication field based on the broadcast/multicast source identifier. Herein, the frame type indication field in the second data packet may indicate that the second data packet is a broadcast data packet, or the frame type indication field in the second data packet may indicate that the second data packet is a multicast data packet. The ground center station 19 may further determine a value of the broadcast/multicast ID field based on the broadcast/multicast source identifier, that is, the broadcast/multicast ID field may indicate a broadcast/multicast source of the broadcast/multicast data. The ground center station 19 may send the second data packet to at least one terminal (for example, the terminal 100). After receiving the second data packet, the terminal 100 may determine a type of the second data packet based on the frame type indication field in the second data packet. The terminal 100 may determine, based on the broadcast/multicast ID field of the second data packet, whether to receive the second data packet. After determining that the second data packet is received, the terminal 100 may parse the second data packet based on the type of the second data packet, to obtain the broadcast/multicast data. Herein, the second data packet is an SLC PDU. In this case, the terminal (for example, the terminal 100) in the satellite network can receive the broadcast data or the multicast data.

The frame type indication field may identify a type of the second data packet generated by the ground center station 19. For example, a length of the frame type field may be 3 bits. When a value of the frame type field is 000, it may be identified that the current second data packet is a common data frame. The common data frame may be for transmitting unicast data. When a value of the frame type field is 001, it may be identified that the current second data packet is an ACK frame. When a value of the frame type field is 010, it may be identified that the current second data packet is a receipt frame. When a value of the frame type field is 011, it may be identified that the current second data packet is a broadcast frame (also referred to as a broadcast data packet). The broadcast frame may be for transmitting broadcast data. When a value of the frame type field is 100, it may be identified that the current second data packet is a multicast frame (also referred to as a multicast data packet). The multicast frame may be for transmitting multicast data. Herein, the user frame sent by the satellite network device 200 to the terminal 100 is a broadcast frame, and a value of the frame type field may be 011. Alternatively, the user frame sent by the satellite network device 200 to the terminal 100 is a multicast frame, and a value of the frame type field may be 100. A length of a broadcast/multicast ID field of the broadcast frame is different from a length of a broadcast/multicast ID field of the multicast frame. In this case, the terminal 100 can determine a location and length of a broadcast/multicast ID field in the user frame based on the value of the frame type field, and obtain the broadcast/multicast ID field.

Optionally, the first data packet includes the broadcast/multicast data and the broadcast/multicast source identifier that are sent by the server 15 and that may be received by the converged communication platform 24. The converged communication platform 24 may encapsulate the received broadcast/multicast data and broadcast/multicast source identifier to obtain the first data packet. The first data packet includes the broadcast/multicast data and a broadcast ID field or a multicast ID field. The converged communication platform 24 may send the first data packet and broadcast/multicast indication information to the ground center station 19. The broadcast/multicast indication information may indicate that the first data packet is a broadcast data packet, or the broadcast/multicast indication information may indicate that the first data packet is a multicast data packet. In this case, the ground center station 19 can directly determine the value of the frame type indication field based on the broadcast/multicast indication information. The ground center station 19 may send the second data packet to at least one terminal.

In another possible implementation, the ground center station 19 may obtain a second data packet based on the first data packet and the broadcast/multicast source identifier. The second data packet includes the first data packet, a frame type indication field, a broadcast/multicast type indication field, and a broadcast/multicast ID field. The ground center station 19 may determine a value of the frame type indication field based on the broadcast/multicast source identifier. In other words, the frame type indication field may indicate that the second data packet is a data packet including the broadcast/multicast data (also referred to as a broadcast/multicast data packet). The ground center station 19 may further determine a value of the broadcast/multicast type indication field based on the broadcast/multicast source identifier. When the value of the broadcast/multicast type indication field is a first preset value, the broadcast/multicast type indication field may indicate that the second data packet is a broadcast data packet. When the value of the broadcast/multicast type indication field is a second preset value, the broadcast/multicast type indication field may indicate that the second data packet is a multicast data packet. The ground center station 19 may further determine a value of the broadcast/multicast ID field based on the broadcast/multicast source identifier, and the broadcast/multicast ID field may indicate a broadcast/multicast source of the broadcast/multicast data. It is to be noted that, because a quantity of multicast sources is different from a quantity of broadcast sources, lengths of broadcast/multicast ID fields that are in the broadcast data packet and the multicast data packet and that indicate broadcast/multicast sources are different. In other words, the broadcast/multicast type indication field may indicate a length of the broadcast/multicast ID field. The ground center station 19 may send the second data packet to at least one terminal (for example, the terminal 100).

After receiving the second data packet, the terminal 100 may determine, based on the frame type indication field in the second data packet, that the second data packet is a broadcast/multicast data packet. The terminal 100 may determine, based on the broadcast/multicast type indication field of the second data packet, whether the second data packet is a broadcast data packet or a multicast data packet, that is, determine a broadcast/multicast ID field in the second data packet. The terminal 100 may determine, based on the broadcast/multicast ID field, whether to receive the second data packet. After determining that the second data packet is received, the terminal 100 may parse the second data packet to obtain the broadcast/multicast data. Herein, the second data packet is an SLC PDU. In this case, the terminal (for example, the terminal 100) in the satellite network can receive the broadcast data or the multicast data. By using the method, multicast or broadcast can be indicated based on the frame type and the broadcast/multicast type. Therefore, for broadcast, since a broadcast source has a small data volume, a length of an occupied broadcast/multicast ID may be short, thereby saving an outbound sending resource.

FIG. 6A is a schematic flowchart of a transmission method according to an embodiment of this application.

As shown in FIG. 6A, the transmission method includes the following steps.
S601: The server 15 sends broadcast/multicast data and a broadcast/multicast source identifier to the converged communication platform 24.
S602: The converged communication platform 24 generates a first data packet based on the broadcast/multicast data.
S603: The converged communication platform 24 sends the first data packet and the broadcast/multicast source identifier to the ground center station 19.

Specifically, for specific descriptions of step S601 to step S603, refer to the embodiment shown in FIG. 5A. Details are not described herein again.

S604: The ground center station 19 obtains a second data packet based on the first data packet and the broadcast/multicast source identifier, where the second data packet includes a frame type indication field, and the frame type indication field indicates a type of the second data packet.

As shown in FIG. 6B, after receiving the first data packet and the broadcast/multicast source identifier, the ground center station 19 may process the first data packet at the MDCP layer and the SLC layer to obtain one or more pieces of SLC segment data of fixed lengths. Specifically, for a specific description of obtaining, by the ground center station 19, the SLC segment data based on the first data packet, refer to the embodiment shown in FIG. 4B-1 and FIG. 4B-2. Details are not described herein again. The ground center station 19 may add frame header information to a header of each S_segment to obtain an SLC PDU (also referred to as a user frame). The frame header information may include, but is not limited to, a frame length field, a frame type field, a broadcast/multicast type indication field, and a broadcast/multicast ID field.

The frame length field may identify a length of the user frame.

The frame type field may identify a type of the user frame. For example, a length of the frame type field may be 2 bits. When a value of the frame type field is 00, it may be identified that the current user frame is a common data frame. The common data frame may be for transmitting unicast data. When a value of the frame type field is 01, it may be identified that the current user frame is an ACK frame. When a value of the frame type field is 10, it may be identified that the current user frame is a receipt frame. When a value of the frame type field is 11, it may be identified that the current user frame is a broadcast/multicast frame (also referred to as a broadcast/multicast data packet), and the broadcast/multicast frame may be for transmitting the broadcast/multicast data. Herein, the user frame is the broadcast/multicast frame, so the value of the frame type field is 11. It is to be noted that, only when the user frame is the broadcast/multicast frame, the user frame includes the broadcast/multicast type indication field and the broadcast/multicast ID field.

The broadcast/multicast type indication field may indicate that the user frame is a broadcast data packet or a multicast data packet. In other words, when the value of the broadcast/multicast type indication field is a first preset value, the broadcast/multicast type indication field may indicate that the second data packet is a broadcast data packet. When the value of the broadcast/multicast type indication field is a second preset value, the broadcast/multicast type indication field may indicate that the second data packet is a multicast data packet. For example, a length of the broadcast/multicast type indication field may be 1 bit. When the broadcast/multicast type indication field is 0, it may be identified that the current user frame is a broadcast frame. When the broadcast/multicast type indication field is 1, it may be identified that the current user frame is a multicast frame.

The broadcast/multicast ID field may identify a broadcast/multicast source. The terminal 100 may extract a broadcast/multicast frame from a preset broadcast/multicast source from outbound data based on the value of the broadcast/multicast ID field. Herein, the value of the broadcast/multicast ID field is a broadcast/multicast ID of a broadcast/multicast source. The terminal 100 stores a broadcast/multicast ID of the preset broadcast/multicast source.

It is to be noted that, because a quantity of broadcast sources is different from a quantity of multicast sources, a length of a broadcast/multicast ID of the broadcast source and a length of a broadcast/multicast ID of the multicast source are different. When the broadcast/multicast type indication field indicates that the user frame is a broadcast frame, the broadcast/multicast ID field is a broadcast ID field. For example, a length of the broadcast ID field is 3 bits. When the broadcast/multicast type indication field indicates that the user frame is a multicast frame, the broadcast/multicast ID field is a multicast ID field. For example, a length of the multicast ID field is 10 bits. In this case, the terminal 100 can determine the length of the broadcast/multicast ID field based on the value of the broadcast/multicast type indication field, thereby saving an outbound sending resource.

Then, the ground center station 19 may obtain encoded data of an S2C-d branch based on the user frame, and then the satellite 21 relays the encoded data of the S2C-d branch and a secondary code of an S2C-p branch to one or more terminals (including the terminal 100). For details, refer to the embodiment shown in FIG. 5A. Details are not described herein again.

S605: The ground center station 19 sends the second data packet to the terminal 100.

The ground center station 19 may send the second data packet to the terminal 100 based on the operation shown in step S604. The second data packet may be a user frame.

S606: The terminal 100 determines the type of the second data packet based on the frame type indication field of the second data packet.

The terminal 100 may capture the encoded data of the S2C-d branch based on the secondary code of the S2C-p branch sent by the ground center station 19. After capturing the encoded data of the S2C-d branch, the terminal 100 may perform physical-layer processing (such as despreading, demodulation, pilot removal, and decoding) on the encoded data of the S2C-d branch to obtain a physical frame.

The terminal 100 may determine the type of the user frame, that is, the type of the second data packet, based on the frame type indication field of the user frame in the physical frame. When the terminal 100 determines, based on the value of the frame type indication field, that the second data packet is a broadcast/multicast data packet, the terminal 100 may obtain a broadcast/multicast type indication field of the second data packet.

S607: The terminal 100 determines a broadcast/multicast ID field in the second data packet based on a broadcast/multicast type indication field of the second data packet.

The terminal 100 may determine, based on the broadcast/multicast type indication field of the second data packet, that the second data packet is a broadcast data packet or a multicast data packet. The terminal 100 may further determine the broadcast/multicast ID field based on the broadcast/multicast type indication field.

S608: When a value of the broadcast/multicast ID field is a preset value, the terminal 100 obtains the first data packet based on the second data packet, and parses the first data packet.

The terminal 100 may extract, from the physical frame, a user frame whose value of the broadcast/multicast ID field is the preset value. Herein, the preset value may include, but is not limited to, a broadcast/multicast ID stored in the terminal 100. The terminal 100 may further obtain the first data packet based on the user frame. For details, refer to the embodiment shown in FIG. 4C-1 and FIG. 4C-2. Details are not described herein again. The terminal 100 may parse the first data packet to obtain the broadcast/multicast data. The terminal 100 may further display the broadcast/multicast data obtained by parsing.

Optionally, when sending the broadcast/multicast data to the converged communication platform 24, the server 15 may send broadcast/multicast region information of the broadcast/multicast data to the converged communication platform 24. The converged communication platform 24 may determine, based on the broadcast/multicast region information, a beam for transmitting the broadcast/multicast data. Alternatively, the converged communication platform 24 may send the broadcast/multicast region information to the ground center station 19, and the ground center station 19 may determine, based on the broadcast/multicast region information, a beam for transmitting the broadcast/multicast data. In this case, the satellite network device 200 can broadcast/multicast, through the determined beam, the data in a region indicated by the broadcast/multicast region information. It is to be noted that a coverage region of the beam for transmitting the broadcast/multicast data includes the region indicated by the broadcast/multicast region information.

Optionally, when sending the broadcast/multicast data to the converged communication platform 24, the server 15 may send broadcast/multicast time information of the broadcast/multicast data to the converged communication platform 24. The converged communication platform 24 may determine, based on the broadcast/multicast time information, a time period for sending the broadcast/multicast data to one or more terminals.

It is to be noted that, in addition to the server 15, the converged communication platform 24 may further receive broadcast/multicast data sent by another broadcast/multicast source (for example, an emergency rescue platform 26 or a broadcast/multicast group of the emergency rescue platform 26). It is to be further noted that the converged communication platform 24 and the ground center station 19 may be collectively referred to as the satellite network device 200.

In another possible implementation, the converged communication platform 24 may receive broadcast/multicast data and a broadcast/multicast source identifier that are sent by the server 15. The converged communication platform 24 may encapsulate the received broadcast/multicast data and broadcast/multicast source identifier to obtain the first data packet. The first data packet includes the broadcast/multicast data and a broadcast/multicast source identifier field (indicating a broadcast/multicast source of the broadcast/multicast data). The converged communication platform 24 may send the first data packet and broadcast/multicast indication information to the ground center station 19. The broadcast/multicast indication information may indicate that the first data packet is a broadcast data packet, or the broadcast/multicast indication information may indicate that the first data packet is a multicast data packet. In this case, the ground center station 19 can directly determine the value of the frame type indication field based on the broadcast/multicast indication information. The ground center station 19 may send the second data packet to at least one terminal. Optionally, the first data packet includes the broadcast/multicast data, a broadcast/multicast type indication field, and a broadcast/multicast ID field.

In a possible implementation, the converged communication platform 24 may receive broadcast/multicast data and a broadcast/multicast source identifier that are sent by the server 15. The broadcast/multicast data is broadcast data or multicast data. The converged communication platform 24 may encapsulate the received broadcast/multicast data to obtain a first data packet. The converged communication platform 24 may send the first data packet and the broadcast/multicast source identifier to the ground center station 19. The ground center station 19 may obtain a second data packet based on the first data packet and the broadcast/multicast source identifier. The second data packet includes the first data packet and a first version number. The ground center station 19 may determine the broadcast/multicast type indication field, the broadcast/multicast ID field, and the first version number based on the broadcast/multicast source identifier. The first version number may indicate that the second data packet is a data packet including the broadcast/multicast data (that is, a broadcast/multicast data packet). In addition, the second data packet may further include the broadcast/multicast type indication field and the broadcast/multicast ID field. The ground center station 19 may determine the broadcast/multicast type indication field and the broadcast/multicast ID field based on the broadcast/multicast source identifier. The broadcast/multicast type indication field may indicate whether the second data packet is a broadcast data packet or a multicast data packet. The broadcast/multicast ID field may indicate a broadcast/multicast source of the broadcast/multicast data. The ground center station 19 may send the second data packet to at least one terminal (for example, the terminal 100).

After the terminal 100 determines, based on the first version number in the received second data packet, that a type of the second data packet is a broadcast/multicast data packet, the terminal 100 may parse the second data packet to obtain the broadcast/multicast data. When the second data packet includes the broadcast/multicast type indication field and the broadcast/multicast ID field, the terminal 100 may determine, based on the broadcast/multicast type indication field, that the second data packet is a broadcast data packet or a multicast data packet, that is, determine a length of the broadcast/multicast ID field. The terminal 100 may determine, based on the broadcast/multicast ID field, whether to receive the second data packet. After determining that the second data packet is received, the terminal 100 may parse the second data packet to obtain the broadcast/multicast data. Herein, the second data packet is a physical frame. In this case, the terminal (for example, the terminal 100) in the satellite network can receive the broadcast data or the multicast data.

FIG. 7A is a schematic flowchart of a transmission method according to an embodiment of this application.

As shown in FIG. 7A, the transmission method includes the following steps.
S701: The server 15 sends broadcast/multicast data and a broadcast/multicast source identifier to the converged communication platform 24.
S702: The converged communication platform 24 generates a first data packet based on the broadcast/multicast data.
S703: The converged communication platform 24 sends the first data packet and the broadcast/multicast source identifier to the ground center station 19.

Specifically, for specific descriptions of step S701 to step S703, refer to the embodiment shown in FIG. 5A. Details are not described herein again.

S704: The ground center station 19 obtains a second data packet based on the first data packet and the broadcast/multicast source identifier, where the second data packet includes a first version number and the first data packet, and the first version number indicates a type of the second data packet.

As shown in FIG. 7B, after receiving the first data packet and the broadcast/multicast source identifier, the ground center station 19 may process the first data packet at the MDCP layer and the SLC layer to obtain an SLC PDU (also referred to as a user frame). Specifically, for a specific description of obtaining, by the ground center station 19, the user frame based on the first data packet, refer to the embodiment shown in FIG. 4B-1 and FIG. 4B-2. Details are not described herein again. The frame header information may include, but is not limited to, a frame length field, a broadcast/multicast type indication field, and a broadcast/multicast ID field. For a description of the frame header information, refer to the embodiment shown in FIG. 6B. Details are not described herein again.

The ground center station 19 may determine, based on the broadcast/multicast source identifier, that the user frame is a broadcast/multicast data frame, that is, determine the first version number. The ground center station 19 may splice the user frame including the broadcast/multicast data and another user frame including the broadcast/multicast data, and add the first version number to a header of a plurality of user frames. The first version number may indicate that these user frames are broadcast/multicast frames. It may be understood that, when splicing a user frame (for example, a receipt frame) that does not include the broadcast/multicast data and another user frame that does not include the broadcast/multicast data, the ground center station 19 may add a second version number to a header of a plurality of user frames. The second version number is different from the first version number. In other words, the first version number may be understood as a version number field whose value is a first value, and the second version number may be understood as a version number field whose value is a second value. In this case, the terminal 100 can determine, based on the version number, whether the received frame is a broadcast/multicast frame. Distinguishing based on the version number helps ensure system compatibility, so that a terminal of an earlier version is not affected, and more extended functions can be added to a terminal of a new version.

The ground center station 19 may further add a check code (for example, a cyclic redundancy check (cyclic redundancy check, CRC) code) to a tail of the plurality of user frames, to obtain a physical frame. The ground center station 19 may further perform physical-layer processing (such as encoding, pilot insertion, modulation, and spreading) on the physical frame and add a reserved segment to the physical frame to form encoded data of an S2C-d branch with a physical slot of a fixed length. Then, the ground center station 19 may synchronously send the encoded data of the S2C-d branch and a secondary code of an S2C-p branch to the satellite 21, and the satellite 21 relays the encoded data and the secondary code to one or more terminals (including the terminal 100).

S705: The ground center station 19 sends the second data packet to the terminal 100.

The ground center station 19 may send the second data packet to the terminal 100 based on the operation shown in step S704. The second data packet may be a physical frame.

S706: The terminal 100 determines the type of the second data packet based on the first version number.

The terminal 100 may capture the encoded data of the S2C-d branch based on the secondary code of the S2C-p branch sent by the ground center station 19. After capturing the encoded data of the S2C-d branch, the terminal 100 may perform physical-layer processing (such as despreading, demodulation, pilot removal, and decoding) on the encoded data of the S2C-d branch to obtain a physical frame.

When determining that a version number field of the physical frame is the first version number, the terminal 100 may determine that the physical frame is a physical frame including the broadcast/multicast frame.

S707: The terminal 100 determines a broadcast/multicast ID field in the second data packet based on a broadcast/multicast type indication field in the second data packet.

The terminal 100 may determine the broadcast/multicast ID field of each user frame based on the broadcast/multicast type indication field of each user frame in the second data packet.

S708: When a value of the broadcast/multicast ID field is a preset value, the terminal 100 obtains the first data packet based on the second data packet, and parses the first data packet.

Specifically, when determining that the value of the broadcast/multicast ID field of the user frame is the preset value, the terminal 100 extracts the user frame, and obtains the first data packet based on the user frame. Specifically, for a description of obtaining, by the terminal 100, the first data packet based on the user frame, refer to the embodiment shown in FIG. 4C-1 and FIG. 4C-2. Details are not described herein again.

It is to be noted that the physical frame may include one or more user frames whose values of broadcast/multicast ID fields are the preset value. The terminal 100 may obtain, based on one or more user frames whose values of broadcast/multicast ID fields are the same, the first data packet including the broadcast/multicast data sent by a broadcast/multicast source indicated by the broadcast/multicast ID field.

Optionally, when sending the broadcast/multicast data to the converged communication platform 24, the server 15 may send broadcast/multicast region information of the broadcast/multicast data to the converged communication platform 24. The converged communication platform 24 may determine, based on the broadcast/multicast region information, a beam for transmitting the broadcast/multicast data. Alternatively, the converged communication platform 24 may send the broadcast/multicast region information to the ground center station 19, and the ground center station 19 may determine, based on the broadcast/multicast region information, a beam for transmitting the broadcast/multicast data.

Optionally, when sending the broadcast/multicast data to the converged communication platform 24, the server 15 may send broadcast/multicast time information of the broadcast/multicast data to the converged communication platform 24. The converged communication platform 24 may determine, based on the broadcast/multicast time information, a time period for sending the broadcast/multicast data to one or more terminals.

It is to be noted that, in addition to the server 15, the converged communication platform 24 may further receive broadcast/multicast data sent by another broadcast/multicast source (for example, an emergency rescue platform 26 or a broadcast/multicast group of the emergency rescue platform 26). It is to be further noted that the converged communication platform 24 and the ground center station 19 may be collectively referred to as the satellite network device 200.

In another possible implementation, the converged communication platform 24 may encapsulate the received broadcast/multicast data and broadcast/multicast source identifier to obtain the first data packet. The first data packet includes the broadcast/multicast data and a broadcast/multicast source identifier field (indicating a broadcast/multicast source of the broadcast/multicast data). The converged communication platform 24 may send the first data packet and broadcast/multicast indication information to the ground center station 19. The broadcast/multicast indication information may indicate that the first data packet is a broadcast data packet, or the broadcast/multicast indication information may indicate that the first data packet is a multicast data packet, or the broadcast/multicast indication information may indicate that the first data packet is a broadcast/multicast data packet. The ground center station 19 may directly determine the first version number based on the broadcast/multicast indication information. The second data packet includes the first data packet and a first version number. The ground center station 19 may send the second data packet to at least one terminal. Optionally, the first data packet may include the broadcast/multicast data, a broadcast/multicast type indication field, and a broadcast/multicast ID field. For descriptions of the broadcast/multicast type indication field and the broadcast/multicast ID field, refer to the embodiment shown in FIG. 7B. Details are not described herein again. Optionally, the first data packet may include the broadcast/multicast data and one of a broadcast ID field and a multicast ID field, and the second data packet includes a broadcast/multicast type field.

In a possible implementation, the converged communication platform 24 may receive broadcast/multicast data and a broadcast/multicast source identifier that are sent by the server 15. The broadcast/multicast data is broadcast data or multicast data. The converged communication platform 24 may encapsulate the received broadcast/multicast data to obtain a first data packet. The converged communication platform 24 may send the first data packet and the broadcast/multicast source identifier to the ground center station 19. The ground center station 19 may obtain a second data packet based on the first data packet and the broadcast/multicast source identifier. The second data packet includes the first data packet. The ground center station 19 may determine a first beam based on the broadcast/multicast source identifier. The first beam may be for transmitting the second data packet including the broadcast/multicast data. In addition, the second data packet may further include the broadcast/multicast type indication field and the broadcast/multicast ID field. The ground center station 19 may determine the broadcast/multicast type indication field and the broadcast/multicast ID field based on the broadcast/multicast source identifier. The broadcast/multicast type indication field may indicate whether the second data packet is a broadcast data packet or a multicast data packet. The broadcast/multicast ID field may indicate a broadcast/multicast source of the broadcast/multicast data. The ground center station 19 may send the second data packet to at least one terminal (for example, the terminal 100) through the first beam.

The terminal 100 receives the second data packet through the first beam, and may determine, based on the first beam, that the second data packet is a broadcast/multicast data packet. The terminal 100 may determine, based on the broadcast/multicast type indication field, that the second data packet is a broadcast data packet or a multicast data packet, that is, determine a length of the broadcast/multicast ID field. The terminal 100 may determine, based on the broadcast/multicast ID field, whether to receive the second data packet. After determining that the second data packet is received, the terminal 100 may parse the second data packet to obtain the broadcast/multicast data. Herein, the second data packet is an SLC PDU or a physical frame. In this case, the terminal (for example, the terminal 100) in the satellite network can receive the broadcast data or the multicast data.

FIG. 8A is a schematic flowchart of a transmission method according to an embodiment of this application.

As shown in FIG. 8A, the transmission method includes the following steps.
S801: The server 15 sends broadcast/multicast data and a broadcast/multicast source identifier to the converged communication platform 24.
S802: The converged communication platform 24 generates a first data packet based on the broadcast/multicast data.
S803: The converged communication platform 24 sends the first data packet and the broadcast/multicast source identifier to the ground center station 19.

Specifically, for specific descriptions of step S801 to step S803, refer to the embodiment shown in FIG. 5A. Details are not described herein again.

S804: The ground center station 19 obtains a second data packet based on the first data packet and the broadcast/multicast source identifier.

S805: The ground center station 19 determines a first beam based on the broadcast/multicast source identifier.

As shown in FIG. 7B, after receiving the first data packet and the broadcast/multicast source identifier, the ground center station 19 may process the first data packet at the MDCP layer and the SLC layer to obtain an SLC PDU (also referred to as a user frame). Specifically, for a specific description of obtaining, by the ground center station 19, the user frame based on the first data packet, refer to the embodiment shown in FIG. 4B-1 and FIG. 4B-2. Details are not described herein again. The frame header information may include, but is not limited to, a frame length field, a broadcast/multicast type indication field, and a broadcast/multicast ID field. For a description of the frame header information, refer to the embodiment shown in FIG. 6B. Details are not described herein again. It is to be noted that the user frame obtained by the ground center station 19 is a broadcast/multicast frame.

The ground center station 19 may splice broadcast/multicast frames (also referred to as broadcast/multicast data packets) together, and then add a version number and a check bit to obtain a physical frame. The version number may indicate a version of a communication protocol of a satellite communication system. The satellite network device 200 may perform physical-layer processing (such as encoding, pilot insertion, modulation, and spreading) on the physical frame to obtain encoded data of an S2C-d branch.

The ground center station 19 may further determine a secondary code of an S2C-p branch, that is, determine the first beam, based on the broadcast/multicast source identifier. It is to be noted that, for the ground center station 19, a secondary code for sending a unicast data packet is different from a secondary code for sending a broadcast/multicast data packet. The terminal may determine, based on the secondary code, whether the encoded data of the S2C-d branch includes the broadcast/multicast data packet.

In some embodiments, all beams for sending the broadcast/multicast data packet (also referred to as broadcast/multicast beams) have a same secondary code. For example, when the satellite 21 includes a total of nine beams for sending unicast data (also referred to as unicast beams), the satellite 21 also includes nine broadcast/multicast beams, and the nine broadcast/multicast beams have a same secondary code. In other words, in the nine unicast beams, any unicast beam has a broadcast/multicast beam that has a same coverage region as the unicast beam, and a secondary code of any unicast beam is different from a secondary code of a broadcast/multicast beam.

In some other embodiments, to avoid interference between broadcast/multicast beams that have an overlapping part in a coverage region, a beam for sending unicast data (also referred to as a unicast beam) and a broadcast/multicast beam that have a same coverage region have different secondary codes, and different broadcast/multicast beams also have different secondary codes. For example, when the satellite 21 includes a total of nine unicast beams, the satellite 21 also includes nine broadcast/multicast beams, and the nine broadcast/multicast beams have different secondary codes. In other words, in the nine unicast beams, any unicast beam has a broadcast/multicast beam that has a same coverage region as the unicast beam, and any two broadcast/multicast beams have different secondary codes.

The ground center station 19 may form pilot encoded data, that is, outbound data (also referred to as the first beam), by using the encoded data of the S2C-d branch and the secondary code of the S2C-p branch, and the satellite 21 relays the outbound data to the terminal 100.

S806: The ground center station 19 sends the second data packet to the terminal 100 through the first beam.

The second data packet may be a broadcast/multicast frame or a physical frame including a broadcast/multicast frame. For a description of sending, by the ground center station 19, the second data packet to the terminal 100 through the first beam, refer to the embodiment shown in FIG. 8B. Details are not described herein again.

S807: The terminal 100 determines a type of the second data packet based on the first beam.

The terminal 100 stores secondary codes of a broadcast/multicast beam and a unicast beam. When receiving the outbound data, the terminal 100 may determine, based on the stored secondary code, whether the secondary code of the S2C-p branch in the outbound data is the same as the stored secondary code. When determining that the secondary code in the outbound data is the same as the stored secondary code of the broadcast/multicast beam, the terminal 100 determines that the encoded data includes the broadcast/multicast data packet.

In a possible implementation, the terminal 100 may sequentially determine, according to a sequence of storing the secondary codes, whether the received secondary code is the same as the stored secondary code.

In another possible implementation, the terminal 100 may obtain, based on a current location, a secondary code of a beam whose coverage region intersects the current location, and first determine whether the received secondary code is the same as the stored secondary code. In this case, it can be more quickly determined whether the received outbound data includes unicast data or broadcast/multicast data. For example, the terminal 100 may store a correspondence between secondary codes of different beams and coverage regions, and determine, based on the correspondence, the secondary code of the beam whose coverage region intersects the current location.

Optionally, the terminal 100 may store identifiers or secondary codes of beams received at different locations. The terminal 100 may determine, based on a stored correspondence between a location and an identifier (or a secondary code) of a beam, a secondary code of a beam received at a location closest to the current location. The terminal 100 may first determine whether the received secondary code is the same as the secondary code of the beam received at the location closest to the current location. In this case, it can be more quickly determined whether the received outbound data includes unicast data or broadcast/multicast data.

It is to be noted that the foregoing methods for determining whether the stored secondary code is the same as the received secondary code may be used in combination. For example, when obtaining the secondary code of the beam whose coverage region intersects the current location, the terminal 100 may first determine whether the received secondary code is the same as the obtained secondary code. When the terminal 100 cannot obtain the secondary code of the beam whose coverage region intersects the current location, the terminal 100 may sequentially determine, according to a sequence of storing the secondary codes, whether the received secondary code is the same as the stored secondary code. It is to be further noted that, not limited to the foregoing determining method, whether the secondary codes are the same may be determined by using another determining method. For example, the terminal 100 may randomly extract a stored secondary code and compare the stored secondary code with a received secondary code.

S808: The terminal 100 determines a broadcast/multicast ID field in the second data packet based on a broadcast/multicast type indication field in the second data packet.

When determining, based on the first beam, that the type of the second data packet is a data packet including the broadcast/multicast data, the terminal 100 may obtain a broadcast/multicast type indication field of each user frame in the physical frame, and determine, based on the broadcast/multicast type indication field, that the user frame is a broadcast frame or a multicast frame, that is, determine a broadcast/multicast ID field of the user frame.

S809: When a value of the broadcast/multicast ID field is a preset value, the terminal 100 obtains the first data packet based on the second data packet, and parses the first data packet.

Specifically, for a specific description of step S809, refer to the description of step S708 shown in FIG. 7A. Details are not described herein again.

In another possible implementation, the converged communication platform 24 may encapsulate the received broadcast/multicast data and broadcast/multicast source identifier to obtain the first data packet. The first data packet includes the broadcast/multicast data and a broadcast/multicast source identifier field (indicating a broadcast/multicast source of the broadcast/multicast data). The converged communication platform 24 may send the first data packet and broadcast/multicast indication information to the ground center station 19. The broadcast/multicast indication information may indicate that the first data packet is a broadcast data packet, or the broadcast/multicast indication information may indicate that the first data packet is a multicast data packet. The ground center station 19 may directly determine the first beam based on the broadcast/multicast indication information. The ground center station 19 may send the second data packet to at least one terminal through the first beam. Optionally, the first data packet may include the broadcast/multicast data, a broadcast/multicast type indication field, and a broadcast/multicast ID field. Optionally, the first data packet may include the broadcast/multicast data and one of a broadcast ID field and a multicast ID field, and the second data packet includes a broadcast/multicast type field.

The following describes a satellite communication system 50 according to an embodiment of this application.

As shown in FIG. 9, the satellite communication system 50 may include, but is not limited to, a terminal 100, a satellite 21, a ground center station 19, a converged communication platform 18, a broadcast/multicast service center 17, a server 15, and the like.

The terminal 100 in a satellite network may send a data packet to the server 15 by using the satellite network device 200. For details, refer to the embodiment shown in FIG. 1. Details are not described herein again. The satellite network device 200 may include, but is not limited to, a ground center station 19 and a converged communication platform 18.

The server 15 may send a data packet to the terminal 100 by using the satellite network device 200. The satellite network device 200 may include, but is not limited to, the ground center station 19, the converged communication platform 18, and the broadcast/multicast service center 17.

In a unicast process, the converged communication platform 18 stores data sent by the server 15 to the terminal 100. After receiving a download request from the terminal 100, the satellite network device 200 encapsulates, based on the download request, the data sent by the server 15 to the terminal 100 into a data packet, and sends the data packet to the terminal 100 by using the satellite 21. The download request may indicate the converged communication platform 18 to send, to the terminal 100, the data sent by the server 15 to the terminal 100.

In a broadcast or multicast process, after receiving data from the server 15, the broadcast/multicast service center 17 may send the data to a plurality of terminals in the satellite network by using the satellite 21. The plurality of terminals include the terminal 100.

Optionally, the satellite communication system 50 may further include an emergency rescue platform 26 and an emergency rescue center 27. The satellite network device 200 may send, to the emergency rescue center 27 by using the emergency rescue platform 26, an emergency rescue frame sent by the terminal 100. The emergency rescue center 27 may further send data (for example, rescue information) to a plurality of devices in the satellite network in the broadcast manner by using the emergency rescue platform 26, the satellite network device 200, and the satellite 21.

For a description of the ground center station 19, refer to the embodiment shown in FIG. 1. Details are not described herein again. The converged communication platform 18 may be configured to process unicast data at an application layer. The unicast data is data sent to the terminal by the satellite network device 200 after receiving the download request from the terminal. The broadcast/multicast service center 17 may be configured to process broadcast/multicast data at an application layer, to obtain a first data packet including the broadcast/multicast data. The broadcast/multicast service center 17 may be further configured to prompt the server 15 with a broadcast/multicast group and a broadcast/multicast source identifier corresponding to the broadcast/multicast group. In this case, the broadcast/multicast service center 17 can send broadcast data or multicast data to a plurality of terminals.

FIG. 10 is a diagram of an outbound protocol architecture according to an embodiment of this application.

As shown in FIG. 10, in a broadcast or multicast process, the terminal 100 may be configured to process, at a physical layer, a satellite link control layer, a message data convergence protocol layer, and an application layer, data sent by the satellite network device 200. The broadcast/multicast service center 17 may be configured to process, at an application layer, data to be sent to a terminal (for example, the terminal 100). The ground center station 19 may include one or more devices having a sending function and one or more devices having a receiving function or may include one or more devices having a sending function and a receiving function. This is not limited herein. The ground center station 19 may be configured to process, at a physical layer, a satellite link control layer, and a message data convergence protocol layer, data to be sent to a terminal (for example, the terminal 100). The broadcast/multicast service center 17, the converged communication platform 18, and the ground center station 19 may be collectively referred to as the satellite network device 200.

It is to be noted that when the broadcast/multicast service center 17 is configured to process broadcast/multicast data, for an operation performed by the broadcast/multicast service center 17, refer to the operation performed by the converged communication platform 24 in the embodiments shown in FIG. 4A to FIG. 8B. Details are not described herein again.

In a possible implementation, the converged communication platform 24 or the broadcast/multicast service center 17 may negotiate with at least one terminal (including the terminal 100) to determine a default broadcast/multicast cycle. The default broadcast/multicast cycle is a cycle in which the converged communication platform 24 or the broadcast/multicast service center 17 sends a first data packet including broadcast/multicast data to the at least one terminal.

As shown in FIG. 11, a default broadcast/multicast cycle includes default broadcast/multicast time and a default broadcast/multicast gap. The default broadcast/multicast time is a period of time (for example, 20 seconds) starting from a default broadcast/multicast moment (for example, t1 or t2). Within the default broadcast/multicast time, the converged communication platform 24 or the broadcast/multicast service center 17 may send a first data packet to at least one terminal. The converged communication platform 24 or the broadcast/multicast service center 17 may select some data packets transmitted within the default broadcast/multicast time to send broadcast/multicast data. In other words, within the broadcast/multicast time, the converged communication platform 24 or the broadcast/multicast service center 17 may send a plurality of data packets, and only some of the data packets are broadcast/multicast data packets. A terminal device that expects to receive the broadcast/multicast data receives the data within the broadcast/multicast time.

The default broadcast/multicast gap is a time interval between default broadcast/multicast time in a default broadcast/multicast cycle and default broadcast/multicast time in a next default broadcast/multicast cycle. Within the default broadcast/multicast gap, the converged communication platform 24 or the broadcast/multicast service center 17 does not send the first data packet to the at least one terminal.

Herein, duration of the default broadcast/multicast time is T1, and duration of the default broadcast/multicast gap is T2. The default broadcast/multicast cycle is T1 + T2. The default broadcast/multicast moment may be obtained based on the default broadcast/multicast cycle.

Optionally, within the default broadcast/multicast time, the converged communication platform 24 or the broadcast/multicast service center 17 may send the first data packet to the at least one terminal at intervals of preset time (for example, 5 ms). In this case, the converged communication platform 24 or the broadcast/multicast service center 17 can send the first data packet for a plurality of times, thereby increasing a success rate of the terminal in receiving the first data packet.

Optionally, the default broadcast/multicast cycle may be determined through negotiation between the converged communication platform 24 or the broadcast/multicast service center 17 and another server (for example, the server 15) configured to send the broadcast/multicast data. Alternatively, the default broadcast/multicast cycle may be determined by an operator of the converged communication platform 24 or the broadcast/multicast service center 17. The terminal 100 stores the default broadcast/multicast cycle.

The following describes diagrams of a group of interfaces according to an embodiment of this application.

When the terminal 100 is in a satellite network, the terminal 100 may display broadcast/multicast time, that is, a default broadcast/multicast moment, of a next first data packet. This can facilitate a user to receive the first data packet at the default broadcast/multicast moment, thereby increasing a success rate of receiving the first data packet.

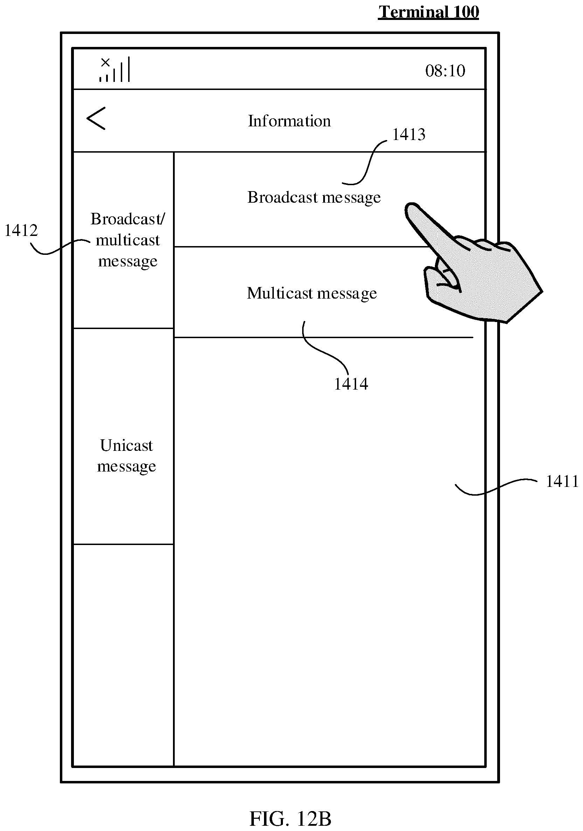

For example, as shown in FIG. 12A, the terminal 100 may display a desktop 1401. The desktop 1401 may include a plurality of application icons, for example, a communication application icon 1403. The communication application icon 1403 may be configured to trigger display of an interface of a communication application (for example, a communication application interface 1411 shown in FIG. 12B). The communication application may be configured to receive/send satellite data. For example, the communication application may be Short Messages, Changlian, or the like. A status bar 1402 may be further displayed at the top of the desktop 1401. A signal prompt icon 1402A may be displayed in the status bar 1402. The signal prompt icon 1402A indicates that the terminal 100 is disconnected from a cellular network. In this case, the terminal 100 is in a state of no cellular signal.

The terminal 100 may receive input by the user for the communication application icon 1403, and display, in response to the input, the communication application interface 1411 shown in FIG. 12B.

As shown in FIG. 12B, the communication application interface 1411 may include, but is not limited to, a broadcast/multicast message option 1412. The broadcast/multicast message option 1412 may be configured to trigger the terminal 100 to display a broadcast message option 1413 and a multicast message option 1414. Herein, the broadcast/multicast message option 1412 is in a selected state. Therefore, the communication application interface 1411 further includes the broadcast message option 1413 and the multicast message option. The broadcast message option 1413 may be configured to trigger the terminal 100 to display a broadcast message interface 1421. The multicast message option may be configured to trigger the terminal 100 to display a multicast message interface. The multicast message interface may be configured to display a multicast source option, and the multicast source option may be configured to trigger the terminal 100 to display broadcast/multicast data sent by the multicast source.

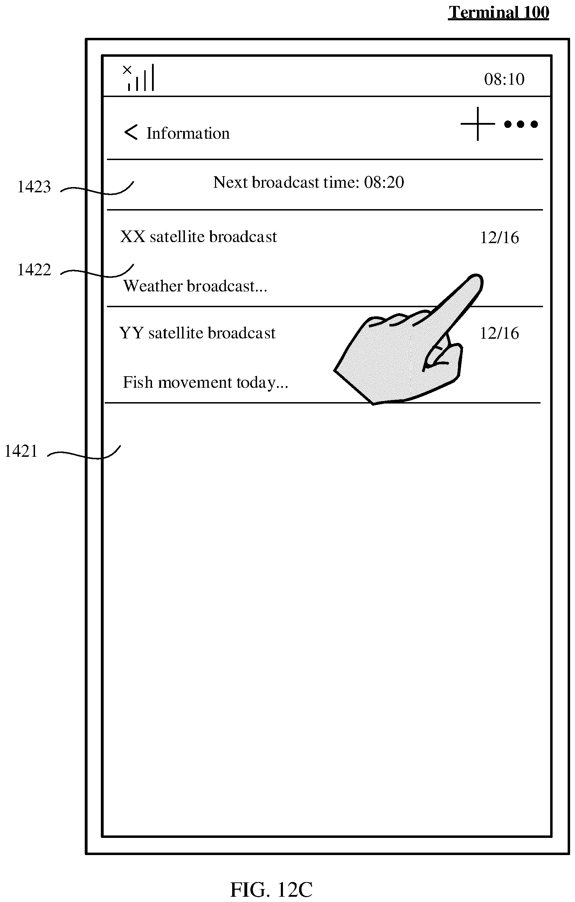

The terminal 100 may receive input by the user for the broadcast message option 1413, and display, in response to the input, the broadcast message interface 1421 shown in FIG. 12C.

As shown in FIG. 12C, the broadcast message interface 1421 may include, but is not limited to, one or more broadcast source options. The one or more broadcast source options may be configured to trigger the terminal 100 to display broadcast data sent by a broadcast source indicated by a broadcast source option. Herein, the one or more broadcast source options include a broadcast source option 1422. The broadcast source option 1422 may be configured to trigger the terminal 100 to display a broadcast details interface 1431. Optionally, the broadcast source option may further display a name of the broadcast source and some broadcast data. For example, the broadcast source option 1422 displays the name of the broadcast source: "XX satellite broadcast", and some broadcast data: "weather broadcast...".

The broadcast message interface 1421 may further include a broadcast/multicast time bar 1423. The broadcast/multicast time bar 1423 may be configured to display sending time of a next broadcast/multicast data packet, that is, reception time of the next broadcast/multicast data packet that can be received by the terminal 100. Broadcast/multicast time displayed on the broadcast/multicast time bar 1423 may be obtained based on a default broadcast/multicast cycle and a current time point. For example, when the default broadcast/multicast cycle is 20 minutes, that is, default broadcast/multicast moments for each day are 00:00, 00:20, 00:40, ..., 23:20, and 23:40, the terminal 100 may deduce, based on the current time point, a latest default broadcast/multicast moment after the current time point, and display a value of the default broadcast/multicast moment in the broadcast/multicast time bar 1423. Herein, the current time displayed by the terminal 100 is 08:10, and the next broadcast time displayed in the broadcast/multicast time bar 1423 of the terminal 100 is: "08:20". In this case, the broadcast/multicast time bar 1423 can prompt the user of time at which a broadcast data packet is received next time. If the user wants to increase a success rate of receiving a next broadcast data packet, the user may perform, at time indicated by the broadcast/multicast time bar 1423, an operation such as satellite alignment of the terminal 100 or moving to a region without an obstacle, to enhance strength of a satellite signal received by the terminal 100, and increase a success rate of the terminal 100 in receiving the broadcast data packet. It is to be noted that a broadcast/multicast moment of the broadcast/multicast data packet sent within the default broadcast/multicast time may be considered as the default broadcast/multicast moment of the default broadcast/multicast time. It is to be further noted that, because more than one broadcast/multicast data packet may be sent within default broadcast/multicast time, sending time of a next broadcast/multicast data packet is a default broadcast/multicast moment of a first data packet within a next default broadcast/multicast cycle.

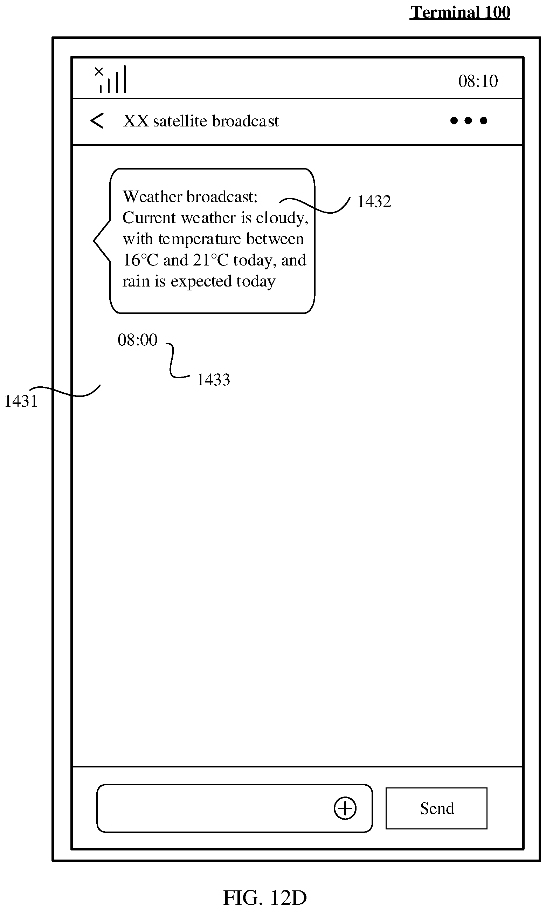

The terminal 100 may receive input by the user for the broadcast source option 1422, and display, in response to the input, the broadcast details interface 1431 shown in FIG. 12D.

As shown in FIG. 12D, the broadcast details interface 1431 may include, but is not limited to, a broadcast message box 1432 and reception time information 1433. The broadcast message box 1432 may be configured to display received broadcast data. The reception time information 1433 may indicate reception time of the broadcast data in the broadcast message box 1432. It may be understood that, as a delay may occur when the terminal 100 receives the satellite data, a time value displayed in the reception time information may be later than the default broadcast/multicast moment. Optionally, the broadcast/multicast time bar 1423 may also be displayed in the broadcast details interface 1431.

Then, the terminal 100 may receive, at sending time of a next broadcast data packet indicated by the broadcast/multicast time bar 1423, the broadcast data packet sent by the converged communication platform 24 or the broadcast/multicast service center 17, and parse the broadcast data packet to obtain broadcast data. Specifically, for detailed descriptions of sending the broadcast data packet by the converged communication platform 24 or the broadcast/multicast service center 17 and receiving and parsing the broadcast data packet by the terminal 100, refer to the foregoing embodiments. Details are not described herein again.

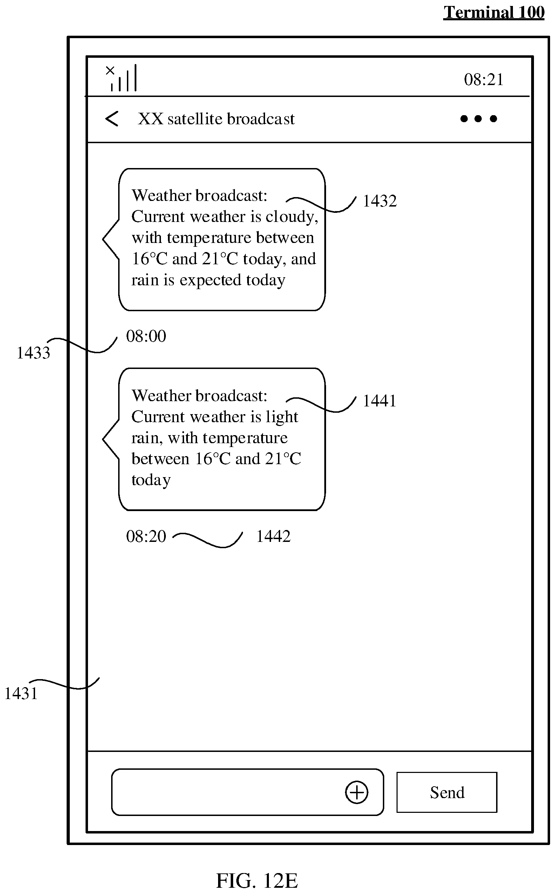

As shown in FIG. 12E, after obtaining the broadcast data through parsing, the terminal 100 may display a broadcast message box 1441 and reception time information 1442. The broadcast message box 1441 may be configured to display the broadcast data received by the terminal 100. The reception time information 1442 may indicate reception time of the broadcast data displayed in the broadcast message box 1441. Herein, a value of the reception time information 1442 is: "08:20".

It may be understood that, after receiving input by the user for returning to the broadcast message interface 1421, the terminal 100 may display the broadcast message interface 1421 in response to the input. Content displayed in the broadcast/multicast time bar 1423 in the broadcast message interface 1421 is updated next broadcast time. Herein, the content displayed in the broadcast/multicast time bar 1423 may be "next broadcast time: 08:40". In this case, the terminal 100 can prompt, by displaying next broadcast time, the user to receive a broadcast data packet.

Optionally, the terminal 100 may display default broadcast/multicast time, that is, display the default broadcast/multicast time T1 shown in FIG. 11. In this case, the user can determine, based on the displayed default broadcast/multicast time, a time range for receiving a broadcast/multicast data packet, and receive the broadcast/multicast data packet within the default broadcast/multicast time starting from the default broadcast/multicast moment.

In a possible implementation, the converged communication platform 24 or the broadcast/multicast service center 17 may add newly added broadcast/multicast time in a default broadcast/multicast cycle, and send, within a time period indicated by the newly added broadcast/multicast time, a first data packet including broadcast/multicast data to at least one terminal. A terminal device that expects to receive the broadcast/multicast data receives the data within the default broadcast/multicast time and the newly added broadcast/multicast time.

For example, as shown in FIG. 13, the default broadcast/multicast cycle may further include the default broadcast/multicast time, the newly added broadcast/multicast time, and a newly added broadcast/multicast gap. The newly added broadcast/multicast time is a time period in which the converged communication platform 24 or the broadcast/multicast service center 17 sends the broadcast/multicast data packet in the default broadcast/multicast cycle other than the default broadcast/multicast time. The newly added broadcast/multicast time is a period of time starting from a newly added broadcast/multicast moment. For example, the converged communication platform 24 or the broadcast/multicast service center 17 sends a broadcast/multicast data packet at a default broadcast/multicast moment t1 of the first default broadcast/multicast cycle, and sends a broadcast/multicast data packet at a newly added broadcast/multicast moment t3 after a newly added broadcast/multicast gap T3. Then, the second default broadcast/multicast cycle is after a newly added broadcast/multicast gap T4. The newly added broadcast/multicast gap T3 may be the same as or different from the newly added broadcast/multicast gap T4.

In another possible implementation, the converged communication platform 24 or the broadcast/multicast service center 17 may increase the default broadcast/multicast time and increase time for sending the broadcast/multicast data. For example, the converged communication platform 24 or the broadcast/multicast service center 17 may increase the default broadcast/multicast time in the first default broadcast/multicast cycle from T1 to T1', and reduce a default broadcast/multicast gap T2 to T2', where T1' + T2' = T1 + T2.

In some application scenarios, when the converged communication platform 24 or the broadcast/multicast service center 17 receives emergency broadcast/multicast data sent by another server, for example, a disaster warning message sent by the emergency rescue platform 26, the converged communication platform 24 or the broadcast/multicast service center 17 may add newly added broadcast/multicast time in a default broadcast/multicast cycle, and send the emergency broadcast/multicast data to at least one terminal at the newly added broadcast/multicast time; or increase broadcast/multicast time in each cycle, and send the emergency broadcast/multicast data to at least one terminal within the increased broadcast/multicast time.

In some other application scenarios, when receiving broadcast/multicast data sent by another server (for example, the server 15), the converged communication platform 24 or the broadcast/multicast service center 17 may further receive broadcast/multicast time information sent by another server. The broadcast/multicast time information may indicate the converged communication platform 24 or the broadcast/multicast service center 17 to send the broadcast/multicast data at time indicated by the broadcast/multicast time information. Herein, a time point indicated by the broadcast/multicast time information is a newly added broadcast/multicast moment of newly added broadcast/multicast time, or the time indicated by the broadcast/multicast time information is an extended broadcast/multicast time length.

Further, for the terminal 100 to receive the first data packet at the newly added broadcast/multicast time, the converged communication platform 24 or the broadcast/multicast service center 17 may add a broadcast/multicast time indication field to the first data packet. The broadcast/multicast time indication field may indicate sending time of a next or subsequent first data packet, or may indicate a sending time range of a next or subsequent first data packet. The sending time of the next or subsequent first data packet is a next newly added broadcast/multicast moment or default broadcast/multicast moment. The sending time range of the next or subsequent first data packet is default broadcast/multicast time in a current broadcast/multicast cycle, or newly added broadcast/multicast time in a current default broadcast/multicast cycle, or default broadcast/multicast time in a next default broadcast/multicast cycle.

As shown in FIG. 14, the converged communication platform 24 or the broadcast/multicast service center 17 may obtain the first data packet based on the received broadcast/multicast data. The first data packet includes packet header information. The packet header information includes a broadcast/multicast time indication field. The broadcast/multicast time indication field may indicate sending time of a next or subsequent first data packet, that is, a next newly added broadcast/multicast moment or default broadcast/multicast moment.

For example, a length of the broadcast/multicast time indication field may be 2 bits. When the broadcast/multicast time indication field is 00, it may be indicated that a next broadcast/multicast moment is 1 minute after a previous broadcast/multicast start moment. When the broadcast/multicast time indication field is 01, it may be indicated that a next broadcast/multicast moment is 5 minutes after a previous broadcast/multicast start moment. When the broadcast/multicast time indication field is 10, it may be indicated that a next broadcast/multicast moment is 10 minutes after a previous broadcast/multicast start moment. When the broadcast/multicast time indication field is 11, it may be indicated that a next broadcast/multicast moment is 20 minutes after a previous broadcast/multicast start moment. 20 minutes may be used as a default interval. By adjusting the broadcast/multicast time indication field, a new broadcast/multicast moment may be added, and broadcast/multicast time may be adjusted. The broadcast/multicast start moment includes a default broadcast/multicast moment and a newly added broadcast/multicast moment.

In another example, a length of the broadcast/multicast time indication field may be 2 bits. When the broadcast/multicast time indication field is 00, it may be indicated that a next broadcast/multicast time length is 30s. When the broadcast/multicast time indication field is 01, it may be indicated that a next broadcast/multicast time length is 1 minute. When the broadcast/multicast time indication field is 10, it may be indicated that a next broadcast/multicast time length is 2 minutes. When the broadcast/multicast time indication field is 11, it may be indicated that a next broadcast/multicast time length is 4 minutes. 30s may be default. Broadcast/multicast time may be increased by adjusting the broadcast/multicast time indication field.

In a possible implementation, the converged communication platform 24 or the broadcast/multicast service center 17 may adjust, based on a data volume of broadcast/multicast data or a current time point, newly added broadcast/multicast time for sending a broadcast/multicast data packet. For example, when a size of the broadcast/multicast data received by the converged communication platform 24 or the broadcast/multicast service center 17 is greater than a first threshold (for example, 1 kB), the broadcast/multicast data packet may be sent at intervals of one minute. In this case, a value of the broadcast/multicast time indication field can be 00. In another example, the converged communication platform 24 or the broadcast/multicast service center 17 may divide a day into a plurality of time periods. For example, a first time period is 9:00-12:00 and 14:00-21:00, and within the first time period, the broadcast/multicast data packet may be sent at intervals of one minute; a second time period is 7:00-9:00 and 21:00-22:00, and within the second time period, the broadcast/multicast data packet may be sent at intervals of five minutes; and so on.

In a possible implementation, the converged communication platform 24 or the broadcast/multicast service center 17 may determine, based on broadcast/multicast time sent by another server, time for sending a next broadcast/multicast data packet. Specifically, after the converged communication platform 24 or the broadcast/multicast service center 17 receives broadcast/multicast data 1 that is sent by another server and whose broadcast/multicast time is after N minutes, when the converged communication platform 24 or the broadcast/multicast service center 17 has sent, to the terminal 100, a broadcast/multicast data packet 1 indicating that sending time of a broadcast/multicast data packet 2 is less than N minutes, the converged communication platform 24 or the broadcast/multicast service center 17 may set a value of a broadcast/multicast time indication field in the broadcast/multicast data packet 2 to indicate a value of sending a broadcast/multicast data packet 3 after less than N minutes, and so on, until sending time of a next broadcast/multicast data packet indicated by the broadcast/multicast data packet sent by the converged communication platform 24 or the broadcast/multicast service center 17 is N minutes after the broadcast/multicast data 1 is received. After the converged communication platform 24 or the broadcast/multicast service center 17 receives broadcast/multicast data 1 that is sent by another server and whose broadcast/multicast time is after N minutes, when the converged communication platform 24 or the broadcast/multicast service center 17 has sent, to the terminal 100, a broadcast/multicast data packet 1 indicating that sending time of a broadcast/multicast data packet 2 is greater than or equal to N minutes, the converged communication platform 24 or the broadcast/multicast service center 17 may send the broadcast/multicast data 1 and broadcast/multicast data 2 in the broadcast/multicast data packet 2 together to the terminal 100. When the converged communication platform 24 or the broadcast/multicast service center 17 has not sent, to the terminal 100, the broadcast/multicast data packet 1 indicating the sending time of the broadcast/multicast data packet 2, the converged communication platform 24 or the broadcast/multicast service center 17 may determine a value of a broadcast/multicast time indication field of the broadcast/multicast data packet 1 as a value that indicates that the sending time of the broadcast/multicast data packet 2 is after P minutes. P is time that may be set by the converged communication platform 24 or the broadcast/multicast service center 17 and at which sending time of a next broadcast/multicast data packet is closest to N minutes.

Optionally, a length of the broadcast/multicast time indication field may be a rounded-up base-2 logarithm of a value (unit: minute) of duration of a default broadcast/multicast cycle. In this case, the broadcast/multicast time indication field can indicate any minute in a broadcast/multicast cycle. For example, when the duration of the default broadcast/multicast cycle is 8 minutes, the length of the broadcast/multicast time indication field is 3 bits. When the broadcast/multicast time indication field is 000, it may be indicated that a next broadcast/multicast moment is 1 minute after a broadcast/multicast moment of a previous data packet. When the broadcast/multicast time indication field is 001, it may be indicated that a next broadcast/multicast moment is 2 minutes after a broadcast/multicast moment of a previous data packet, and so on.

In this case, the converged communication platform 24 or the broadcast/multicast service center 17 can flexibly set broadcast/multicast time. In addition, when the terminal 100 does not receive the broadcast/multicast data packet sent at the newly added broadcast/multicast time, the terminal 100 may also determine sending time of a next broadcast/multicast data packet based on the data packet sent at the default broadcast/multicast time.

Optionally, the converged communication platform 24 or the broadcast/multicast service center 17 may send a first data packet including broadcast/multicast data to at least one terminal. The first data packet includes a broadcast/multicast time indication field that indicates sending time of a next first data packet.

The following describes diagrams of a group of interfaces according to an embodiment of this application.

After receiving a broadcast/multicast data packet sent by the converged communication platform 24 or the broadcast/multicast service center 17, the terminal 100 may determine, based on a value of a broadcast/multicast time indication field in the broadcast/multicast data packet, time at which the converged communication platform 24 or the broadcast/multicast service center 17 sends a next broadcast/multicast data packet. The terminal 100 may display the time at which the converged communication platform 24 or the broadcast/multicast service center 17 sends the next broadcast/multicast data packet. In this case, a success rate of the terminal 100 in receiving the broadcast/multicast data packet can be increased.

For example, when the terminal 100 receives a data packet including the broadcast data in the broadcast message box 1441 shown in FIG. 12E, the terminal 100 may determine, based on a value of a broadcast/multicast time indication field in the data packet, that time at which the converged communication platform 24 or the broadcast/multicast service center 17 sends a next broadcast/multicast data packet is after 10 minutes.

When the terminal 100 receives return input by the user for the broadcast details interface 1431 shown in FIG. 12E, the terminal 100 may display a broadcast message interface 1451 shown in FIG. 15A.

As shown in FIG. 15A, the broadcast message interface 1451 includes a broadcast source option 1452 and a broadcast/multicast time bar 1453. The broadcast/multicast time bar 1453 may be configured to display sending time of a next broadcast/multicast data packet determined by the terminal 100, that is, reception time of the next broadcast/multicast data packet that can be received by the terminal 100. Broadcast/multicast time displayed on the broadcast/multicast time bar 1423 may be obtained based on a broadcast/multicast time indication field, a default broadcast/multicast cycle, and a current time point. For example, the terminal 100 may determine a sending moment of a next data packet based on the broadcast/multicast time indication field, and display the sending moment on the broadcast/multicast time bar. When the terminal 100 does not receive a data packet within a previous default broadcast/multicast cycle (for example, the terminal 100 is in a satellite network only after a default broadcast/multicast moment, and the terminal 100 cannot determine a newly added broadcast/multicast moment of the default broadcast/multicast cycle), the terminal 100 may obtain a next default broadcast/multicast moment based on the default broadcast/multicast cycle and a current time point, and display the next default broadcast/multicast moment on the broadcast/multicast time bar. Herein, the terminal 100 has determined, based on a broadcast/multicast time indication field of a lately received broadcast/multicast data packet, that a next broadcast/multicast data packet is to be sent after 10 minutes. The terminal 100 may display next broadcast time "08:30" on the broadcast/multicast time bar 1453. For descriptions of the broadcast message interface 1451 and the broadcast source option 1452, refer to the embodiment shown in FIG. 12C. Details are not described herein again.

The terminal 100 may receive input by the user for the broadcast source option 1452, and display, in response to the input, the broadcast details interface 1431 shown in FIG. 12E.

Then, the terminal 100 may receive, at sending time of a next broadcast data packet indicated by the broadcast/multicast time bar 1453, the broadcast data packet sent by the converged communication platform 24 or the broadcast/multicast service center 17, and parse the broadcast data packet to obtain broadcast data. Specifically, for detailed descriptions of sending the broadcast data packet by the converged communication platform 24 or the broadcast/multicast service center 17 and receiving and parsing the broadcast data packet by the terminal 100, refer to the foregoing embodiments. Details are not described herein again.

As shown in FIG. 15B, after obtaining the broadcast data through parsing, the terminal 100 may display a broadcast message box 1461 and reception time information 1462. The broadcast message box 1461 may be configured to display the broadcast data received by the terminal 100. The reception time information 1462 may indicate reception time of the broadcast data displayed in the broadcast message box 1461. Herein, a value of the reception time information 1462 is: "08:30".

In a possible implementation, the converged communication platform 24 or the broadcast/multicast service center 17 may set a modification cycle. Within a modification cycle, a time interval for the converged communication platform 24 or the broadcast/multicast service center 17 to send a broadcast/multicast data packet remains unchanged. In this case, when receiving any data packet, the terminal 100 can determine, based on a broadcast/multicast time indication field in the data packet, broadcast/multicast time of a data packet remaining within the modification cycle. In other words, a first data packet includes information that indicates sending time of next M first data packets.

For example, as shown in FIG. 16, a modification cycle may include one or more default broadcast/multicast cycles. In a modification cycle, time intervals between broadcast/multicast moments (which may include a default broadcast/multicast moment and a newly added broadcast/multicast moment) are the same. For example, when a modification cycle includes two default broadcast/multicast cycles, the converged communication platform 24 or the broadcast/multicast service center 17 sends a broadcast/multicast data packet at a default broadcast/multicast moment t1 of the first default broadcast/multicast cycle of the first modification cycle, and sends a broadcast/multicast data packet at a newly added broadcast/multicast moment t4 after a newly added broadcast/multicast gap T5. Then, the second default broadcast/multicast cycle is after another newly added broadcast/multicast gap T5. The broadcast/multicast gaps of the two default broadcast/multicast cycles in the modification cycle are the same, and are all T5. Broadcast/multicast gaps of two default broadcast/multicast cycles in the second modification cycle are the same, and are all T6. It is to be noted that the broadcast/multicast gaps of the first modification cycle and the broadcast/multicast gaps of the second modification cycle are irrelevant, and may be different (for example, FIG. 16) or may be the same. A broadcast/multicast mode (a fixed broadcasting time and broadcasting time intervals) in a modification cycle does not change, so that the terminal can learn a broadcast/multicast mode in a current modification cycle as long as the terminal receives a broadcast/multicast data packet carrying time information within the modification cycle, thereby quickly, accurately, and energy-savingly receiving the broadcast/multicast data packet.

In a possible implementation, the terminal 100 may send a broadcast/multicast time request to the converged communication platform 24 or the broadcast/multicast service center 17. The broadcast/multicast time request may indicate the converged communication platform 24 or the broadcast/multicast service center 17 to send a broadcast/multicast time response to the terminal 100. The broadcast/multicast time response may include sending time information of a first data packet. The sending time information may indicate time at which the converged communication platform 24 or the broadcast/multicast service center 17 sends the first data packet. In this case, the terminal 100 can receive the first data packet within a time period indicated by the broadcast/multicast time response, thereby increasing a reception success rate.

In some embodiments, the terminal 100 may generate a broadcast/multicast time request. The broadcast/multicast time request includes frame header information. The frame header information may include, but is not limited to, a frame type indication field. The frame type indication field may identify the broadcast/multicast time request at the SLC layer. After receiving the data packet sent by the terminal 100, the ground center station 19 may determine, at the SLC layer based on the frame type indication field, that the data packet includes the broadcast/multicast time request. The ground center station 19 may send the broadcast/multicast time request to the converged communication platform 24 or the broadcast/multicast service center 17. After receiving the broadcast/multicast time request, the converged communication platform 24 or the broadcast/multicast service center 17 may generate a broadcast/multicast time response based on time at which the broadcast/multicast data packet is sent, and send the broadcast/multicast time response to the terminal 100 by using the ground center station 19.

As shown in FIG. 17, that the terminal 100 queries sending time of a first data packet includes the following steps.

S1701: The terminal 100 sends a broadcast/multicast time request to the ground center station 19.

The terminal 100 may use a specific character string (for example, 0) as original data, and encapsulate the original data to obtain the broadcast/multicast time request; or may use multicast source ID information or broadcast source ID information as original data, and encapsulate the original data to obtain the broadcast/multicast time request. At the AP layer, the specific character string, the multicast source ID, or the broadcast source ID may indicate sending time at which the converged communication platform 24 or the broadcast/multicast service center 17 sends the first data packet to the terminal 100. Alternatively, the terminal 100 does not need to perform data encapsulation at the AP layer, or carries an authentication code only at the AP layer. The authentication code is generated based on agreed data content.

The broadcast/multicast time request further includes a frame type (or an SLC PDU type) indication field that indicates that the data packet is for querying the sending time of the first data packet. The frame type field may identify a type of a user frame. For example, a length of the frame type field may be 3 bits. When a value of the frame type field is 000, it may be identified that the current user frame is a message information PDU (common data frame). The message information PDU (common data frame) may be for transmitting unicast data, and may be further for requesting, from the converged communication platform 24 or the broadcast/multicast service center 17, a satellite message sent by another terminal or server to the terminal 100. When a value of the frame type field is 001, it may be identified that the current user frame is an ACK report PDU (ACK frame). When a value of the frame type field is 010, it may be identified that the current user frame is an application-layer receipt PDU (receipt frame). When a value of the frame type field is 011, it may be identified that the current user frame is a location report PDU (location report frame). When a value of the frame type field is 100, it may be identified that the current user frame is an emergency rescue PDU (emergency rescue frame). Currently, a broadcast/multicast time request PDU may be identified by using a field different from an existing frame type indication. For example, when the frame type field is 101, it may be identified that the current user frame is a broadcast/multicast time request frame, and the broadcast/multicast time request frame may be for querying sending time of a broadcast/multicast data packet from the broadcast/multicast service center 17 or the converged communication platform 24. Alternatively, a destination to which the data packet needs to be sent is indicated by using an existing frame type indication field. For example, when the frame type field is 110, it may be indicated that the data packet needs to be sent to the broadcast/multicast service center 17 instead of the converged communication platform 18.

The broadcast/multicast time request may further include user ID information that indicates a terminal that sends the broadcast/multicast time request. The ground center station 19 may recognize information about a requesting user based on the user ID information.

The broadcast/multicast time request may further include multicast source ID information or broadcast source ID information, or a bitmap, which indicates whether the terminal 100 requests a plurality of pieces of subscribed broadcast or multicast information, for example, included in a data packet at the SLC layer.

After receiving input by the user for querying the broadcast/multicast time of the first data packet, the terminal 100 may generate and send the broadcast/multicast time request to the ground center station 19 in response to the input. Alternatively, the terminal 100 may generate and send the broadcast/multicast time request to the ground center station 19 at an interval of preset time (for example, 30 minutes). This is not limited in this application.

The terminal 100 may forward the broadcast/multicast time request to the ground center station 19 by using the satellite 21.

S1702: The ground center station 19 sends the broadcast/multicast time request to the broadcast/multicast service center 17 or the converged communication platform 24.

Specifically, after the ground center station 19 receives a data packet sent by the terminal 100, when a frame type of the data packet is a broadcast/multicast time request frame, the ground center station 19 may parse the data packet, and send a message to the broadcast/multicast service center 17 or the converged communication platform 24.

In a possible implementation, in a case that the broadcast/multicast service center 17 bears a broadcast/multicast service, after the ground center station 19 receives a data packet sent by the terminal 100, when a frame type of the data packet is a broadcast/multicast time request frame, the ground center station 19 may send a broadcast/multicast time information request to the broadcast/multicast service center 17 based on the frame type of the data packet. Content of the request includes broadcast source ID information or multicast source ID information requested by the terminal, which is for requesting the broadcast/multicast service center 17 to send broadcast/multicast time information for a specific broadcast source or multicast source. In another possible implementation, in a case that the broadcast/multicast service center 17 bears a broadcast/multicast service, after the ground center station 19 receives a data packet sent by the terminal 100, when a frame type of the data packet indicates that the data packet is sent to the broadcast/multicast service center 17, the ground center station 19 may send the data packet to the broadcast/multicast service center 17 based on the frame type of the data packet. The data packet includes broadcast source ID information or multicast source ID information requested by the terminal, which is for requesting the broadcast/multicast service center 17 to send broadcast/multicast time information for a specific broadcast source or multicast source.

In another possible implementation, in a case that the converged communication platform 24 bears a broadcast/multicast service, after the ground center station 19 receives a data packet sent by the terminal 100, when a frame type of the data packet is a broadcast/multicast time request frame, the ground center station 19 may send a broadcast/multicast time information request to the converged communication platform 24 based on the frame type of the data packet. Content of the request includes broadcast source ID information or multicast source ID information requested by the terminal, which is for requesting the converged communication platform 24 to send broadcast/multicast time information for a specific broadcast source or multicast source.

S1703: The converged communication platform 24 or the broadcast/multicast service center 17 generates a broadcast/multicast time response, where the broadcast/multicast time response includes sending time information of the first data packet.

After receiving a specific character string for querying the sending time of the broadcast/multicast data packet or a query message sent by the ground center station 19, the converged communication platform 24 or the broadcast/multicast service center 17 generates the broadcast/multicast time response. The broadcast/multicast time response includes the sending time information of sending the first data packet by the converged communication platform 24 or the broadcast/multicast service center 17. Specifically, the converged communication platform 24 or the broadcast/multicast service center 17 may use the sending time information of the first data packet (for example, a broadcast/multicast start moment of the first data packet) as original data, and perform AP-layer processing on the original data. An AP-layer data packet obtained through processing is sent to the ground center station 19. For a description of obtaining, by the converged communication platform 24 or the broadcast/multicast service center 17, the AP-layer data packet including the sending time information of the first data packet, refer to the embodiment shown in FIG. 4B-1 and FIG. 4B-2. Details are not described herein again.

S1704: The converged communication platform 24 or the broadcast/multicast service center 17 sends the broadcast/multicast time response to the ground center station 19.

Specifically, the converged communication platform 24 or the broadcast/multicast service center 17 may send, to the ground center station 19, the data packet including the sending time information of the first data packet. The ground center station 19 receives the sending time information.

S 1705: The ground center station 19 sends the broadcast/multicast time response to the terminal 100.

Specifically, after receiving the data packet that is sent by the converged communication platform 24 or the broadcast/multicast service center 17 and that includes the sending time information of the first data packet, the ground center station 19 may obtain, based on the data packet, a broadcast/multicast response message to be sent to the terminal 100, and may determine, based on the obtained data packet, a frame type to be sent.

If the frame type is sent to the requesting user in a unicast manner, the user frame type may be indicated by using a new frame type, for example, a value of a new frame type field is introduced, or may be a common data frame. If the frame type is sent to a plurality of users in a broadcast or multicast manner, the user frame type may be a multicast or broadcast frame. For the frame type indication, refer to the embodiments shown in FIG. 6B, FIG. 7B, and FIG. 8B. Details are not described herein again. A frame type indication field of the user frame may indicate that the user frame includes sending time of a broadcast/multicast data packet. For example, a length of the frame type field may be 3 bits. When a value of the frame type field is 000, it may be identified that the current user frame is a general data frame. When a value of the frame type field is 001, it may be identified that the current user frame is an ACK frame. When a value of the frame type field is 010, it may be identified that the current user frame is a receipt frame. When a value of the frame type field is 011, it may be identified that the current user frame is a broadcast frame. When a value of the frame type field is 100, it may be identified that the current user frame is a multicast frame. When a value of the frame type field is 101, it may be identified that the current user frame is a broadcast/multicast time response frame, and the broadcast/multicast time response frame may be for sending the sending time of the broadcast/multicast data packet to the terminal 100. For a description of obtaining the broadcast/multicast time response by the ground center station 19, refer to the embodiment shown in FIG. 4B-1 and FIG. 4B-2. Details are not described herein again.

The ground center station 19 may determine, based on a user ID or a reception beam of broadcast/multicast time request information that is provided by the converged communication platform 24 or the broadcast/multicast service center 17 or that is recorded by the ground center station 19, user ID information or a sending beam of a broadcast/multicast response that is sent by the ground center station 19 to the terminal 100.

For example, if a user ID of the broadcast/multicast time request sent in S1701 is 13100000000, after the ground center station 19 obtains the broadcast/multicast time information from the converged communication platform 24 or the broadcast/multicast service center 17, a user ID carried in the message of the broadcast/multicast time response sent in S1705 is 13100000000. In this case, as the user frame is a unicast frame separately sent to the requesting user, a value of the frame type field of the user frame is 00, which indicates common data information.

In another example, if a user ID of the broadcast/multicast time request sent in S1701 is 13100000000, and requested broadcast/multicast source information is a broadcast source of 110, after the ground center station 19 obtains the broadcast/multicast time information from the converged communication platform 24 or the broadcast/multicast service center 17, a broadcast/multicast ID carried in the message of the broadcast/multicast time response sent in S1705 is 110. In this case, as the user frame is a broadcast frame sent to the requesting user in a broadcast form, a value of the frame type field of the user frame can be 11, which indicates a multicast/broadcast message. When receiving the message, another terminal that does not send the request message may also quickly learn broadcast/multicast mode information of the current broadcast source 110.

In another example, if the user who sends the broadcast/multicast time request in S 1701 sends the request information through a beam 1, after the ground center station 19 obtains the broadcast/multicast time information from the converged communication platform 24 or the broadcast/multicast service center 17, the message of the broadcast/multicast time response sent in S 1705 has to be delivered through the beam 1.

In the terminal request manner, the converged communication platform 24 or the broadcast/multicast service center may send the broadcast/multicast time information at non-broadcast/multicast time. Therefore, for the terminal to obtain the broadcast/multicast time information more quickly, the terminal 100 may be guided to receive broadcast information once when the user triggers receiving of broadcast. If the broadcast information is not received, the user is then indicated to receive the broadcast information within the default broadcast/multicast time or the requested broadcast/multicast time information.

Optionally, after receiving the broadcast/multicast time request sent by the terminal 100, the ground center station 19 may obtain the sending time information of the first data packet from the converged communication platform 24 or the broadcast/multicast service center 17, use the information as an MDCP SDU, encapsulate the information to obtain outbound data, and send the outbound data to the terminal 100.

It is to be noted that the ground center station 19 may send the sending time information of the first data packet to the terminal 100 as broadcast/multicast data. The broadcast/multicast time response includes a broadcast/multicast ID field, and the broadcast/multicast ID field indicates a broadcast/multicast source. In this case, another terminal other than the terminal 100 can also receive the time information. Alternatively, the ground center station 19 may send the sending time information of the first data packet to the terminal 100 as unicast data. The broadcast/multicast time response includes a user ID field, and the user ID field indicates the terminal 100.

S1706: The terminal 100 determines sending time of the first data packet based on the broadcast/multicast time response.

After the terminal 100 receives a data packet sent by the satellite network device 200, when determining, at the SLC layer based on the frame type indication field, that the data packet is a broadcast/multicast time response frame, the terminal 100 may obtain the sending time of the first data packet at the AP layer.

S1707: The terminal 100 displays the sending time of the first data packet.

The terminal 100 may display the obtained sending time of the first data packet.

S1708: The converged communication platform 24 or the broadcast/multicast service center 17 sends the first data packet to the terminal 100 at time indicated by the sending time information.

Specifically, for a detailed description of sending, by the converged communication platform 24 or the broadcast/multicast service center 17, the first data packet to the terminal 100 at the time indicated by the sending time information, refer to the foregoing embodiment. Details are not described herein again.

S1709: The terminal 100 receives the first data packet at the sending time.

The terminal 100 receives the first data packet at the time indicated by the broadcast/multicast time response. Specifically, for a description of receiving the first data packet by the terminal 100, refer to the foregoing embodiment. Details are not described herein again.

In some other embodiments, the terminal 100 may generate a broadcast/multicast time request. The broadcast/multicast time request includes packet header information. The packet header information may include, but is not limited to, a broadcast/multicast time request indication field. The broadcast/multicast time request indication field may identify the broadcast/multicast time request at the AP layer. After receiving the broadcast/multicast time request, the converged communication platform 24 may determine, at the AP layer, that the data packet sent by the terminal 100 is for querying sending time of a first data packet. The converged communication platform 24 may generate a broadcast/multicast time response based on time at which the broadcast/multicast data packet is sent, and send the broadcast/multicast time response to the terminal 100 by using the ground center station 19.

In some other embodiments, the terminal 100 may generate a broadcast/multicast time request. The broadcast/multicast time request includes packet header information. The packet header information may include, but is not limited to, a broadcast/multicast time request indication field. The broadcast/multicast time request indication field may identify the broadcast/multicast time request at the AP layer. After receiving the data packet sent by the terminal 100, the converged communication platform 18 may determine, at the AP layer, that the data packet sent by the terminal 100 is for querying sending time of a first data packet. The converged communication platform 18 may send the broadcast/multicast time request to the broadcast/multicast service center 17. The broadcast/multicast service center 17 may generate a broadcast/multicast time response based on time at which the broadcast/multicast data packet is sent, and send the broadcast/multicast time response to the terminal 100 by using the ground center station 19.

As shown in FIG. 18, that the terminal 100 queries sending time of a first data packet includes the following steps.

S 1801: The terminal 100 sends a broadcast/multicast time request to the ground center station 19.

The terminal 100 may generate a data packet including a broadcast/multicast time request indication field, that is, the broadcast/multicast time request. The broadcast/multicast time request indication field is located in packet header information, and a value of the broadcast/multicast time request indication field is determined by the terminal 100 at the AP layer.

The broadcast/multicast time request indication field may indicate whether the broadcast/multicast service center 17 sends sending time of a first data packet to the terminal 100. For example, a length of the broadcast/multicast time request indication field may be 1 bit. When a value of the broadcast/multicast time request indication field is 0, it indicates that the terminal 100 does not query the sending time of the first data packet. When a value of the broadcast/multicast time request indication field is 1, it may be indicated that the broadcast/multicast service center 17 sends the sending time of the first data packet to the terminal 100.

After receiving input by the user for querying the broadcast/multicast time of the first data packet, the terminal 100 may generate and send the broadcast/multicast time request to the ground center station 19 in response to the input. Alternatively, the terminal 100 may generate and send the broadcast/multicast time request to the ground center station 19 at an interval of preset time (for example, 30 minutes). This is not limited in this application.

The terminal 100 may relay the broadcast/multicast time request to the ground center station 19 by using the satellite 21.

S1802: The ground center station 19 sends the broadcast/multicast time request to the converged communication platform 18.

Specifically, after receiving the data packet sent by the terminal 100, the ground center station 19 processes the data packet at the PHY layer, the SLC layer, and the MDCP layer, and then uploads the data packet to the converged communication platform 18.

S1803: The converged communication platform 18 sends the broadcast/multicast time request to the broadcast/multicast service center 17.

The converged communication platform 18 may determine, based on the broadcast/multicast time request indication field in the broadcast/multicast time request, whether to send the broadcast/multicast time request to the broadcast/multicast service center 17. When determining, based on the broadcast/multicast time request indication field in the broadcast/multicast time request, that the terminal 100 queries the sending time of the first data packet, the converged communication platform 18 sends the broadcast/multicast time request to the broadcast/multicast service center 17.

Optionally, when receiving the broadcast/multicast time request sent by the terminal 100 and determining, based on the broadcast/multicast time request indication field in the broadcast/multicast time request, that the terminal 100 queries the sending time of the first data packet, the converged communication platform 18 may obtain sending time information of the first data packet from the broadcast/multicast service center 17, encapsulate the sending time information to obtain an AP-layer data packet, and send the data packet to the terminal 100.

S1804: The broadcast/multicast service center 17 generates a broadcast/multicast time response including sending time information of a first data packet.

After receiving the broadcast/multicast time request, the broadcast/multicast service center 17 may generate the broadcast/multicast time response. The broadcast/multicast time response includes the sending time information of the first data packet. The broadcast/multicast time response further includes a broadcast/multicast time response indication field. The broadcast/multicast time response indication field may indicate that the data packet generated by the broadcast/multicast service center 17 includes the sending time information of the first data packet. For example, a length of the broadcast/multicast time response indication field may be 1 bit. When a value of the broadcast/multicast time response indication field is 0, it indicates that the data packet does not include the sending time of the first data packet. When a value of the broadcast/multicast time response indication field is 1, it indicates that the data packet includes the sending time of the first data packet.

Specifically, the broadcast/multicast service center 17 may determine, based on the broadcast/multicast time request indication field in the broadcast/multicast time request, whether to generate the broadcast/multicast time response. The broadcast/multicast service center 17 generates the broadcast/multicast time response when determining, based on the broadcast/multicast time request indication field in the broadcast/multicast time request, that the terminal 100 queries the sending time of the first data packet. Specifically, the broadcast/multicast service center 17 may use the sending time information of the first data packet as original data, and perform AP-layer processing on the original data. An AP-layer data packet obtained through processing is sent to the converged communication platform 18. For a description of obtaining, by the broadcast/multicast service center 17, the AP-layer data packet including the sending time information of the first data packet, refer to the embodiment shown in FIG. 4B-1 and FIG. 4B-2. Details are not described herein again.

S1805: The broadcast/multicast service center 17 sends the broadcast/multicast time response to the converged communication platform 18.

S1806: The converged communication platform 18 sends the broadcast/multicast time response to the ground center station 19.

After receiving the broadcast/multicast time response, the converged communication platform 18 relays the broadcast/multicast time response to the ground center station 19.

S1807: The ground center station 19 sends the broadcast/multicast time response to the terminal 100.

Specifically, after receiving the data packet that is sent by the converged communication platform 18 and that includes the sending time information of the first data packet, the ground center station 19 may obtain outbound data based on the data packet, and send the outbound data to the terminal 100. For a description of obtaining the outbound data by the terminal 100, refer to the embodiment shown in FIG. 4B-1 and FIG. 4B-2 and S1705. Details are not described herein again.

It is to be noted that the ground center station 19 may send the sending time information of the first data packet to the terminal 100 as broadcast/multicast data. The broadcast/multicast time response includes a broadcast/multicast ID field, and the broadcast/multicast ID field indicates a broadcast/multicast source. In this case, another terminal other than the terminal 100 can also receive the time information. Alternatively, the ground center station 19 may send the sending time information of the first data packet to the terminal 100 as unicast data. The broadcast/multicast time response includes a user ID field, and the user ID field indicates the terminal 100.

S1808: The terminal 100 determines sending time of the first data packet based on the broadcast/multicast time response.

After the terminal 100 receives a data packet sent by the satellite network device 200, when determining, at the AP layer based on the broadcast/multicast time response indication field, that the data packet includes the sending time of the first data packet, the terminal 100 may obtain the sending time of the first data packet at the AP layer.

S1809: The terminal 100 displays the sending time of the first data packet.

The terminal 100 may display the obtained sending time of the first data packet.

S1810: The converged communication platform 18 or the broadcast/multicast service center 17 sends the first data packet to the terminal 100 at time indicated by the sending time information.

Specifically, for a detailed description of sending, by the converged communication platform 18 or the broadcast/multicast service center 17, the first data packet to the terminal 100 at the time indicated by the sending time information, refer to the foregoing embodiment. Details are not described herein again.

S1811: The terminal 100 receives the first data packet at the sending time.

The terminal 100 receives the first data packet at the time indicated by the broadcast/multicast time response. Specifically, for a description of receiving the first data packet by the terminal 100, refer to the foregoing embodiment. Details are not described herein again.

In a possible implementation, the terminal 100 may receive input by the user for a query control, and send the broadcast/multicast time request to the converged communication platform 18 or the broadcast/multicast service center 17 in response to the input. After receiving the broadcast/multicast time request, the converged communication platform 18 or the broadcast/multicast service center 17 may send the broadcast/multicast time response to the terminal 100. After receiving the broadcast/multicast time response, the terminal 100 may display the sending time of the first data packet.

The following describes diagrams of a group of interfaces according to an embodiment of this application.

For example, the terminal 100 may receive input by the user for the communication application icon 1403, and display, in response to the input, the communication application interface 1471 shown in FIG. 19A. The communication application interface 1471 may include, but is not limited to, a query control 1474. The query control 1474 may be configured to trigger the terminal 100 to send a broadcast/multicast time request to the converged communication platform 24 or the broadcast/multicast service center 17. The communication application interface 1471 may further include a broadcast/multicast time bar 1473 and a broadcast source option 1472. For a detailed description of sending, by the terminal 100, the broadcast/multicast time request to the converged communication platform 24 or the broadcast/multicast service center 17, refer to the embodiments shown in FIG. 17 and FIG. 18. For a specific description of the communication application interface 1471, refer to the embodiment shown in FIG. 12B. Details are not described herein again. Herein, the current time displayed by the terminal 100 is 08:10, and the next broadcast time displayed in the broadcast/multicast time bar 1473 of the terminal 100 is: "08:20".

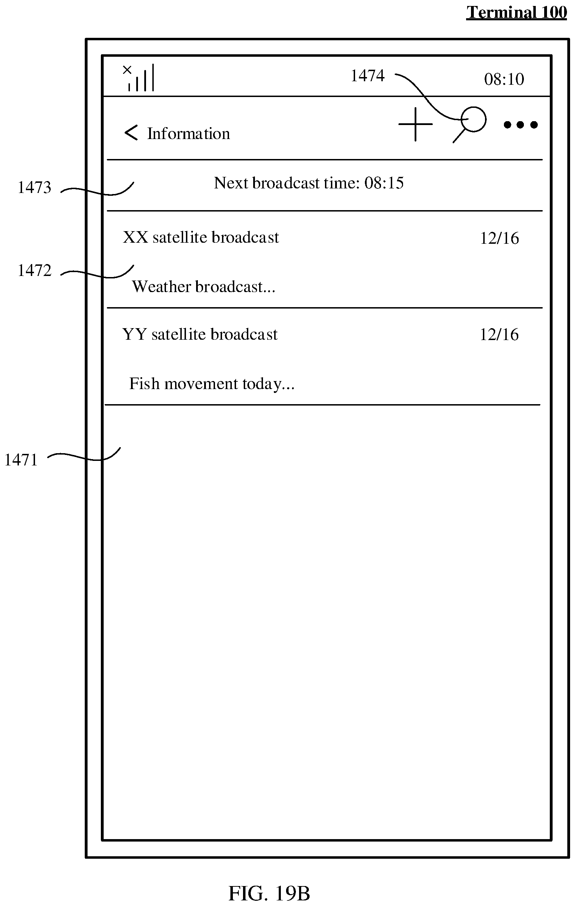

The terminal 100 may receive input by the user for the query control 1474, and display, in response to the input, a broadcast message interface 1471 shown in FIG. 19B.

As shown in FIG. 19B, after receiving a broadcast/multicast time response sent by the converged communication platform 24 or the broadcast/multicast service center 17, the terminal 100 may display an updated broadcast/multicast time bar 1473. Content displayed in the broadcast/multicast time bar 1473 is updated next broadcast time. Herein, the content displayed in the broadcast/multicast time bar 1473 may be "next broadcast time: 08:15". In this case, the terminal 100 can prompt, by displaying next broadcast time, the user to receive a broadcast data packet.

Then, the terminal 100 may receive, at sending time of a next broadcast data packet indicated by the broadcast/multicast time bar 1473, the broadcast data packet sent by the converged communication platform 24 or the broadcast/multicast service center 17, and parse the broadcast data packet to obtain broadcast data. Specifically, for detailed descriptions of sending the broadcast data packet by the converged communication platform 24 or the broadcast/multicast service center 17 and receiving and parsing the broadcast data packet by the terminal 100, refer to the foregoing embodiments. Details are not described herein again.

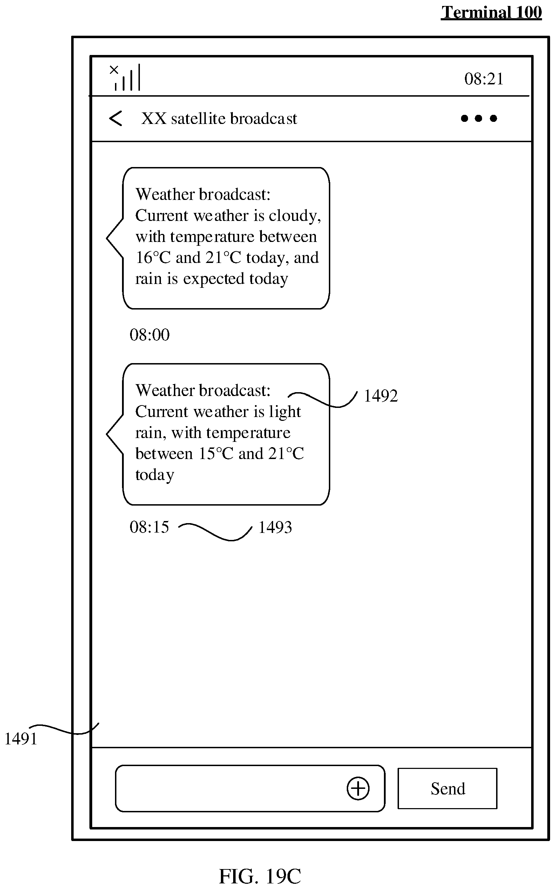

Then, after receiving input by the user for the broadcast source option 1422, the terminal 100 may display, in response to the input, a broadcast details interface 1491 shown in FIG. 19C.

As shown in FIG. 19C, after obtaining the broadcast data through parsing, the terminal 100 may display a broadcast message box 1492 and reception time information 1493. The broadcast message box 1492 may be configured to display the broadcast data received by the terminal 100. The reception time information 1493 may indicate reception time of the broadcast data displayed in the broadcast message box 1492. Herein, a value of the reception time information 1493 is: "08:15".

It is to be noted that the terminal 100 may display the sending time of the first data packet in a form of the broadcast/multicast time bar, or the terminal 100 may display the sending time of the first data packet in a form of a pop-up window, a short message, or the like. This is not limited in this application.

In a possible implementation, the terminal 100 displays sending time of a next broadcast/multicast data packet, that is, time of receiving the next broadcast/multicast data packet, only after receiving input by the user for the query control (for example, the query control 1474 shown in FIG. 19A). The time may be obtained through negotiation between the terminal 100 and the satellite network device 200, or the time may be determined by the satellite network device 200 based on broadcast/multicast time information sent by another server (for example, the server 15), a data volume of received broadcast/multicast data, and the like.

In a possible implementation, after parsing the sent first data packet, the terminal 100 may generate receipt information based on a result of parsing the first data packet, and send the receipt information to the converged communication platform 24 or the broadcast/multicast service center 17. In this case, the converged communication platform 24 or the broadcast/multicast service center 17 can determine, based on the receipt information, the result of parsing the first data packet by the terminal 100.

Further, when the receipt information indicates that the terminal 100 fails to parse the first data packet, the converged communication platform 24 or the broadcast/multicast service center 17 may resend the first data packet to at least one terminal.

In some embodiments, the terminal 100 may generate receipt information. The receipt information includes frame header information. The frame header information may include, but is not limited to, a frame type indication field. The frame type indication field may identify the receipt information at the SLC layer. After receiving the data packet sent by the terminal 100, the ground center station 19 may determine, at the SLC layer based on the frame type indication field, that the data packet includes the receipt information. The ground center station 19 may send the receipt information to the converged communication platform 24 or the broadcast/multicast service center 17. After receiving the receipt information, the converged communication platform 24 or the broadcast/multicast service center 17 may determine, based on the receipt information, a result of parsing the first data packet by the terminal 100.

As shown in FIG. 20, that the terminal 100 sends receipt information includes the following steps.

S2001: The converged communication platform 24 or the broadcast/multicast service center 17 sends a first data packet to the ground center station 19.

S2002: The ground center station 19 sends a second data packet to the terminal 100.

S2003: The terminal 100 obtains the first data packet based on the second data packet.

For detailed descriptions of step S2001 to step S2003, refer to the foregoing embodiment. Details are not described herein again.

S2004: The terminal 100 parses the first data packet, and generates receipt information based on a result of parsing the first data packet.

For example, the receipt information may include an error code. A length of the error code may be 1 bit. When a value of the error code is 0, it may be indicated that the terminal 100 fails to parse a broadcast/multicast data packet. When a value of the error code is 1, it may be indicated that the terminal 100 successfully parses the broadcast/multicast data packet. It is to be noted that the values and meanings of the error code are merely examples.

In another example, a length of the error code may be 4 bits. When a value of the error code is 0000, it may be indicated that the terminal 100 successfully parses a broadcast/multicast data packet; when a value of the error code is 0001, it may be indicated that the terminal 100 fails to parse the broadcast/multicast data packet, and a reason for the failure is a decryption error; when a value of the error code is 0010, it may be indicated that the terminal 100 fails to parse the broadcast/multicast data packet, and a reason for the failure is a decoding error; and so on.

It is to be noted that, when the terminal 100 cannot obtain compressed data through decryption based on encrypted data, the terminal 100 may determine that a result of parsing the broadcast/multicast data packet is a decryption error. When the terminal 100 cannot obtain original data through decompression or decoding based on compressed data, the terminal 100 may determine that a result of parsing the broadcast/multicast data packet is a decoding error. When the terminal 100 successfully parses the broadcast/multicast data packet to obtain original data, the terminal 100 determines that a result of parsing the broadcast/multicast data packet is successful parsing.

The receipt information includes a frame type indication field, and the frame type indication field may indicate that the receipt information includes a result of parsing the first data packet by the terminal 100. For example, the frame type field may identify a type of the user frame. For example, a length of the frame type field may be 2 bits. When a value of the frame type field is 00, it may be identified that the current user frame is a general data frame. When a value of the frame type field is 01, it may be identified that the current user frame is an ACK frame. When a value of the frame type field is 10, it may be identified that the current user frame is a receipt frame. When a value of the frame type field is 11, it may be identified that the current user frame is a broadcast/multicast receipt frame. The broadcast/multicast receipt frame may be for transmitting the result of parsing the broadcast/multicast data packet by the terminal 100.

Alternatively, the frame type indication field indicates that the receipt information includes a result of parsing, by the terminal 100, a data packet sent by the satellite network device 200. For example, the frame type field may identify a type of the user frame. For example, a length of the frame type field may be 2 bits. When a value of the frame type field is 00, it may be identified that the current user frame is a general data frame. When a value of the frame type field is 01, it may be identified that the current user frame is an ACK frame. When a value of the frame type field is 10, it may be identified that the current user frame is a receipt frame. The receipt frame may be for transmitting the result of parsing the data packet by the terminal 100. To determine, at the SLC layer, whether the receipt information indicates a parsing result of a broadcast/multicast data packet or a parsing result of a unicast data packet, the receipt frame further includes a broadcast/multicast indication field. The broadcast/multicast indication field may identify that the receipt frame is a receipt frame of the broadcast/multicast data packet or a receipt frame of the unicast data packet.

Optionally, the receipt information may further include an identifier of the terminal 100. For example, the receipt information may include a user ID field, and the user ID field may identify the terminal 100. For example, a value of the user ID field may be a phone number of the terminal 100. The user ID field may be located in packet header information of the AP layer, or in frame header information of the SLC layer. In this case, the converged communication platform 24 or the broadcast/multicast service center 17 can record information of the terminal 100 that is not correctly received. In addition, if retransmission is supported, only the first data packet may be retransmitted to the terminal 100, thereby reducing retransmission overheads.

S2005: The terminal 100 sends the receipt information to the ground center station 19.

The terminal 100 sends the receipt information to the ground center station 19 by using the satellite 21.

S2006: The ground center station 19 determines that the receipt information is the receipt information of the first data packet.

The ground center station 19 may determine, based on the frame type indication field, that the receipt information is the receipt information of the first data packet. Alternatively, the ground center station 19 may determine, based on the frame type indication field and the broadcast/multicast indication field, that the receipt information is the receipt information of the first data packet.

S2007: The ground center station 19 sends the receipt information to the converged communication platform 24 or the broadcast/multicast service center 17.

The ground center station 19 may send the receipt information to the converged communication platform 24 or the broadcast/multicast service center 17.

Optionally, when the frame header information of the receipt information includes the user ID field, the ground center station 19 may send the user ID and the receipt information together to the converged communication platform 24 or the broadcast/multicast service center 17.

In a possible implementation, when the ground center station 19 obtains, based on the frame type field in the frame header information, that the user frame includes the result of parsing the first data packet by the terminal 100, the ground center station 19 may upload, at the SLC layer, the error code in the user frame to the converged communication platform 24 or the broadcast/multicast service center 17 through an inter-layer interface. The converged communication platform 24 or the broadcast/multicast service center 17 may obtain, based on the error code in the user information, the result of parsing the first data packet by the terminal 100.

Further, the converged communication platform 24 or the broadcast/multicast service center 17 may perform corresponding operations for different results. For example, after receiving the receipt information, the converged communication platform 24 or the broadcast/multicast service center 17 may further perform a corresponding operation based on the error code in the receipt information. If the error code indicates that the terminal 100 successfully parses the broadcast/multicast data packet, the converged communication platform 24 or the broadcast/multicast service center 17 may end this sending operation. If the error code indicates that the terminal 100 fails to parse the broadcast/multicast data packet and a reason for the failure is a decryption error, when a broadcast/multicast source is a broadcast source, the converged communication platform 24 or the broadcast/multicast service center 17 may determine that a reason for the decryption error of the terminal 100 is that key information of the converged communication platform 24 or the broadcast/multicast service center 17 is different from key information of the terminal 100, and after receiving the receipt information, the converged communication platform 24 or the broadcast/multicast service center 17 may negotiate with the terminal 100 to update key information (including a key and a code book); or when a broadcast/multicast source is a multicast source, after receiving the receipt information, the converged communication platform 24 or the broadcast/multicast service center 17 may negotiate with the multicast source to obtain key information (including a key and a code book). After updating the key information, the converged communication platform 24 or the broadcast/multicast service center 17 may encrypt the broadcast/multicast data by using the updated key to obtain a broadcast/multicast data packet, and resend the broadcast/multicast data packet to the terminal 100.

In some other embodiments, the terminal 100 may generate receipt information. The receipt information includes packet header information. The packet header information may include, but is not limited to, a broadcast/multicast receipt indication field. The broadcast/multicast receipt indication field may identify the receipt information at the AP layer. After receiving the data packet sent by the terminal 100, the converged communication platform 24 may determine, at the AP layer, that the data packet sent by the terminal 100 includes the receipt information. The converged communication platform 24 may determine, based on the receipt information, a result of parsing the first data packet by the terminal 100.

In some other embodiments, the terminal 100 may generate receipt information. The receipt information includes packet header information. The packet header information may include, but is not limited to, a broadcast/multicast receipt indication field. The broadcast/multicast receipt indication field may identify the receipt information at the AP layer. After receiving the data packet sent by the terminal 100, the converged communication platform 18 may determine, at the AP layer, that the data packet sent by the terminal 100 includes the receipt information. The converged communication platform 18 may send the receipt information to the broadcast/multicast service center 17, and the broadcast/multicast service center 17 may determine, based on the receipt information, a result of parsing the first data packet by the terminal 100.

As shown in FIG. 21, that the terminal 100 sends receipt information includes the following steps.

S2101: The broadcast/multicast service center 17 sends a first data packet to the ground center station 19.

S2102: The ground center station 19 sends a second data packet to the terminal 100.

S2103: The terminal 100 obtains the first data packet based on the second data packet.

For detailed descriptions of step S2101 to step S2103, refer to the foregoing embodiment. Details are not described herein again.

S2104: The terminal 100 parses the first data packet, and generates receipt information based on a result of parsing the first data packet.

The receipt information may include an error code. For a detailed description of the error code, refer to step S2004. Details are not described herein again.

The receipt information includes a broadcast/multicast receipt indication field. The broadcast/multicast receipt indication field may indicate whether the data packet includes a result of parsing the first data packet by the terminal 100.

For example, a length of the broadcast/multicast receipt indication field may be 1 bit. When a value of the broadcast/multicast receipt indication field is 0, it indicates that the data packet does not include the result of parsing the first data packet by the terminal 100. When a value of the broadcast/multicast receipt indication field is 1, it may be indicated that the data packet includes the result of parsing the first data packet by the terminal 100.

Optionally, the receipt information may further include an identifier of the terminal 100. For example, the receipt information may include a user ID field, and the user ID field may identify the terminal 100. For example, a value of the user ID field may be a phone number of the terminal 100. The user ID field may be located in packet header information of the AP layer, or in frame header information of the SLC layer. In this case, the converged communication platform 24 or the broadcast/multicast service center 17 can record information of the terminal 100 that is not correctly received. In addition, if retransmission is supported, only the first data packet may be retransmitted to the terminal 100, thereby reducing retransmission overheads.

S2105: The terminal 100 sends the receipt information to the ground center station 19.

The terminal 100 sends the receipt information to the ground center station 19 by using the satellite 21.

S2106: The ground center station 19 sends the receipt information to the converged communication platform 18.

Specifically, after receiving the data packet sent by the terminal 100, the ground center station 19 processes the data packet at the PHY layer, the SLC layer, and the MDCP layer, and then uploads the data packet to the converged communication platform 18.

Optionally, when the frame header information of the receipt information includes the user ID field, the ground center station 19 may send the user ID and the receipt information together to the converged communication platform 18.

S2107: The converged communication platform 18 determines that the receipt information is the receipt information of the first data packet.

The converged communication platform 18 may determine, based on the value of the broadcast/multicast receipt indication field, whether the receipt information includes the result of parsing the first data packet. When determining, based on the value of the broadcast/multicast receipt indication field, that the receipt information is the receipt information of the first data packet, the converged communication platform 18 sends the receipt information to the broadcast/multicast service center 17.

S2108: The converged communication platform 18 sends the receipt information to the broadcast/multicast service center 17.

The converged communication platform 18 may send the receipt information to the broadcast/multicast service center 17.

Optionally, when receiving the user ID sent by the ground center station 19, the converged communication platform 18 may send the user ID and the receipt information together to the broadcast/multicast service center 17.

Further, the converged communication platform 18 or the broadcast/multicast service center 17 may perform a corresponding operation for the result of parsing the first data packet by the terminal 100. For details, refer to the embodiment shown in FIG. 20. Details are not described herein again.

The following describes a terminal 100 according to an embodiment of this application.

The terminal 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an on-board device, a smart home device, and/or a smart city device. A specific type of the terminal is not particularly limited in embodiments of this application.

FIG. 22 is a diagram of a hardware structure according to an embodiment of this application.

The following specifically describes this embodiment by using the terminal 100 as an example. It should be understood that the terminal 100 shown in FIG. 22 is merely an example. In addition, the terminal 100 may have more or fewer components than those shown in FIG. 22, or may combine two or more components, or may have different component configurations. Various components shown in FIG. 22 may be implemented in hardware, software, or a combination of hardware and software that includes one or more signal processing and/or application-specific integrated circuits.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100 may be configured to cover one or more communication bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a solution to wireless communication including 2G/3G/4G/5G or the like that is applied to the terminal 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 and at least some modules in the processor 110 may be disposed in a same device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal processed by the baseband processor is transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device with the mobile communication module 150 or another functional module.

The wireless communication module 160 may provide a solution to wireless communication that is applied to the terminal 100 and that includes a wireless local area network (for example, a wireless fidelity (wireless fidelity, Wi-Fi) network), Bluetooth (Bluetooth, BT), a global navigation satellite system (global navigation satellite system, GNSS), a satellite communication module, frequency modulation (frequency modulation, FM), a near-field wireless communication technology (near field communication, NFC), an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave through the antenna 2 for radiation.

The satellite communication module may be configured to communicate with a satellite network device. In a satellite communication system, the satellite communication module may communicate with the satellite network device 200, and the satellite communication module may support data packet transmission with the satellite network device 200. For example, when the satellite communication system is a BeiDou communication system, the satellite network device 200 is a BeiDou network device, the satellite communication module may communicate with the BeiDou network device, and the satellite communication module may support BeiDou short message (that is, a data packet in the BeiDou communication system) transmission with the BeiDou network device.

In some embodiments, in the terminal 100, the antenna 1 and the mobile communication module 150 are coupled, and the antenna 2 and the wireless communication module 160 are coupled, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100 implements a display function by using the GPU, the display 194, the application processor, and the like. The GPU is a microprocessor for image processing, and is connected to the display 194 and the application processor. The GPU is configured to perform mathematical and geometric calculations, and is configured for graphics rendering. The processor 110 may include one or more GPUs, which execute program instructions to generate or change display information.

The display 194 is configured to display an image, a video, and the like. The display 194 includes a display panel. In some embodiments, the terminal 100 may include one or N displays 194, where N is a positive integer greater than 1. The pressure sensor 180A is configured to sense a pressure signal and may convert the pressure signal into an electrical signal. In some embodiments, the pressure sensor 180A may be disposed on the display 194. The touch sensor 180K may also be referred to as a "touch panel". The touch sensor 180K is configured to detect a touch operation performed on or near the touch sensor 180K. The touch sensor may transfer the detected touch operation to the application processor to determine a type of a touch event. Visual output related to the touch operation may be provided by the display 194.

The SIM card interface 195 is configured to connect to a SIM card. The SIM card may be inserted into the SIM card interface 195 or pulled out of the SIM card interface 195, so that the SIM card can be in contact with or separated from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may also be compatible with different types of SIM cards. The SIM card interface 195 may also be compatible with an external storage card. The terminal 100 interacts with the network by using the SIM card, to implement a call function, a data communication function, and the like. In some embodiments, the terminal 100 uses an eSIM, that is, an embedded SIM card. The eSIM card may be embedded in the terminal 100, and cannot be separated from the terminal 100.

A person skilled in the art should be aware that in one or more of the foregoing examples, the functions described in this application may be implemented by using hardware, software, firmware, or any combination thereof. When the functions are implemented by using software, the functions may be stored in a computer-readable medium or transmitted as one or more instructions or code in a computer-readable medium. The computer-readable medium includes a computer-readable storage medium and a communication medium. The communication medium includes any medium that enables a computer program to be transmitted from one place to another. The storage medium may be any available medium accessible to a common or dedicated computer.

In conclusion, the embodiments described above are merely intended for describing the technical solutions of this application, not for limiting this application. Although this application is described in detail with reference to the foregoing embodiments, a person of ordinary skill in the art should understand that modifications can still be made to the technical solutions described in the foregoing embodiments or equivalent replacements can still be made to some technical features thereof, without departing from the scope of the technical solutions of embodiments of this application.

## Claims

1. A transmission method, comprising:
generating, by a first satellite network device, a first data packet; and
sending, by the first satellite network device, the first data packet to a second satellite network device within a specified time period, wherein the first data packet is for the second satellite network device to generate a second data packet and send the second data packet to at least one first terminal device, and the specified time period is obtained through negotiation between the first satellite network device and the at least one first terminal device, or the first satellite network device determines the specified time period based on broadcast/multicast time information sent by a first network device.

2. The method according to claim 1, wherein the method further comprises:
sending, by the first satellite network device to the second satellite network device, information that indicates the second satellite network device to send the first data packet to the at least one first terminal device in a broadcast manner; or
sending, by the first satellite network device to the second satellite network device, information that indicates the second satellite network device to send the first data packet to the at least one first terminal device in a multicast manner.

3. The method according to claim 1 or 2, wherein the method further comprises:
sending, by the first satellite network device to the second satellite network device, one or more pieces of information comprising an identifier of the first data packet, broadcast/multicast time information of the first data packet, and broadcast/multicast region information of the first data packet, wherein the identifier indicates a service type of the first data packet.

4. The method according to any one of claims 1 to 3, wherein the first data packet comprises information that indicates sending time of next M first data packets sent by the first satellite network device, wherein M is a positive integer.

5. The method according to any one of claims 1 to 4, wherein before the sending, by the first satellite network device, the first data packet to a second satellite network device, the method further comprises:
sending, by the first satellite network device, a first message to the first terminal device by using the second satellite network device, wherein the first message comprises time information that indicates sending time of the first data packet; or
sending, by the first satellite network device, the time information or the first message to a third satellite network device.

6. The method according to claim 5, wherein before the sending, by the first satellite network device, a first message to the first terminal device by using the second satellite network device, the method further comprises:
receiving, by the first satellite network device by using the second satellite network device, a second message sent by the first terminal device, wherein the second message indicates the first satellite network device to send the first message to the first terminal device.

7. The method according to claim 5, wherein before the sending, by the first satellite network device, the time information or the first message to a third satellite network device, the method further comprises:
receiving, by the first satellite network device, a time request or a second message sent by the third satellite network device, wherein the time request indicates the first satellite network device to send the time information to the third satellite network device, and the second message indicates the first satellite network device to send the first message to the first terminal device.

8. The method according to any one of claims 1 to 7, wherein after the sending, by the first satellite network device, the first data packet to a second satellite network device, the method further comprises:
receiving, by the first satellite network device, information that is sent by the second satellite network device and that indicates a reception status of the first data packet by the first terminal device.

9. The method according to any one of claims 1 to 8, wherein before the sending, by the first satellite network device, the first data packet to a second satellite network device, the method further comprises:
receiving, by the first satellite network device, content of the first data packet sent by the first network device; and
receiving, by the first satellite network device, one or more pieces of information that are sent by the first network device and that comprise the identifier, the broadcast/multicast time information, and the broadcast/multicast region information of the first data packet.

10. A transmission method, comprising:
receiving, by a second satellite network device, a first data packet sent by a first satellite network device;
generating, by the second satellite network device, a second data packet based on the first data packet; and
sending, by the second satellite network device, the second data packet to at least one first terminal device.

11. The method according to claim 10, wherein before the generating, by the second satellite network device, a second data packet based on the first data packet, the method further comprises:
receiving, by the second satellite network device, information that indicates the second satellite network device to generate the second data packet of a broadcast type based on the first data packet; or
receiving, by the second satellite network device, information that indicates the second satellite network device to generate the second data packet of a multicast type based on the first data packet.

12. The method according to claim 11, wherein the generating, by the second satellite network device, a second data packet based on the first data packet specifically comprises:
generating, by the second satellite network device, the second data packet based on the information that indicates the second satellite network device to generate the second data packet of the broadcast type based on the first data packet or the information that indicates the second satellite network device to generate the second data packet of the multicast type based on the first data packet.

13. The method according to claim 11 and 12, wherein the sending, by the second satellite network device, the second data packet to at least one first terminal device specifically comprises:
sending, by the second satellite network device, the second data packet to the at least one first terminal device through a first beam; or
sending, by the second satellite network device, the second data packet to the at least one first terminal device, wherein the second data packet comprises a first version number, and the first version number indicates that the second data packet is a broadcast data packet or a multicast data packet; or
sending, by the second satellite network device, the second data packet to the at least one first terminal device, wherein the second data packet comprises first information and a second version number, the first information indicates that the second data packet is a broadcast data packet and/or a multicast data packet, and the second version number indicates the second satellite network device to generate a protocol version of the second data packet.

14. The method according to claim 13, wherein when the first information indicates that the second data packet is a broadcast data packet, the second data packet further comprises information that indicates a broadcast source of the second data packet; or when the first information indicates that the second data packet is a multicast data packet, the second data packet further comprises information that indicates a multicast source of the second data packet.

15. The method according to claim 13 or 14, wherein the method further comprises:
receiving, by the second satellite network device, one or more pieces of information comprising an identifier of the first data packet, broadcast/multicast time information of the first data packet, and broadcast/multicast region information of the first data packet, wherein the identifier indicates a service type of the first data packet; and
determining, by the second satellite network device, the first beam, or the first version number, or the first information based on the information; or
receiving, by the second satellite network device, the information that indicates the second satellite network device to generate the second data packet of the broadcast type based on the first data packet or the information that indicates the second satellite network device to generate the second data packet of the multicast type based on the first data packet; and
determining, by the second satellite network device, the first beam, or the first version number, or the first information based on the information that indicates the second satellite network device to generate the second data packet of the broadcast type based on the first data packet or the information that indicates the second satellite network device to generate the second data packet of the multicast type based on the first data packet.

16. The method according to any one of claims 11 to 15, wherein before the receiving, by a second satellite network device, a first data packet sent by a first satellite network device, the method further comprises:
receiving, by the second satellite network device, a first message sent by the first satellite network device, or receiving, by the second satellite network device, the first message sent by a third satellite network device, wherein the first message comprises time information that indicates sending time of the first data packet; and
sending, by the second satellite network device, the first message to the first terminal device.

17. The method according to claim 16, wherein before the receiving, by the second satellite network device, a first message sent by the first satellite network device, or receiving, by the second satellite network device, the first message sent by a third satellite network device, the method further comprises:
receiving, by the second satellite network device, a second message sent by the first terminal device; and
sending, by the second satellite network device, the second message to the first satellite network device, or sending, by the second satellite network device, the second message to the third satellite network device, wherein the second message is for obtaining the first message.

18. The method according to any one of claims 11 to 17, wherein after the sending, by the second satellite network device, the second data packet to at least one first terminal device, the method further comprises:
receiving, by the second satellite network device, information that is sent by the first terminal device and that indicates a reception status of the first data packet by the first terminal device; and
sending, by the second satellite network device to the first satellite network device, the information that indicates the reception status of the first data packet by the first terminal device.

19. A transmission method, comprising:
receiving, by a first terminal device within a specified time period, a second data packet sent by a second satellite network device;
determining, by the first terminal device, that the second data packet is a broadcast data packet or a multicast data packet; and
obtaining, by the first terminal device, a first data packet based on the second data packet, wherein the first data packet is a data packet sent by a first satellite network device to the second satellite network device, and the specified time period is obtained through negotiation between the first satellite network device and at least one first terminal device, or the first satellite network device determines the specified time period based on a received second message.

20. The method according to claim 19, wherein the determining, by the first terminal device, that the second data packet is a broadcast data packet or a multicast data packet specifically comprises:
when the second data packet comprises a first version number, determining, by the first terminal device based on the first version number, that the second data packet is a broadcast data packet or a multicast data packet; or
when the second data packet comprises first information, determining, by the first terminal device based on the first information, that the second data packet is a broadcast data packet or a multicast data packet; or
determining, by the first terminal device based on a first beam through which the second data packet is received, that the second data packet is a broadcast data packet or a multicast data packet.

21. The method according to claim 20, wherein when the first information indicates that the second data packet is a broadcast data packet, the second data packet further comprises information that indicates a broadcast source of the second data packet; or when the first information indicates that the second data packet is a multicast data packet, the second data packet further comprises information that indicates a multicast source of the second data packet.

22. The method according to any one of claims 19 to 21, wherein the first data packet comprises information that indicates reception time of next M first data packets sent by the first satellite network device, wherein M is a positive integer.

23. The method according to any one of claims 19 to 22, wherein before the receiving, by a first terminal device, a second data packet sent by a second satellite network device, the method further comprises:
sending, by the first terminal device, the second message to the second satellite network device, wherein the second message indicates the first satellite network device to send sending time information of the first data packet to the first terminal device.

24. The method according to claim 23, wherein after the sending, by the first terminal device, the second message to the second satellite network device, the method further comprises:
receiving, by the first terminal device, a first message, wherein the first message comprises the sending time information that indicates time at which the first satellite network device sends the first data packet.

25. The method according to claim 23 or 24, wherein the sending, by the first terminal device, the second message to the second satellite network device specifically comprises:
receiving, by the first terminal device, input by a user for querying sending time of a next first data packet; and
sending, by the first terminal device, the second message to the second satellite network device in response to the input.

26. The method according to claim 24 or 25, wherein after the receiving, by the first terminal device, a first message, the method further comprises:
displaying, by the first terminal device, the sending time of the first data packet.

27. The method according to any one of claims 19 to 22, wherein before the first terminal device receives the first data packet sent by the second satellite network device, the method further comprises:
receiving, by the first terminal device, input by a user for querying sending time of a next first data packet; and
displaying, by the first terminal device in response to the input, the sending time that indicates when the first satellite network device sends the first data packet, wherein the sending time is obtained through negotiation between the first satellite network device and the at least one first terminal device.

28. A transmission method, comprising:
receiving, by a third satellite network device, a first message sent by a first satellite network device; or
receiving, by the third satellite network device, first time information sent by the first satellite network device, and generating the first message based on the first time information; and
sending, by the third satellite network device, the first message to a first terminal device, wherein the first message comprises the first time information, and the first time information indicates sending time of a first data packet.

29. The method according to claim 28, wherein before the receiving, by a third satellite network device, a first message sent by a first satellite network device, the method further comprises:
receiving, by the third satellite network device, a second message sent by a second satellite network device; and
sending, by the third satellite network device, the second message to the first satellite network device, wherein the second message indicates the first satellite network device to send the first message to the third satellite network device.

30. The method according to claim 28, wherein before the sending, by the third satellite network device, the first message to a first terminal device, the method further comprises:
receiving, by the third satellite network device, a second message sent by a second satellite network device, wherein the second message indicates the third satellite network device to generate the first message and send the first message to the second satellite network device.

31. The method according to claim 30, wherein before the receiving, by the third satellite network device, first time information sent by the first satellite network device, the method further comprises:
sending, by the third satellite network device, a first time information request to the first satellite network device, wherein the first time information request indicates the first satellite network device to send the first time information to the third satellite network device.

32. A transmission method, comprising:
generating, by a first device, a second data packet; and
sending, by the first device, the second data packet to at least one first terminal device within a specified time period, wherein the specified time period is obtained through negotiation between a first satellite network device and the at least one first terminal device, or the first satellite network device determines the specified time period based on broadcast/multicast time information sent by a first network device.

33. The method according to claim 32, wherein the method further comprises:
receiving, by the first device, content of the second data packet sent by the first network device; and
receiving, by the first device, one or more pieces of information that are sent by the first network device and that comprise an identifier, broadcast/multicast time information, and broadcast/multicast region information of the second data packet.

34. The method according to claim 32 or 33, wherein the sending, by the first device, the second data packet to at least one first terminal device within a specified time period specifically comprises:
sending, by the first device, the second data packet to the at least one first terminal device through a first beam; or
sending, by the first device, the second data packet to the at least one first terminal device, wherein the second data packet comprises a first version number, and the first version number indicates that the second data packet is a broadcast data packet or a multicast data packet; or
sending, by the first device, the second data packet to the at least one first terminal device, wherein the second data packet comprises first information and a second version number, the first information indicates that the second data packet is a broadcast data packet and/or a multicast data packet, and the second version number indicates a second satellite network device to generate a protocol version of the second data packet.

35. The method according to claim 34, wherein when the first information indicates that the second data packet is a broadcast data packet, the second data packet further comprises information that indicates a broadcast source of the second data packet; or when the first information indicates that the second data packet is a multicast data packet, the second data packet further comprises information that indicates a multicast source of the second data packet.

36. The method according to claim 34 or 35, wherein the method further comprises:
determining, by the first device, the first beam, or the first version number, or the first information based on the identifier of the second data packet.

37. The method according to any one of claims 32 to 36, wherein before the sending, by the first device, the second data packet to at least one first terminal device within a specified time period, the method further comprises:
sending, by the first device, a first message to the first terminal device, wherein the first message comprises time information that indicates sending time of the second data packet.

38. The method according to claim 37, wherein before the sending, by the first device, a first message to the first terminal device, the method further comprises:
receiving, by the first device, a second message sent by the first terminal device, wherein the second message indicates the first device to send the first message to the first terminal device.

39. The method according to any one of claims 32 to 38, wherein after the sending, by the first device, the second data packet to at least one first terminal device, the method further comprises:
receiving, by the first device, information that is sent by the first terminal device and that indicates a reception status of the second data packet by the first terminal device.

40. The method according to any one of claims 32 to 39, wherein the generating, by a first device, a second data packet specifically comprises:
generating, by the first device, a first data packet at an application AP layer;
delivering, by the first device, the first data packet from the AP layer to a message data convergence protocol MDCP layer and/or a satellite link control SLC layer; and
processing, by the first device, the first data packet at the MDCP layer and/or the SLC layer into the second data packet.

41. The method according to any one of claims 32 to 40, wherein the second data packet comprises time that indicates when the first device sends a next second data packet.

42. A transmission method, comprising:
receiving, by a first terminal device, a second data packet from a first device within a specified time period;
determining, by the first terminal device, that the second data packet is a broadcast data packet or a multicast data packet; and
obtaining, by the first terminal device, a first data packet based on the second data packet, wherein the specified time period is obtained through negotiation between a first satellite network device and at least one first terminal device, or the first terminal device determines the specified time period based on a received second message.

43. The method according to claim 42, wherein the determining, by the first terminal device, that the second data packet is a broadcast data packet or a multicast data packet specifically comprises:
when the second data packet comprises a first version number, determining, by the first terminal device based on the first version number, that the second data packet is a broadcast data packet or a multicast data packet; or
when the second data packet comprises first information, determining, by the first terminal device based on the first information, that the second data packet is a broadcast data packet or a multicast data packet; or
determining, by the first terminal device based on a first beam through which the second data packet is received, that the second data packet is a broadcast data packet or a multicast data packet.

44. The method according to claim 43, wherein when the first information indicates that the second data packet is a broadcast data packet, the second data packet further comprises information that indicates a broadcast source of the second data packet; or when the first information indicates that the second data packet is a multicast data packet, the second data packet further comprises information that indicates a multicast source of the second data packet.

45. The method according to any one of claims 42 to 44, wherein the first data packet comprises information that indicates reception time for the first terminal device to receive a next first data packet sent by the first satellite network device.

46. The method according to any one of claims 42 to 45, wherein before the receiving, by a first terminal device, a second data packet from a first device within a specified time period, the method further comprises:
sending, by the first terminal device, the second message to the first device, wherein the second message indicates the first device to send sending time information of the first data packet to the first terminal device.

47. The method according to claim 46, wherein after the sending, by the first terminal device, the second message to the first device, the method further comprises:
receiving, by the first terminal device, a first message sent by the first device, wherein the first message comprises time information that indicates sending time of the first data packet.

48. The method according to claim 46 or 47, wherein the sending, by the first terminal device, the second message to the first device specifically comprises:
receiving, by the first terminal device, input by a user for querying sending time of a next second data packet; and
sending, by the first terminal device, the second message to the first device in response to the input.

49. The method according to claim 47 or 48, wherein after the receiving, by the first terminal device, a first message, the method further comprises:
displaying, by the first terminal device, the sending time of the first data packet.

50. The method according to any one of claims 42 to 45, wherein before the first terminal device receives the second data packet sent by the first device, the method further comprises:
receiving, by the first terminal device, input by a user for querying sending time of a next second data packet; and
displaying, by the first terminal device in response to the input, time that indicates when the first terminal device receives the second data packet, wherein the sending time is obtained through negotiation between the first device and the at least one first terminal device.

51. A communication apparatus, comprising one or more processors and one or more memories, wherein the one or more memories are configured to store computer program code, the computer program code comprises computer instructions, and when the one or more processors execute the computer instructions, the communication apparatus performs the method according to any one of claims 1 to 50.

52. A computer-readable storage medium, wherein the computer-readable storage medium stores instructions, and when the instructions are run on a computer, the computer performs the method according to any one of claims 1 to 50.
